# EUROPEAN PATENT SPECIFICATION

(11) **EP 4 136 140 B1**
(45) Date of publication and mention of the grant of the patent: **02.12.2026**
(21) Application number: 21721805.6
(22) Date of filing: 14.04.2021
(51) Int. Cl.: C08J 3/20, H01M 10/613, H01M 10/647, H01M 10/6554, H01M 10/653

(54) **COMPOSITIONS CONTAINING THERMALLY CONDUCTIVE FILLERS**
ZUSAMMENSETZUNGEN MIT WÄRMELEITFÄHIGEN FÜLLSTOFFEN
COMPOSITIONS CONTENANT DES CHARGES THERMOCONDUCTRICES

(30) Priority: 15.04.2020 US 202063010298 P; 20.01.2021 WO PCT/US2021/014073
(43) Date of publication of application: 22.02.2023
(60) Divisional application: 26213382.0
(73) Proprietor: PPG Industries Ohio, Inc., Cleveland, OH 44111 (US)
(72) Inventor: MA, Liang, Allison Park, Pennsylvania 15101 (US); POLLUM, Marvin, M, Jr., Pittsburgh, Pennsylvania 15212 (US); NAKAJIMA, Masayuki, Wexford, Pennsylvania 15090 (US); WILLIS, Daniel, P., North Versailles, Pennsylvania 15173 (US); HSU, Lorraine, Allison Park, Pennsylvania 15101 (US); CONDIE, Allison, G., Valencia, Pennsylvania 16059 (US); FRENCH, Maria, S., Maidenhead Berkshire SL6 6SS (GB); ZHOU, Hongying, Allison Park, Pennsylvania 15101 (US); ZHENG, Qi, Allison Park, Pennsylvania 15101 (US); LI, Hong, Mars, Pennsylvania 16046 (US); MUNRO, Calum, H., GIbsonia, Pennsylvania 15044 (US)
(74) Representative: f & e patent
(86) International application number: PCT/US2021/027303
(87) International publication number: WO 2021/211722

(56) References cited:
- EP-A2- 2 402 395
- US-A1- 2007 241 303
- US-A1- 2011 027 565
- US-A1- 2015 125 646
- US-A1- 2015 140 411
- DATABASE WPI Week 200857, 2008 Derwent World Patents Index; AN 2008-J77153, XP002802731

## Description

### FIELD OF THE INVENTION

The present invention relates to compositions containing a thermally conductive filler component, for example sealants, adhesives, putties, and coating compositions.

### BACKGROUND OF THE INVENTION

Coating compositions, including sealants and adhesives, are utilized in a wide variety of applications to treat a variety of substrates or to bond together two or more substrate materials.

Curable compositions and polymer materials containing thermally conductive fillers are described, for instance, in US 2015/0125646 A1, EP 2 402 395 A2,
US 2007/0241303 A1, JP 2008 169265 A, US 2015/0140411 A1, US 2011/0027565 A1, and WO 2020/077333 A1, the latter being a document according to Art. (54(3) EPC.

The present invention is directed toward one-component and two-component compositions that contain thermally conductive fillers.

### SUMMARY OF THE INVENTION

The present invention is directed to a moisture-curable composition comprising: a hydrolysable component; and a thermally conductive filler package comprising thermally conductive, electrically insulative filler particles, the thermally conductive, electrically insulative filler particles having a thermal conductivity of at least 5 W/m·K (measured according to ASTM D7984) and a volume resistivity of at least 1 Ω·m (measured according to ASTM D257), wherein the hydrolysable component comprises a silane-containing polymer, a silyl-containing polymer, an imine, or combinations thereof, wherein the silane-containing polymer comprises a polythioether, a polyester, a polyether, a polyisocyanate, a poly(meth)acrylate, a polyolefin, a polyurea, a polyurethane, or combinations thereof, and wherein the thermally conductive filler package is present in an amount of 10 % by volume percent to 98% by volume based on total volume of the composition, wherein the hydrolysable component is substantially free of a silicone-containing species having the formula 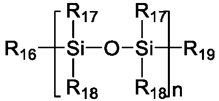 wherein **R₁₆, R₁₇** and **R₁₈** are independently selected from the group consisting of hydrogen and alkyl, aryl, cycloalkyl, alkoxy, aryloxy, hydroxyalkyl, alkoxyalkyl and hydroxyalkoxyalkyl groups containing up to six carbon atoms, and where **R₁₉** is selected from the group consisting of hydrogen and alkyl and aryl groups having up to six carbon atoms, and "n" is greater than 1, *i.e*., wherein said silicone-containing species is not purposefully added to the hydrolysable component and is only present as an impurity in a trace amount of less than 5% by weight based on a total weight of the hydrolysable component.

The present invention also is directed to a method for treating a substrate comprising contacting at least a portion of a surface of the substrate with a composition of the present invention; and optionally exposing the substrate to at least a slightly thermal temperature up to 250°C; wherein the composition, in an at least partially cured state, forms a coating.

The present invention also is directed to a coating formed on a surface of a substrate from a composition of the present invention, wherein the coating, in an at least partially cured state, has:
(a) a thermal conductivity of at least 0.5 W/m·K (measured according to ASTM D7984);
(b) a volume resistivity of at least 10⁹ Ω•m (measured according to ASTM D257);
(c) a shore A hardness of at least 5 measured according to ASTM D2240 with a Type A durometer (Model 2000, Rex Gauge Company, Inc.) at room temperature;
(d) a lap shear strength of at least 0.5 MPa (measured according to ASTM D1002-10 using an Instron 5567 machine in tensile mode with a pull rate of 1 mm per minute); and/or
(e) an elongation of 1% to 900%, as determined according to ASTM D412 on an Instron 5567 machine in tensile mode with a pull rate at 50 mm/min.

The present invention also is directed to a coating formed on a surface of a substrate from a composition of the present invention, wherein the coating, in an at least partially cured state has a thermal conductivity of at least 0.5 W/m·K (measured according to ASTM D7984) and maintains a temperature of the substrate that is at least 100°C lower following exposure of the coating on the surface of the substrate to 1000°C for at a time of at least 90 seconds than a surface temperature of a bare substrate exposed to 1000°C for the time.

The present invention also is directed to a battery assembly comprising: a battery cell; and a coating, in an at least partially cured state, formed on a surface of the battery cell from a coating composition of the present invention.

The present invention also is directed to a substrate comprising a surface at least partially coated with a layer formed from a composition of the present invention.

The present invention also is directed to a method of forming an article comprising extruding a composition of the present invention.

The present invention also is directed to a use of a composition of the present invention for making a coating having, in an at least partially cured state a thermal conductivity of at least 0.5 W/m·K (measured according to ASTM D7984) and maintains a temperature of the substrate that is at least 100°C lower following exposure of the coating on the surface of the substrate to 1000°C for at a time of at least 90 seconds than a surface temperature of a bare substrate exposed to 1000°C for the time.

The present invention also is directed to a use of a coating formed from a composition of the present invention to provide a substrate with thermal and fire protection.

### BRIEF DESCRIPTION OF THE DRAWINGS

FIGS. 1 and 2 are schematic perspective views illustrating a thermally conductive member utilized in a battery pack.
FIG. 3 is a schematic showing the setup used in the fire protection test of the Examples.
FIG. 4 is a graph illustrating the fire performance of a substrate having a coating formed from the compositions of Examples 27 and 28 compared to a bare (uncoated) substrate.
FIG. 5 is a schematic of the dogbone used in the Examples.

### DETAILED DESCRIPTION OF THE INVENTION

Oher than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of " 1 to 10" is intended to include all sub-ranges between (and including) the recited minimum value of 1 and the recited maximum value of 10, that is, having a minimum value equal to or greater than 1 and a maximum value of equal to or less than 10.

As used herein, "including," "containing" and like terms are understood in the context of this application to be synonymous with "comprising" and are therefore open-ended and do not exclude the presence of additional undescribed or unrecited elements, materials, ingredients or method steps. As used herein, "consisting of" is understood in the context of this application to exclude the presence of any unspecified element, ingredient or method step. As used herein, "consisting essentially of" is understood in the context of this application to include the specified elements, materials, ingredients or method steps "and those that do not materially affect the basic and novel characteristic(s)" of what is being described. As used herein, open-ended terms include closed terms such as consisting essentially of and consisting of.

In this application, the use of the singular includes the plural and plural encompasses singular, unless specifically stated otherwise. For example, although reference is made herein to "a" hydrolysable component, "a" curing agent, "a" filler material, a combination (i.e., a plurality) of these components may be used.

In addition, in this application, the use of "or" means "and/or" unless specifically stated otherwise, even though "and/or" may be explicitly used in certain instances.

As used herein, the terms "on," "onto," "applied on," "applied onto," "formed on," "deposited on," "deposited onto," mean formed, overlaid, deposited, or provided on, but not necessarily in contact with, a substrate surface. For example, a composition "applied onto" a substrate surface does not preclude the presence of one or more other intervening coating layers or films of the same or different composition located between the composition and the substrate surface.

As used herein, a "coating composition" refers to a composition, e.g., a solution, mixture, or a dispersion, that, in an at least partially dried or cured state, is capable of producing a film, layer, on at least a portion of a substrate surface.

As used herein, a "sealant composition" refers to a coating composition, e.g., a solution, mixture, or a dispersion, that, in an at least partially dried or cured state, has the ability to resist atmospheric conditions such as moisture and temperature gradients and particulate matter and at least partially block the transmission of materials, such as particulates, water, fuel, and other liquids and gasses.

As used herein, a "gap filler composition" refers to a coating composition, e.g., a solution, mixture, or a dispersion, that, in an at least partially dried or cured state, fills a gap and has a butt joint strength of at least 0.001 N/mm² (measured according to ASTM D2095).

As used herein, an "adhesive composition" refers to a coating composition, e.g., a solution, mixture, or a dispersion, that, in an at least partially dried or cured state, produces a load-bearing joint, such as a load-bearing joint having a lap shear strength of at least 0.05 MPa, as determined according to ASTM D1002-10 using an Instron universal testing machine, model 5567 in tensile mode with a pull rate of 1 mm per minute.

As used herein, the term "one component" or "1K" refers to a composition in which all of the ingredients may be premixed and stored and wherein the reactive components do not readily react when stored under conditions that are substantially free of moisture, but instead react only upon exposure to moisture or water present in the atmosphere, present on the substrate, purposefully added to the composition, and/or bound to an ingredient of the composition. As used herein, the term "activate" means to convert to a reactive form and the term "activatable" means capable of being converted to a reactive form. The viscosity of composition does not double or more for at least 10 days after mixing the ingredients under conditions substantially free of moisture and at ambient temperatures (i.e., the composition remains "workable"). As used herein, "free of moisture" and "substantially free of moisture" mean that although the composition may contain some moisture, the amount of moisture is not sufficient to effect substantial curing of the composition.

As further defined herein, ambient conditions generally refer to room temperature (e.g. 23 °C) and humidity conditions or temperature and humidity conditions that are typically found in the area in which the composition is applied to a substrate, e.g., at 10°C to 40°C and 5% to 80% relative humidity, while slightly thermal conditions are temperatures that are slightly above ambient temperature but are generally below the curing temperature for the composition (i.e., in other words, at temperatures and humidity conditions below which the reactive components will readily react and cure, e.g., > 40°C and less than 220°C at 5% to 80% relative humidity).

As used herein, the term "two-component" or "2K" refers to a composition in which at least a portion of the reactive components readily associate to form an interaction or react to form a bond (physically or chemically), and at least partially cure upon exposure to moisture or water, wherein the moisture or water derives from moisture or water present in the atmosphere, present on the substrate, purposefully added to the composition, and/or bound to an ingredient of the composition. One of skill in the art understands that the two components of the composition are stored separately from each other and mixed just prior to application of the composition. Two-component compositions may optionally be heated or baked, as described below.

As used herein, the term "curing agent" means any reactive material that can be added to a composition to cure the composition. As used herein, the term "cure," "cured," or similar terms, means that the reactive functional groups of the components that form the composition react to form a film, layer, or bond. As used herein, the term "at least partially cured" means that at least a portion of the components that form the composition interact, react, and/or are crosslinked to form a film, layer, or bond. As used herein, "curing" of the curable composition refers to subjecting said composition to curing conditions leading to reaction of the reactive functional groups of the components of the composition and resulting in the crosslinking of the components of the composition and formation of an at least partially cured film, layer, or bond. As used herein, a "curable" composition refers to a composition that may be cured. In the case of a 1K composition, the composition is at least partially cured or cured when the composition is subjected to curing conditions that lead to the reaction of the reactive functional groups of the components of the composition, such as exposure to moisture or water. A curable composition is at least partially cured or cured when the composition is subjected to curing conditions that lead to the reaction of the reactive functional groups of the components of the composition. In the case of a 2K composition, the composition is at least partially cured or cured when the components of the composition are mixed to lead to the reaction of the reactive functional groups of the components of the composition.

As used herein, "hydrolysable component" refers to a component having at least one terminal or sidechain hydrolysable group. As used herein, "hydrolysable group" refers to a group that is capable of undergoing hydrolysis.

As used herein, the "epoxy equivalent weight" is determined by dividing the Mw of the epoxy compound by the average number of epoxide groups present in the epoxy compound.

As used herein, "EEW" refers to the epoxy equivalent weight as determined by titration of a sample using a Metrohm 808 or 888 Titrando, wherein the mass of an epoxy-containing material used is 0.06 g per 100 g/eq of predicted epoxy equivalent weight. The sample is dissolved in 20 mL of methylene chloride (with methanol or tetrahydrofuran optionally being used as co-solvents to ensure complete solvation) followed by the addition of 40 mL glacial acetic acid and 1 gram of tetraethylammonium bromide before titration with 0.1 N perchloric acid.

As used herein, the term "thermally conductive filler" or "TC filler" means a pigment, filler, or inorganic powder that has a thermal conductivity of at least 5 W/m·K at 25°C (measured according to ASTM D7984).

As used herein, the term "non-thermally conductive filler" or "NTC filler" means a pigment, filler, or inorganic powder that has a thermal conductivity of less than 5 W/m·K at 25°C (measured according to ASTM D7984).

As used herein, the term "electrically insulative filler" or "EI filler" means a pigment, filler, or inorganic powder that has a volume resistivity of at least 1 Ω·m (measured according to ASTM D257).

As used herein, the term "electrically conductive filler" or "EC filler" means a pigment, filler, or inorganic powder that has a volume resistivity of less than 1 Ω·m (measured according to ASTM D257).

As used herein, the term "thermally stable" means a pigment, filler, or inorganic powder that, when tested using the thermal gravimetric analysis (TGA) test under air (according to ASTM E1131), has no more than 5% weight loss of the total weight of the pigment, filler, or powder occurring before 600°C.

As used herein, the term "thermally unstable" means a pigment, filler, or inorganic powder that, when tested using the TGA test under air (according to ASTM E1131), has a weight loss of the total weight of the pigment of more than 5% occurring before 600°C.

As used herein, the term "smoke" means a suspension of airborne particles and/or gasses, visible to the naked eye, that are emitted when a material undergoes combustion.

As used herein, the term "combustion" refers to the rapid oxidation of materials resulting from exposure to heat or flame.

As used herein, the term "accelerator" means a substance that increases the rate or decreases the activation energy of a chemical reaction in comparison to the same reaction in the absence of the accelerator. An accelerator may be either a "catalyst," that is, without itself undergoing any permanent chemical change, or may be reactive, that is, capable of chemical reactions and includes any level of reaction from partial to complete reaction of a reactant.

As used herein, the terms "latent" or "blocked" or "encapsulated", when used with respect to a curing agent or an accelerator, means a molecule or a compound that is activated by an external energy source prior to reacting (i.e., crosslinking) or having a catalytic effect, as the case may be. For example, an accelerator may be in the form of a solid at room temperature and have no catalytic effect until it is heated and melts, or the latent accelerator may be reversibly reacted with a second compound that prevents any catalytic effect until the reversible reaction is reversed by the application of heat and the second compound is removed, freeing the accelerator to catalyze reactions.

As used herein, the term "solvent" refers to a molecule or a compound that has a high vapor pressure such as greater than 2 mm Hg at 25°C determined by differential scanning calorimetry according to ASTM E1782 and is used to lower the viscosity of a resin but that does not have a reactive functional group capable of reacting with a functional group(s) on molecules or compounds in a composition.

As used herein, the term "reactive diluent" refers to a molecule or a compound that has a low vapor pressure such as 2 mm Hg or less at 25°C determined by differential scanning calorimetry according to ASTM E1782 and is used to lower the viscosity of a resin but that has at least one functional group capable of reacting with a functional group(s) on molecules or compounds in a composition.

As used herein, the term "plasticizer" refers to a molecule or a compound that does not have a functional group capable of reacting with a functional group(s) on molecules or compounds in a composition and that is added to the composition to decrease viscosity, decrease glass transition temperature (Tg), and impart flexibility.

As used herein, a dash ("-") that is not between two letters or symbols is used to indicate a point of bonding for a substituent or between two atoms. For example, -CONH₂ is bonded to another chemical moiety through the carbon atom.

As used herein, "polymer" refers to oligomers, homopolymers, and copolymers.

As used herein, "alkoxy" refers to a -OR group where R is alkyl or aromatic as defined herein. Non-limiting examples of alkoxy groups include methoxy, ethoxy, n-propoxy, isopropoxy, and n-butoxy.

As used herein, "alkyl" refers to an aliphatic hydrocarbon group which may be straight or branched and comprising about 1 to about 20 carbon atoms in the chain. Non-limiting examples of suitable alkyl groups contain about 1 to about 18 carbon atoms in the chain, or about 1 to about 6 carbon atoms in the chain. Branched means that one or more lower alkyl groups such as methyl, ethyl or propyl, are attached to a linear alkyl chain. "Lower alkyl" or "short chain alkyl" means a group having about 1 to about 6 carbon atoms in the chain which may be straight or branched. "Alkyl" may be unsubstituted or optionally substituted by one or more substituents which may be the same or different, each substituent being independently selected from the group consisting of halo, alkyl, aryl, cycloalkyl, cyano, hydroxy, alkoxy, alkylthio, amino, -NH(alkyl), -NH(cycloalkyl), -N(alkyl)₂, carboxy and -C(O)O-alkyl. Non-limiting examples of suitable alkyl groups include methyl, ethyl, n-propyl, isopropyl and t-butyl.

As used herein, the term "(meth)acrylate" refers to either/or methacrylate or acrylate and "(meth)acrylic" refers to either/or methacrylic acid and acrylic acid.

As used herein, unless indicated otherwise, the term "substantially free" means that a particular material is not purposefully added to a mixture or composition, respectively, and is only present as an impurity in a trace amount of less than 5% by weight based on a total weight of the mixture or composition, respectively. As used herein, unless indicated otherwise, the term "essentially free" means that a particular material is only present in an amount of less than 2% by weight based on a total weight of the mixture or composition, respectively. As used herein, unless indicated otherwise, the term "completely free" means that a mixture or composition, respectively, does not comprise a particular material, i.e., the mixture or composition comprises 0% by weight of such material.

As used herein, the volume percentage of each ingredient is calculated using the below equation: $vol% \left(ingredient\right) = \frac{volume of ingredient}{volume of total composition} \times 100 %$ wherein the volume of the ingredient is calculated by $\frac{Weight of ingredient}{True Density ofingredient}$.

As used herein, the term "volatile organic compounds" or "VOC" means any compound of carbon, excluding carbon monoxide, carbon dioxide, carbonic acid, metallic carbides or carbonates, and ammonium carbonate, which participates in atmospheric photochemical reactions.

### Compositions of the Present Invention

The present invention is directed to a moisture-curable composition comprising, or consisting essentially of, or consisting of: a hydrolysable component; and a thermally conductive filler package comprising thermally conductive, electrically insulative filler particles, the thermally conductive, electrically insulative filler particles having a thermal conductivity of at least 5 W/m·K (measured according to ASTM D7984) and a volume resistivity of at least 1 Ω·m (measured according to ASTM D257); and optionally a curing agent, an accelerator, a dispersant and/or any of the additives described below. The hydrolysable component comprises a silane-containing polymer, a silyl-containing polymer, an imine, or combinations thereof, wherein the silane-containing polymer comprises a polythioether, a polyester, a polyether, a polyisocyanate, a poly(meth)acrylate, a polyolefin, a polyurea, a polyurethane, or combinations thereof, and the hydrolysable component is substantially free of a silicone-containing species having the formula 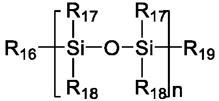 wherein **R₁₆, R₁₇** and **R₁₈** are independently selected from the group consisting of hydrogen and alkyl, aryl, cycloalkyl, alkoxy, aryloxy, hydroxyalkyl, alkoxyalkyl and hydroxyalkoxyalkyl groups containing up to six carbon atoms, and where **R₁₉** is selected from the group consisting of hydrogen and alkyl and aryl groups having up to six carbon atoms, and "n" is greater than 1, *i.e*., wherein said silicone-containing species is not purposefully added to the hydrolysable component and is only present as an impurity in a trace amount of less than 5% by weight based on a total weight of the hydrolysable component. The thermally conductive filler package is present in an amount of 10 % by volume percent to 98% by volume based on total volume of the composition. As described in more detail below, the filler package optionally also may further comprise at least one thermally stable filler material and/or at least one thermally unstable filler material. As used herein, the composition "consists essentially of" a hydrolysable component, a thermally conductive filler package as described above, and optionally a curing agent, an accelerator and/or a dispersant, when the maximum amount of other components is 5% by volume or less based on total volume of the composition.

The composition may be a coating composition, such as a sealant composition, an adhesive composition, a gap filling composition, a putty, a molding compound, a potting compound, and/or a 3D-printable composition or may be used in its at least partially dried or cured state to form a film, layer, or a part, such as a casted, molded, extruded, or machined part.

The composition may be provided as a one-component composition, or as a two-component composition, or as a three-component or higher composition.

The compositions disclosed herein may be 1K compositions comprising, or consisting essentially of, or consisting of, a hydrolysable component, a thermally conductive filler package as described below, and optionally a curing agent, an accelerator, a dispersant and/or any of the additives described below. As described in more detail below, the filler package optionally also may further comprise at least one thermally stable filler material and/or at least one thermally unstable filler material. It has been surprisingly discovered that the 1K coating compositions of the present invention are workable for at least 10 days, such as at least 20 days, such as at least 30 days, when stored under conditions substantially free of moisture and at ambient temperatures.

The components of the one-component composition may be combined and packaged in a moisture-sealed container to substantially prevent curing. The composition is stable under conditions substantially free of moisture and at ambient temperatures. The components of the one-component composition may be combined and frozen and stored ("premixed frozen" or "PMF") and may be thawed and cured by exposure to moisture or water and optionally also by external factors, such as temperature. In examples, the PMF may be stored at temperatures between and including -100°C and -25°C, such as -100°C to -15°C, to retard hardening, such as at a minimum of -75°C, such as at a maximum of -40°C.

When the moisture sealed container is unsealed and the composition is applied to a substrate, the composition may be exposed to moisture which promotes curing of the composition to form a sealant or an adhesive as described in more detail below.

The compositions disclosed herein may be 2K compositions comprising, or consisting essentially of, or consisting of: a first component comprising, or consisting essentially of, or consisting of a hydrolysable component; a second component comprising, or consisting essentially of, or consisting of, a curing agent; and a thermally conductive filler package that may be present in the first component and/or the second component, and optionally a curing agent, an accelerator, a dispersant and/or any of the additives described below. As described in more detail below, the filler package optionally also may further comprise at least one thermally stable filler material and/or at least one thermally unstable filler material. Such accelerator and/or a dispersant and/or any of the additives described below may be present in the first component and/or the second component. The first and second components may be mixed together immediately prior to use.

The compositions disclosed herein may be 3K or higher compositions comprising, or consisting essentially of, or consisting of: a first component comprising, or consisting essentially of, or consisting of, a hydrolysable component; a second component comprising, or consisting essentially of, or consisting of, a curing agent; and a third component comprising, or consisting essentially of, or consisting of, a thermally conductive filler package; and optionally a curing agent, an accelerator, a dispersant and/or any of the additives described below. As described in more detail below, the filler package optionally also may further comprise at least one thermally stable filler material and/or at least one thermally unstable filler material. Such accelerator and/or dispersant and/or any of the additives described below may be present in the first component and/or the second component and/or the third component.

In the case of a 2K composition, one of the components may be substantially free, or essentially free, or completely free, of filler materials, and in the case of a 3K composition, one or two of the components may be substantially free, or essentially free, or completely free, of filler materials.

The hydrolysable component of the two-component compositions and the three-component compositions may be combined with the thermally conductive filler package and packaged in a moisture-sealed container to substantially prevent curing. The hydrolysable component is stable under conditions substantially free of moisture and at ambient temperatures. When the moisture sealed container is unsealed, the composition may be exposed to moisture which promotes curing of the composition to form a sealant or an adhesive as described in more detail below.

Optionally, the non-hydrolysable component(s) of the two-component and three-component compositions (i.e., the curing agent and/or the filler package) may comprise water.

As described in more detail below, the hydrolysable component of the present invention may have the general formula (I): 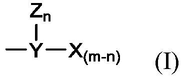 wherein when Y=Si, then m=3, n=0, 1, 2, and X=R, wherein R=an alkoxy, an acyloxy, a halogen, or an amine, and wherein Z= an alkyl, a branched alkyl, or a substituted alkyl; and wherein when Y=S, then m=1, n=0, and X=silyl group containing an alkyl group, a branched alkyl group, a substituted alkyl group, or a phenyl group; and wherein when Y=C, then m=1, n=0 and X=R, wherein R=an amine. As used herein, "silyl group" refers to the following formula (II): 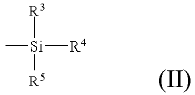 wherein R³, R⁴, and R⁵ are each independently selected from a C₁₋₆ n-alkyl group, a C₁₋₆ branched alkyl group, a substituted C₁₋₆ n-alkyl group, and a phenyl group.

Upon exposure to water or moisture, the hydrolysable group may react with water to form a hydrolyzed product, such as an -Si-OH, an -SH, and/or an -NH₂. Self-condensing hydrolysable components are those that are capable of condensing to form a condensed product without a curing agent (although as described below, curing agents optionally may be used in such compositions), while non-self-condensing hydrolysable components require a curing agent to form a condensed product.

As described in more detail below, the hydrolysable component comprises a silane-containing polymer, a silyl-containing polymer, an imine, or combinations thereof.

The hydrolysable component is substantially free, and may be essentially free, or completely free, of a silicone-containing species having the formula (III): 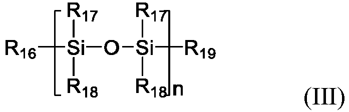 wherein **R₁₆ , R₁₇** and **R₁₈** are independently selected from the group consisting of hydrogen, alkyl, aryl, cycloalkyl, alkoxy, aryloxy, hydroxyalkyl, alkoxyalkyl and hydroxy-alkoxyalkyl groups containing up to six carbon atoms, and where **R₁₉** is selected from the group consisting of hydrogen and alkyl and aryl groups containing up to six carbon atoms, and "n" is greater than 1.

Optionally, the moisture-curable compositions of the present invention may further comprise a curing agent that reacts with the hydrolyzed component.

As described in more detail below, suitable curing agents include an acetoacetate, an acrylate, a silanol, a polyol, a mercaptan, an epoxide, a Michael acceptor, an isocyanate, an oxidizer, or combinations thereof.

The composition may have a total solids content of at least 40% by volume based on total volume of the composition, such as at least 60%, such as at least 80% by volume, and may have a total solids content of no more than 100% by volume based on total volume of the composition. The composition may have a total solids content of 40% to 100% by volume based on total volume of the composition, such as 60% to 100% by volume, such as 80% to 100% by volume. As used herein, "total solids" refers to the non-volatile content of the composition, i.e., materials which will not volatilize when heated to 110°C and standard atmospheric pressure (101325 Pa) for 60 minutes.

The composition may be a low-volatile organic content ("VOC") composition. As used herein, the term "low-VOC" refers to a composition having a theoretical VOC volume % of less than 7% by volume, such as less than 3% by volume, such as less than 2% by volume, based on total volume of the composition. VOC may be measured according to ASTM D3960 (after heating the volatile components for 1 hour at 110°C ± 5°C). The theoretical VOC may be less than 105 g/L, such as less than 75 g/L, such as less than 30 g/L.

### Silane-Containing Moisture Curable Resin Systems

The hydrolysable component of the present invention may comprise a silane-containing polymer. The silane-containing polymer contains hydrolysable groups that are capable of self-condensing.

The silane-containing polymer may be a single silane-containing polymer or a combination of silane-containing polymers. The silane-containing polymer includes hydrolysable groups and condensable groups attached to the Si atom. Non-limiting examples of suitable hydrolysable groups for attachment to the Si atom of the silane group include alkoxy groups, acyloxy groups, halogen groups, amino groups, or combinations thereof.

The silane-containing polymers include polythioethers, polyesters, polyethers, polyolefins, polyureas, polyurethanes, polyisocyanates, poly(meth)acrylates, or combinations thereof. As used herein, "polythioether" refers to a polymer having a backbone including S atoms, but which does not include S-S linkages, i.e., the polymer backbone has -C-S-C-linkages.

Suitable silane-containing polymers include the polythioethers disclosed in US Patent No. 8,143,370 to Lin, col. 2, ll. 15-col.3, ll. 4. For example, silane-terminated polythioethers can be prepared by reacting a mercapto-terminated polythioether with a compound having a silane group. Any suitable mercapto-terminated polythioether may be used. For example, the mercapto-terminated polythioether used in the reaction to make the silane-terminated polythioether may be a mercapto-terminated polythioether represented by formula IV, below.

H-[S-R₁-S-(CH₂)ₚ-O-(R₂-O-)ₘ-(CH₂)_{q}]n-S-R₁-SH (IV)

In formula(IV), R₁ may be selected from C₂ to C₁₀ n-alkylene groups, C₂ to C₆ branched alkylene groups, C₆ to C₈ cycloalkylene groups, C₆ to C₁₀ alkylcyloalkylene groups, heterocyclic groups, -[(CH₂)ₚ-X]_{q}-(CH₂)ᵣ- groups, and -[(CH₂)ₚ-X]_{q}-(CH₂)ᵣ- groups in which at least one -CH₂- unit is substituted with a methyl group. R₂ may be selected from C₂ to C₁₀ n-alkylene groups, C₂ to C₆ branched alkylene groups, C₆ to C₈ cycloalkylene groups, C₆ to C₁₄ alkylcyloalkylene groups, heterocyclic groups, and -[(CH₂)ₚ-X]_{q}-(CH₂)ᵣ- groups. X may be selected from O atoms, S atoms, and -NR₃- groups. R₃ may be selected from H atoms and methyl groups. Also, in formula (IV), m is an integer ranging from 1 to 50, n is an integer ranging from 1 to 60, p is an integer ranging from 2 to 6, q is an integer ranging from 1 to 5, and r is an integer ranging from 2 to 10. Non-limiting examples of suitable compounds having silane groups for reaction with the polythioether include silane-terminated vinyl compounds, silane-terminated isocyanate compounds, and silane-terminated epoxy compounds. The silane group includes hydrolysable groups attached to the Si atom. In particular, the silane group may be represented by -Si(YₐA_{b}), in which Y is a functional group that is both hydrolysable and condensable, A is a C₁ to C₄ hydrocarbon, a ranges from 1 to 3, b ranges from 0 to 3, and a+b=3.

Additional non-limiting examples of suitable mercapto-terminated polythioether compounds include those disclosed in U.S. Pat. No. 6,509,418 to Zook, et al. The mercapto-terminated polymers may be prepared by reacting reactants comprising one or more polyvinyl ether monomers and one or more polythiol materials. Useful polyvinyl ether monomers include divinyl ethers having the formula (V):

CH₂=CH-O-(R²-O)ₘ-CH=CH₂ (V)

where R² is C₂₋₆ n-alkylene, C₂₋₆ branched alkylene, C₆₋₈ cycloalkylene or C₆₋₁₀ alkylcycloalkylene group or -[(CH₂)ₚ-O]_{q}-(CH₂)ᵣ- and m is a rational number ranging from 0 to 10, p is an independently selected integer ranging from 2 to 6, q is an independently selected integer ranging from 1 to 5 and r is an independently selected integer ranging from 2 to 10. Suitable polythiol materials for preparing the mercapto-terminated polymer include compounds, monomers or polymers having at least two thiol groups. Useful polythiols include dithiols having the formula (VI):

HS-R¹-SH (VI)

where R¹ can be a C₂₋₆ n-alkylene group; C₃₋₆ branched alkylene group, having one or more pendant groups which can be, for example, hydroxyl groups, alkyl groups such as methyl or ethyl groups; alkoxy groups, C₆₋₈ cycloalkylene; C₆₋₁₀ alkylcycloalkylene group; -[(CH₂)ₚ-X]_{q}-(CH₂)ᵣ-; or -[(CH₂)ₚ-X]_{q}-(CH₂)ᵣ- in which at least one -CH₂- unit is substituted with a methyl group and in which p is an independently selected integer ranging from 2 to 6, q is an independently selected integer ranging from 1 to 5 and r is an independently selected integer ranging from 2 to 10. Other useful dithiols include one or more heteroatom substituents in the carbon backbone, that is, dithiols in which X includes a heteroatom such as O, S or another bivalent heteroatom radical; a secondary or tertiary amine group, i.e., -NR⁶-, where R⁶ is hydrogen or methyl; or another substituted trivalent heteroatom. Useful polythiols include but are not limited to dithiols such as 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethylsulfide, methyl-substituted dimercaptodiethylsulfide, dimethyl-substituted dimercaptodiethyl sulfide, dimercaptodioxaoctane, 1,5-dimercapto-3-oxapentane and mixtures thereof. The polythiol material can have one or more pendant groups selected from lower alkyl groups (such as C₁-C₆), lower alkoxy groups (such as C₁-C₆) and hydroxyl groups. Suitable alkyl pendant groups include C₁-C₆ linear alkyl, C₃-C₆ branched alkyl, cyclopentyl, and cyclohexyl.

In other examples, the silane-containing polymer may comprise a polyester.

The term "polyester" comprises any polymer containing plural ester functional groups that are generally prepared from the reaction of polyacids with polyols, carboxylic acid derivatives (i.e., acid chlorides, anhydrides) with polyols, the self-condensation of polylactones, or combinations thereof. Silane-containing polyester can be prepared by reacting a polyester with a compound containing silane. Suitable examples are polyester polyols which are prepared from dihydroxyls such as 1,2-ethanediol, diethylene glycol, 1,2-propanediol, dipropylene glycol, 1,4-butanediol or mixtures of said alcohols, and organic dicarboxylic acids or anhydrides or esters thereof, such as succinic acid, glutaric acid, adipic acid, trimethyladipic acid, phthalic anhydride, terephthalic acid or mixtures thereof.

In other examples, the silane-containing polymer may comprise a polyether.

The terms "polyether" is intended to include not only polyethers that are formed from ring opening polymerization of cyclic compounds, such as ethylene oxide, 1,2-propylene oxide or 2,3-butylene oxide, and mixture of said compounds, but also polyethers that are formed from polycondensation of compounds containing two or more active hydrogen atoms, such as 1,2 - ethanediol, neopentyl glycol, diethylene glycol and mixture of said compounds. Silane-containing polyether can be prepared by reacting a polyether with a compound containing silane. Suitable examples are polyether-containing hydroxyl groups, such as polyoxyethylene polyols and polyoxypropylene polyols.

In other examples, the silane-containing polymer may comprise a polyurethane.

The term "polyurethane" is intended to include not only polyurethanes that are formed from the reaction of polyisocyanates and polyols but also poly(ureaurethane)(s) that are prepared from the reaction of polyisocyanates with polyols and water and/or amines. Silane-containing polyurethane can be prepared by reacting polyisocyanates with a compound containing silane.

In other examples, the silane-containing polymer may comprise a polyurea.

The term "polyurea" is intended to include polyurea that are formed from the reaction of polyisocyanates and polyamines. Silane-containing polyurethane can be prepared by reacting polyisocyanates with a compound containing silane.

In other examples, the silane-containing polymer may comprise a polyisocyanate.

Non-limiting examples of suitable polyisocyanates in the present invention include polyisocyanates and polyisothiocyanates having backbone linkage such as urethane linkage (-NH-C(O)-O-), thiourethane linkages (-NH-C(O)-S-), thiocarbamate linkages (-NH-C(S)-O-), dithiourethane linkages (-NH-C(S)-S-), polyamide linkages, and combinations thereof. Suitable polyisocyanates are aliphatic isocyanates including ethylene diisocyanate, trimethylene diisocyanate, 1,6-hexamethylene diisocyanate, tetramethylene diisocyanate, hexamethylene diisocyanate, branched isocyanates such as trimethylhexane diisocyanate, trimethylhexamethylene diisocyanate, and mixtures thereof. More examples of polyisocyanates are described in PPG previous publication (US 2016/0333133 A1).

In other examples, the silane-containing polymer may comprise a polyolefin.

The term "polyolefin" is intended to include polyolefins that are prepared by polymerization of olefin monomers, such as C2-C20 α-olefins including ethylene, propylene, 1-X-butene, and mixtures of said monomers. Silane-containing polyolefin can be prepared by reacting polyolefin with a compound containing silane such as silazane. Suitable examples of polyolefin include, but are not limited to, INFUSE^{™} (the Dow Chemical Company), SEPTON^{™} V - SERIES (Kuraray Co., LTD.), VISTAMAXX^{™} (e.g., VISTAMAXX 6102) (Exxon Mobil Chemical Company), TAFMER^{™} (e.g., TAFMER DF710) (Mitsui Chemicals, Inc.), and ENGAGE^{™} (e.g., ENGAGE 8150) (the Dow Chemical Company).

In other examples, the silane-containing polymer may comprise a poly(meth) acrylate.

Silane-containing poly(meth)acrylate may be prepared by a copolymerization of (meth)acryloyloxyalkyalkoxysilanes with other (meth)acryloyl monomers and/ or further unsaturated monomers, such as styrene, but also prepared by reacting poly(meth)acrylate with a silane compound.

The silane-containing polymer may also comprise at least one silane-terminated polymer. The silane-terminated polymer may be capable of crosslinking in the presence of moisture. The polymer may be an alkoxysilane-terminated polyether, an alkoxysilane-terminated polyurethane, or combinations thereof. The alkoxysilane can be methoxy or ethoxy silane, with one, two, or three alkoxy groups per silane. Commercial examples of alkoxysilane-terminated polymers include the Kaneka MS polymers such as SAX 350, SAX 400, and SAX 750 or the Wacker STP-E series such as STP-E30.

The silane-containing polymer may be present in the composition in an amount of at least 2% by volume based on total volume of the composition, such as at least 5% by volume, such as at least 10% by volume, such as at least 30% by volume, and may be present in the composition in an amount of no more than 90% by volume based on total volume of the composition, such as no more than 80% by volume, such as no more than 70% by volume, such as no more than 60% by volume. The silane-containing polymer may be present in the composition in an amount of 2% by volume to 90% by volume based on total volume of the composition, such as 5% by volume to 80% by volume, such as 10% by volume to 70% by volume, such as 30% by volume to 60% by volume.

Although the silane-containing polymers are capable of self-condensing, the composition optionally may further comprise a curing agent. Suitable curing agents for use with the silane-containing polymers include silanols, polyols, and polythiols.

As discussed above, such a curing agent may comprise a silanol. Suitable silanols can be represented by the formula (R')SiOH (where each R' independently is the same or different kind of substituted or non-substituted alkyl or aryl group). Non-limiting examples are tris(tert-butoxy)silanol, tris(ter-pentoxy)silanol, tris(trimethylsilyl)silanol, p-fluorohexahydro-sila-difenidol hydrochloride, tri(o-tolyl)silanol, tris(1-naphthyl)silanol, tris(2,4,6-trimethylphenol)silanol, tris(2-methoxylphenyl)silanol, tris(4-(dimethylamino)phenyl)silanol, and mixtures thereof.

As discussed above, such a curing agent may comprise a polyol. Suitable polyols can be a cycloalkane diol, such as cyclopentanediol, 1,4-cyclohexanediol, cyclohexanedimethanols, such as 1,4-cyclohexanedimethanol, cyclododecanediol, 4,4'-isopropylidene-biscyclohexanol, hydroxypropoylcyohexanol, cyclohexandiethanol, 1,2-bis(hydroxymethyl)-cyclohexane, 1,2-bis(hydroxyethyl)-cyclohexane, 4,4'-isopropylidene-biscyclohexanol, bis(4-hydroxycylohexanol)methane, and mixtures thereof. The polyols can be an aromatic diol, such as dihydroxybenzene, xylene glycol, hydroxybenzyl alcohol and dihydroxytoluene; bisphenols, such as, 4,4'-isopropylidenediphenol, 4'4'oxybisphenol, hydroquinone, and mixtures thereof.

Other suitable examples include diols represented by the following formula (VII): 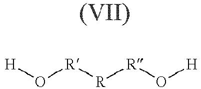 wherein R represents C₁ to C₁₈ divalent linear or branched aliphatic, cycloaliphatic, aromatic, heterocyclic, or oligomeric saturated alkylene radical or mixtures thereof; C₂ to C₁₈ divalent organic radical containing at least one element selected from the group consisting of sulfur, oxygen and silicon in addition to carbon and hydrogen atoms; C₅ to C₁₈ divalent saturated cycloalkylene radical; or C₅ to C₁₈ divalent saturated heterocycloalkylene radical; and R' and R" can be present or absent and, if present, each independently represent C₁ to C₁₈ divalent linear or branched aliphatic, cycloaliphatic, aromatic, heterocyclic, polymeric, or oligomeric saturated alkylene radical or mixtures thereof.

Other non-limiting examples of suitable diols include branched chain alkane diols, such as propylene glycol, dipropylene glycol, tripropylene glycol, neopentyl glycol, 2-methyl-butanediol. 2,2,4-trimethyl-1,3-pentanediol, 2-methyl-1,3-pentanediol, 2-ethyl-1,3-hexanediol, 2-methyl-1,3-propanediol, 2,2-dimethyl-1,3-propanediol, dibutyl 1,3-propanediol, polyalkylene glycols, such as polyethylene glycols, and mixtures thereof.

In some non-limiting examples, the diol can be an aromatic-containing diol, such as dihydroxybenzene, 1,4-benzenedimethanol, xylene glycol, hydroxybenzyl alcohol and dihydroxytoluene; bisphenols, such as, 4,4'-isopropylidenediphenol, 4,4'-oxybisphenol, 4,4'-dihydroxybenzophenone, 4,4'-thiobisphenol, phenolphthalein, bis(4-hydroxyphenyl)methane, 4,4'-(1,2-ethenediyl)bisphenol and 4,4'-sulfonylbisphenol; halogenated bisphenols, such as 4,4'-isopropylidenebis(2,6-dibromophenol), 4,4'-isopropylidenebis(2,6-dichlorophenol) and 4,4'-isopropylidenebis(2,3,5,6-tetrachlorophenol); alkoxylated bisphenols, which can have, for example, ethoxy, propoxy, α-butoxy and β-butoxy groups; and biscyclohexanols, which can be prepared by hydrogenating the corresponding bisphenols, such as 4,4'-isopropylidene-biscyclohexanol, 4,4'-oxybiscyclohexanol, 4,4'-thiobiscyclohexanol and bis(4-hydroxycyclohexanol)methane, the alkoxylation product of 1 mole of 2,2-bis(4-hydroxyphenyl)propane (i.e., bisphenol-A) and 2 moles of propylene oxide, hydroxyalkyl terephthalates, such as meta or para bis(2-hydroxyethyl) terephthalate, bis(hydroxyethyl) hydroquinone, and mixtures thereof.

In some non-limiting examples, the diol can be a heterocyclic diol, for example a dihydroxy piperazine such as 1,4-bis(hydroxyethyl)piperazine, a diol of an amide or alkane amide (such as ethanediamide (oxamide)), for example N,N'-bis(2-hydroxyethyl)oxamide, a diol of a propionate, such as 2,2-dimethyl-3-hydroxypropyl-2,2-dimethyl-3-hydroxypropionate, a diol of a hydantoin, such as bishydroxypropyl hydantoin, a diol of a phthalate, such as meta or para bis(2-hydroxyethyl) terephthalate, a diol of a hydroquinone, such as a dihydroxyethylhydroquinone, and/or a diol of an isocyanurate, such as dihydroxyethyl isocyanurate.

Non-limiting examples of polyether polyols can include but are not limited to polyoxyalkylene polyols, and polyalkoxylated polyols. Polyoxyalkylene polyols can be prepared in accordance with known methods. In a non-limiting example, a polyoxyalkylene polyol can be prepared by condensing an alkylene oxide, or a mixture of alkylene oxides, using acid-or base-catalyzed addition with a polyhydric initiator or a mixture of polyhydric initiators, such as but not limited to ethylene glycol, propylene glycol, glycerol, and sorbitol. Non-limiting examples of alkylene oxides can include ethylene oxide, propylene oxide, butylene oxide, amylene oxide, aralkylene oxides, such as but not limited to styrene oxide, mixtures of ethylene oxide and propylene oxide. In a further non-limiting example, polyoxyalkylene polyols can be prepared with mixtures of alkylene oxide using random or step-wise oxyalkylation. Non-limiting examples of such polyoxyalkylene polyols include polyoxyethylene, such as but not limited to polyethylene glycol, polyoxypropylene, such as but not limited to polypropylene glycol.

In a non-limiting example, polyalkoxylated polyols can be represented by the following general formula (VIII): 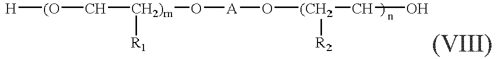 wherein m and n can each be a positive integer, the sum of m and n being from 5 to 70; R₁ and R₂ are each hydrogen, methyl or ethyl; and A is a divalent linking group such as a straight or branched chain alkylene which can contain from 1 to 8 carbon atoms, phenylene, and C₁ to C₉ alkyl-substituted phenylene. The chosen values of m and n can, in combination with the chosen divalent linking group, determine the molecular weight of the polyol.

Polyalkoxylated polyols can be prepared by methods that are known in the art. In a non-limiting example, a polyol such as 4,4'-isopropylidenediphenol can be reacted with an oxirane-containing material such as but not limited to ethylene oxide, propylene oxide and butylene oxide, to form what is commonly referred to as an ethoxylated, propoxylated or butoxylated polyol having hydroxy functionality. Non-limiting examples of polyols suitable for use in preparing polyalkoxylated polyols can include those polyols described in U.S. Pat. No. 6,187,444 B1 at column 10, lines 1-20.

As used herein, the term "polyether polyols" can include the generally known poly(oxytetramethylene) diols prepared by the polymerization of tetrahydrofuran in the presence of Lewis acid catalysts, such as but not limited to boron trifluoride, tin (IV) chloride and sulfonyl chloride. In a non-limiting example, the polyether polyol can include Terathane^{™} which is commercially available from DuPont. Also included are the polyethers prepared by the copolymerization of cyclic ethers, such as but not limited to ethylene oxide, propylene oxide, trimethylene oxide, and tetrahydrofuran with aliphatic diols, such as but not limited to ethylene glycol, 1,3-butanediol, 1,4-butanediol, diethylene glycol, dipropylene glycol, 1,2-propylene glycol and 1,3-propylene glycol. Compatible mixtures of polyether polyols can also be used. As used herein, "compatible" means that the polyols are mutually soluble in each other so as to form a single phase.

A wide variety of polyester polyols known in the art can be used in the present invention. Suitable polyester polyols can include but are not limited to polyester glycols. Polyester glycols for use in the present invention can include the esterification products of one or more dicarboxylic acids having from four to ten carbon atoms, such as but not limited to adipic, succinic or sebacic acids, with one or more low molecular weight glycols having from two to ten carbon atoms, such as but not limited to ethylene glycol, propylene glycol, diethylene glycol, 1,4-butanediol, neopentyl glycol, 1,6-hexanediol and 1,10-decanediol. Esterification procedures for producing polyester polyols is described, for example, in the article D. M. Young, F. Hostettler et al., "Polyesters from Lactone," Union Carbide F-40, p. 147.

In a non-limiting example, the polyol for use in the present invention can include polycaprolactone polyols. Suitable polycaprolactone polyols are varied and known in the art. In a non-limiting example, polycaprolactone polyols can be prepared by condensing caprolactone in the presence of difunctional active hydrogen compounds such as but not limited to water or low molecular weight (such as those having an Mw of 6,000 or less) glycols as recited herein. Non-limiting examples of suitable polycaprolactone polyols can include commercially available materials designated as the CAPA series from Solvay Chemical which includes but is not limited to CAPA 2047A, and the TONE^{™} series from The Dow Chemical Company, such as but not limited to TONE 0201.

Polycarbonate polyols for use in the present invention are varied and known to one skilled in the art. Suitable polycarbonate polyols can include those commercially available (such as but not limited to Ravecarb^{™} 107 from Enichem S.p.A.). In a non-limiting example, the polycarbonate polyol can be produced by reacting an organic glycol such as a diol, described hereinafter, and a dialkyl carbonate, such as described in U.S. Pat. No. 4,160,853. In a non-limiting example, the polyol can include polyhexamethyl carbonate such as HO-(CH₂)₆-[O-C(O)-O-(CH₂)₆]ₙ-OH, wherein n is an integer from 4 to 24, or from 4 to 10, or from 5 to 7.

As discussed above, the curing agent may comprise a thiol, such as a polythiol curing agent. As used herein, a "polythiol curing agent" refers to a chemical compound having at least two thiol functional groups (-SH).

The polythiol curing agent may comprise a compound comprising at least two thiol functional groups. The polythiol curing agent may comprise a dithiol, trithiol, tetrathiol, pentathiol, hexathiol or higher functional polythiol compound, i.e. comprising seven or more thiol groups per molecule. The polythiol curing agent may comprise a dithiol compound including 3,6-dioxa-1,8-octanedithiol (DMDO), 3-oxa-1,5-pentanedithiol, 1,2-ethanedithiol, 1,3-propanedithiol, 1,2-propanedithiol, 1,4-butanedithiol, 1,3-butanedithiol, 2,3-butanedithiol, 1,5-pentanedithiol, 1,3-pentanedithiol, 1,6-hexanedithiol, 1,3-dithio-3-methylbutane, ethylcyclohexyldithiol (ECHDT), methylcyclohexyldithiol, methyl-substituted dimercaptodiethyl sulfide, dimethyl-substituted dimercaptodiethyl sulfide, 2,3-dimercapto-1-propanol, bis-(4-mercaptomethylphenyl) ether, 2,2'-thiodiethanethiol, and glycol dimercaptoacetate (commercially available as THIOCURE^{®} GDMA from BRUNO BOCK Chemische Fabrik GmbH & Co. KG). The polythiol curing agent may comprise a trithiol compound including trimethylpropane trimercaptoacetate (commercially available as THIOCURE^{®} TMPMA from BRUNO BOCK Chemische Fabrik GmbH & Co. KG), trimethylopropane tris-3-mercaptopropionate (commercially available as THIOCURE^{®} TMPMP from BRUNO BOCK Chemische Fabrik GmbH & Co. KG), ethoxylated trimethylpropane tris-3-mercaptopropionate polymer (commercially available as THIOCURE^{®} ETTMP from BRUNO BOCK Chemische Fabrik GmbH & Co. KG), tris[2-(3-mercaptopropionyloxy)ethyl]isocyanurate (commercially available as THIOCURE^{®} TEMPIC from BRUNO BOCK Chemische Fabrik GmbH & Co. KG). The polythiol curing agent may comprise a tetrathiol compound including pentaerythritol tetramercaptoacetate (commercially available as THIOCURE^{®} PETMA from BRUNO BOCK Chemische Fabrik GmbH & Co. KG), pentaerythritol tetra-3-mercaptopropionate (commercially available as THIOCURE^{®} PETMP from BRUNO BOCK Chemische Fabrik GmbH & Co. KG), and polycaprolactone tetra(3-mercaptopropionate) (commercially available as THIOCURE^{®} PCL4MP 1350 from BRUNO BOCK Chemische Fabrik GmbH & Co. KG). Higher functional polythiol curing agents may include dipentaerythritol hexa-3-mercaptopropionate (commercially available as THIOCURE^{®} DiPETMP from BRUNO BOCK Chemische Fabrik GmbH & Co. KG). Combinations of polythiol curing agents may also be used.

The thiol curing agent may comprise a mercaptan terminated polysulfide. Commercially available mercaptan terminated polysulfides includes those sold under the trade name THIOKOL^{®} LP from Torray Fine Chemicals Co., Ltd., including, but not limited to, LP-3, LP-33, LP-23, LP-980, LP-2, LP-32, LP-12, LP-31, LP-55 and LP-56. The THIOKOL LP mercaptan terminated polysulfides have the general structure HS-(C₂H₄-O-CH₂-O-C₂H₄-S-S)ₙC₂H₄-O-CH₂-O-C₂H₄-SH, wherein n is an integer of 5 to 50. Other commercially available mercaptan terminated polysulfides include those sold under the trade name THIOPLAST^{®} G^{™} from AkzoNobel Functional Chemicals GmbH, including, but not limited to, G 10, G 112, G 131, G 1, G 12, G 21, G 22, G 44 and G 4. The THIOPLAST G mercaptan terminated polysulfides are blends of di- and tri-functional mercaptan-functional polysulfides with the difunctional unit having the structure HS-(R-S-S)ₙ-R-SH, wherein n is an integer from 7 to 38, and the tri-functional unit having the structure HS-(R-S-S)ₐ-CH₂-CH((S-S-R)_{c}-SH)-CH₂-(S-S-R)_{b}-SH, wherein R is -C₂H₄-O-CH₂-O-C₂H₄-, a + b + c = n and n is an integer from 7 to 38.

The thiol curing agent may comprise a mercaptan terminated polyether. Commercially available mercaptan terminated polyether include POLYTHIOL QE-340M available from Toray Fine Chemicals Co., Ltd.

The thiol optionally used in the composition of the present invention may have a calculated molecular weight of at least 94 g/mol, such as at least 490 g/mol, and may have a calculated molecular weight of no more than 2,000 g/mol, such as no more than 780 g/mol. The thiol of the present invention may have a calculated molecular weight of 94 g/mol to 2,000 g/mol, such as 490 g/mol to 780 g/mol.

Optionally, the thiol curing agent may be substantially free of disulfide (S-S) bonds. Substantially free, when used with respect to the absence of S-S bonds in the thiol curing agent, means that there is no detectable signal for these bonds above the noise in a Raman Spectrum, such as for example at 500 cm⁻¹.

The curing agent, if present at all, may be present in the composition in an amount of at least 4% by volume based on total volume of the composition, such as at least 8% by volume, and may be present in the composition in an amount of no more than 88% by volume based on total volume of the composition, such as no more than 60% by volume, such as no more than 30% by volume. The curing agent may be present in the composition in an amount of 0% by volume to 88% by volume based on total volume of the composition, such as 4% by volume to 60% by volume, such as 8% by volume to 30% by volume.

### Silyl-Containing Moisture Curable Resin Systems

The silyl-containing polymer may be a single silyl-containing polymer or a combination of silyl-containing polymers. The silyl-containing polymer includes hydrolysable groups attached to a S atom. The silyl-containing functional group within the polymer may comprise an alkyl group, a phenyl group, or combinations thereof. For example, non-limiting examples of suitable substituted hydrolysable groups attached to the S atom contain a Si atom substituted with groups including C₁₋₆ n-alkyl groups, C₁₋₆ branched alkyl groups, substituted C₁₋₆ n-alkyl groups, phenyl groups, or combinations thereof.

Suitable examples of silyl-containing polymers useful in the present invention include sulfur-containing polymers such as substituted polythiolethers, substituted polysulfides, substituted thiol esters, substituted thiol polyacrylates, or combinations thereof. A polyalksilyl-terminated sulfur-containing polymer can be any polymer having at least one sulfur atom in the repeating unit, including, but not limited to, polymeric thiols, polythiols, thioethers, polythioethers, sulfur-containing polyformals, and polysulfides.

Suitable examples of polythioethers include capped polythioethers, i.e., they have terminal groups other than unreacted SH groups, such as -OH, alkyl, such as a C₁₋₁₀ n-alkyl group, alkylene, such as a C₁₋₁₀ n-alkylene group, -NCO, 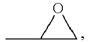 an amine group, or a hydrolyzable functional group, such as a silane group, e.g., 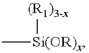 wherein R and R₁ each independently represent an organic group and x is 1, 2, or 3. As indicated, suitable terminal groups include, for example: (i) -OH, such as could be obtained by, for example, (a) reacting an uncapped polythioether of the present invention with a monoxide, such as ethylene oxide, propylene oxide, and the like, in the presence of a base, or (b) reacting an uncapped polythioether of the present invention with an olefinic alcohol, such as, for example, allyl alcohol, or a monovinylether of a diol, such as, for example, ethylene glycol monovinyl ether, propylene glycol monovinyl ether, and the like, in the presence of a free radical initiator; (ii) alkyl, such as could be obtained by reacting an uncapped polythioether of the present invention with an alkylene; (iii) alkylene, such as could be obtained by reacting an uncapped polythioether of the present invention with a diolefin; (iv) -NCO, such as could be obtained by reacting an uncapped polythioether of the present invention with a polyisocyanate; (v) , such as could be obtained by reacting an uncapped polythioether of the present invention with a glycidylolefin, wherein the olefinic group may, for example, be an alkylene group or an oxyalkylene group having from 3 to 20, such as 3 to 5, carbon atoms, specific examples of which include allyl glycidyl ether, 1,2-epoxy-5-hexene, 1,2-epoxy-7-octene, 1,2-epoxy-9-decene, 4-vinyl-1-cyclohexene 1,2-epoxide, butadiene monoepoxide, isoprene monoepoxide, and limonene monoepoxide; or (vi) a hydrolyzable functional group, such as could be obtained by reacting an uncapped polythioether of the present invention with an olefinic alkoxysilane, such as vinyltrimethoxysilane, vinyltriethoxysilane, and vinylmethyldimethoxysilane, among others.

Useful mercapto-terminated polythioethers include those described in WO2011005614A1, pars. [0009]-[0016], and can be produced by reacting a divinyl ether or mixtures of divinyl ethers with an excess of dithiol or mixtures of dithiols. In some examples, the mercapto-terminated polythioether used in the reaction to make the silane-terminated polythioether may be a mercapto-terminated polythioether represented by formula (IX), below. Mercapto-terminated polythioethers useful in the formation of the present invention have a terminal mercapto functionality of at least 2.

H-[S-Ri-S-(CH₂)ₚ-O-(R₂-O-)ₘ-(CH₂)_{q}]ₙ-S-Ri-SH (IX)

In formula IX, Ri may be selected from C₁ to C₁₀ n-alkylene groups, C₂ to C₆ branched alkylene groups, C₆ to C₈ cycloalkylene groups, C₆ to C₁₀ alkylcyloalkylene groups, heterocyclic groups, -[(CH₂)ₚ-X]_{q}-(CH₂)ᵣ- groups, and -[(CH₂)ₚ-X]_{q}-(CH₂)ᵣ- groups in which at least one -CH₂- unit is substituted with a methyl group. R₂ may be selected from C₁ to C₁₀ n-alkylene groups, C₂ to C₆ branched alkylene groups, C₆ to C₈ cycloalkylene groups, C₆ to C₁₄ alkylcyloalkylene groups, heterocyclic groups, and -[(CH₂)ₚ-X]_{q}-(CH₂)ᵣ- groups. X may be selected from O atoms, S atoms, and -NR³- groups. R³ may be selected from H atoms and alkyl groups. Also, in formula IX, m is an integer ranging from 1 to 50, n is an integer ranging from 1 to 60, p is an integer ranging from 2 to 6, q is an integer ranging from 1 to 5, and r is an integer ranging from 2 to 10. In one embodiment, for example, Ri is a C₂ to C₆ alkyl group and R₂ is a C₂ to C₆ alkyl group.

In an example, the mercapto-terminated polythioether component may be represented by a mercapto-terminated polythioether of formula IX, where Ri is -[(CH₂)ₚ-X]_{q}-(CH₂)ᵣ-, p is 2, X is an O atom, q is 2, r is 2, R₂ is an ethylene group, m is 2, and n is 9. In an alternate embodiment of the mercapto-terminated polythioether, m is 1, R₂ is n- butylene, and Ri is not ethylene or n-propylene. In another example, m is 1, p is 2, q is 2, r is 2, R₂ is ethylene, and X is not an O atom.

In examples, the silyl-containing polymer may comprise at least two groups, per molecule, having the formula (X): 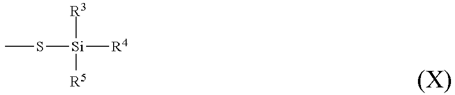 wherein R³, R⁴, and R⁵ are each independently selected from a C₁₋₆ n-alkyl group, a C₁₋₆ branched alkyl group, a substituted C₁₋₆ n-alkyl group, and a phenyl group and may be the same or different.

In examples, the silyl-containing polymer may have an average functionality of 2 to 6.

The silyl-containing polymer may be present in the composition in an amount of at least 1.5% by volume based on total volume of the composition, such as at least 8% by volume, such as at least 15% by volume, such as at least 30% by volume, and may be present in the composition in an amount of no more than 89.5% by volume based on total volume of the composition, such as no more than 80% by volume, such as no more than 70% by volume, such as no more than 60% by volume. The silyl-containing polymer may be present in the composition in an amount of 1.5% by volume to 89.5% by volume based on total volume of the composition, such as 8% by volume to 80% by volume, such as 15% by volume to 70% by volume, such as 30% by volume to 60% by volume.

The curing agent may comprise an acrylate, a vinyl, an isocyanate, an epoxy, an oxidizer, and/or a Michael acceptor such as Michael addition of acyrlate with NH2, SH, and/or ACAC.

As used herein, the term "acrylate-functional" moiety is understood to mean both substituted and non-substituted acrylate-functional ingredients. Suitable acrylate-functional ingredients include those selected from the group including acrylate-functional diluents, acrylate-functional oligomers, acrylate-functional polymers, and mixtures thereof.

Suitable acrylate-functional ingredients include those having the general chemical formula:

R₂₂[OCOCHCH]_{b}R₂₃

where R₂₂ can be selected from the group including acrylic, polyester, polyether, and urethane polymers or diluents, or any hydroxy-functional polymer that is capable of being functionalized with [OCOCHCH], where "b" can be from 1 to 10, and where R₂₃ can be a hydrogen or can be a carbon-containing group having up to about 6 carbon atoms.

Suitable acrylate-functional oligomers include trimethylolpropane triacrylate, tripropyleneglycol triacrylate, dipropylene glycol diacrylate, cyclohexanedimethanol diacrylate, hexanediol diacrylate, pentaerythritol tetraacrylate, di-trimethylolpropane triacrylate, neopentylglycol propoxylate diacrylate, ethoxylated trimethalpropane triacrylate, urethane acrylate oligomer, propoxylated glyceryl triacrylate, and aliphatic tetrafunctional polyester acrylate oligomer. Other suitable acrylate-functional diluents and oligomers include trimethalolpropane triacrylate available, for example, by Cognis of Exton, Pa., under product name Photomer 4006; neopentylglycol propoxylate diacrylate available, for example by Cognis under product names Photomer 4126 and 4127; ethoxylated trimethalpropane triacrylate available, for example, by Cognis under product name Photomer 4129; and propoxylated glyceryl triacrylate available, for example, by Cognis under product name Photomer 4094.

Suitable acrylate-functional polymers include those having an acrylic, polyester, polyether or urethane chemical backbone, including: aliphatic urethane triacrylate available, for example, from Cognis under the product name Photomer 6008; aliphatic urethane acrylate available under the product name Photomer 6893; aliphatic urethane diacrylate available under the product name Photomer 6210; urethane acrylate available, for example, from Sartomer of Exton Pa., under the product name CN968; epoxy acrylate from Sartomer under the product name CN104; epoxy novolac acrylate from Sartomer under the product name CN112; and polyester acrylate from Sartomer under the product name CN292 and from Cognis under the product name Photomer 5432.

Suitable epoxides that may be used in the compositions disclosed herein may comprise monoepoxides, diepoxides, and/or polyepoxides.

Suitable monoepoxides that may be used include monoglycidyl ethers of alcohols and phenols, such as phenyl glycidyl ether, n-butyl glycidyl ether, cresyl glycidyl ether, isopropyl glycidyl ether, glycidyl versatate, for example, CARDURA E available from Shell Chemical Co., and glycidyl esters of monocarboxylic acids such as glycidyl neodecanoate, Epodil 741 available from Evonik, Epodil 746 available from Evonik, ERISYS ^{®} GE-7 available from CVC Thermoset Specialties, and mixtures of any of the foregoing.

Suitable polyepoxides include polyglycidyl ethers of Bisphenol A, such as Epon^{®} 828 and 1001 epoxy resins, and Bisphenol F diepoxides, such as Epon^{®} 862, which are commercially available from Hexion Specialty Chemicals, Inc. Other suitable polyepoxides include polyglycidyl ethers of polyhydric alcohols, polyglycidyl esters of polycarboxylic acids, polyepoxides that are derived from the epoxidation of an olefinically unsaturated alicyclic compound, polyepoxides that are derived from the epoxidation of an olefinically unsaturated nonaromatic cyclic compound, polyepoxides containing oxyalkylene groups in the epoxy molecule, and epoxy novolac resins. Still other suitable epoxy-containing compounds include epoxidized Bisphenol A novolacs, epoxidized phenolic novolacs, epoxidized cresylic novolac, and triglycidyl p-aminophenol bismaleimide. The epoxy-containing compound may also comprise an epoxy-dimer acid adduct. The epoxy-dimer acid adduct may be formed as the reaction product of reactants comprising a diepoxide compound (such as a polyglycidyl ether of Bisphenol A) and a dimer acid (such as a C36 dimer acid). The epoxy-containing compound may also comprise a carboxyl-terminated butadiene-acrylonitrile copolymer modified epoxy-containing compound. The epoxide also may comprise epoxidized castor oil. The epoxide also may comprise an epoxy-containing acrylic, such as glycidyl methacrylate. The epoxide also may comprise an epoxy-containing polymer such as epoxy-containing polyacrylate.

The epoxide also may comprise an epoxy-adduct. The composition may comprise one or more epoxy-adducts. As used herein, the term "epoxy-adduct" refers to a reaction product of one compound that is at least difunctional and comprises at least one epoxide functional group and at least one other compound that does not include an epoxide functional group. For example, the epoxy-adduct may comprise the reaction product of reactants comprising: (1) an epoxy compound, a polyol, and an anhydride; (2) an epoxy compound, a polyol, and a diacid; or (3) an epoxy compound, a polyol, an anhydride, and a diacid.

The epoxy compound used to form the epoxy-adduct may comprise any of the epoxy-containing compounds listed above that may be included in the composition.

The polyol used to form the epoxy-adduct may include diols, triols, tetraols and higher functional polyols. Combinations of such polyols may also be used. The polyols may be based on a polyether chain derived from ethylene glycol, propylene glycol, butylene glycol, hexylene glycol and the like as well as mixtures thereof. The polyol may also be based on a polyester chain derived from ring opening polymerization of caprolactone (referred to as polycaprolactone-based polyols hereinafter). Suitable polyols may also include polyether polyols, polyurethane polyols, polyurea polyols, acrylic polyols, polyester polyols, polybutadiene polyols, hydrogenated polybutadiene polyols, polycarbonate polyols, polysiloxane polyols, and combinations thereof. Polyamines corresponding to polyols may also be used, and in this case, amides instead of carboxylic esters will be formed with the diacids and anhydrides.

The polyol may comprise a polycaprolactone-based polyol. The polycaprolactone-based polyols may comprise diols, triols or tetraols terminated with primary hydroxyl groups. Commercially available polycaprolactone-based polyols include those sold under the trade name Capa^{™} from Perstorp Group, such as, for example, Capa 2054, Capa 2077A, Capa 2085, Capa 2205, Capa 3031, Capa 3050, Capa 3091 and Capa 4101.

The polyol may comprise a polytetrahydrofuran-based polyol. The polytetrahydrofuran-based polyols may comprise diols, triols or tetraols terminated with primary hydroxyl groups. Commercially available polytetrahydrofuran-based polyols include those sold under the trade name Terathane^{®}, such as Terathane^{®} PTMEG 250 and Terathane^{®} PTMEG 650 which are blends of linear diols in which the hydroxyl groups are separated by repeating tetramethylene ether groups, available from Invista. In addition, polyols based on dimer diols sold under the trade names Pripol^{®}, Solvermol^{™} and Empol^{®}, available from Cognis Corporation, or bio-based polyols, such as the tetrafunctional polyol Agrol 4.0, available from BioBased Technologies, may also be utilized.

The anhydride that may be used to form the epoxy-adduct may comprise any suitable acid anhydride known in the art. For example, the anhydride may comprise hexahydrophthalic anhydride and its derivatives (e.g., methyl hexahydrophthalic anhydride); phthalic anhydride and its derivatives (e.g., methyl phthalic anhydride); maleic anhydride; succinic anhydride; trimelletic anhydride; pyromelletic dianhydride (PMDA); 3,3',4,4'-oxydiphthalic dianhydride (ODPA); 3,3',4,4'-benzopherone tetracarboxylic dianhydride (BTDA); and 4,4'-diphthalic (hexafluoroisopropylidene) anhydride (6FDA).

The diacid used to form the epoxy-adduct may comprise any suitable diacid known in the art. For example, the diacids may comprise phthalic acid and its derivates (e.g., methyl phthalic acid), hexahydrophthalic acid and its derivatives (e.g., methyl hexahydrophthalic acid), maleic acid, succinic acid, adipic acid, and the like.

The epoxy-adduct may comprise the reaction product of reactants comprising a diol, a monoanhydride or a diacid, and a diepoxy compound, wherein the mole ratio of diol, monoanhydride (or diacid), and diepoxy compounds in the epoxy-adduct may vary from 0.5:0.8:1.0 to 0.5:1.0:6.0.

The epoxy-adduct may comprise the reaction product of reactants comprising a triol, a monoanhydride or a diacid, and a diepoxy compound, wherein the mole ratio of triol, monoanhydride (or diacid), and diepoxy compounds in the epoxy-adduct may vary from 0.5:0.8:1.0 to 0.5:1.0:6.0.

The epoxy-adduct may comprise the reaction product of reactants comprising a tetraol, a monoanhydride or a diacid, and a diepoxy compound, wherein the mole ratio of tetraol, monoanhydride (or diacid), and diepoxy compounds in the epoxy-adduct may vary from 0.5:0.8:1.0 to 0.5:1.0:6.0.

The epoxide may have an epoxy equivalent weight of at least 90 g/eq, such as at least 140 g/eq, such as at least 188 g/eq, and may have an epoxy equivalent weight of no more than 2,000 g/eq, such as no more than 1,000 g/eq, such as no more than 500 g/eq. The epoxide may have an epoxy equivalent weight of 90 g/eq to 2,000 g/eq, such as 140 g/eq to 1,000 g/eq, such as 188 g/eq to 500 g/eq.

The epoxide may have at least one functional group that is different from the epoxide functional group(s).

The curing agent may be Michael acceptor, such as a compound having at least one terminal Michael acceptor group. As used herein, a "Michael acceptor" refers to an activated alkene, such as an alkenyl group proximate to an electron-withdrawing group such as a ketone, nitro, halo, nitrile, carbonyl, or nitro group. Michael acceptors are well known in the art. A "Michael acceptor group" refers to an activated alkenyl group and an electron-withdrawing group. A "Michael acceptor compound" refers to a compound comprising at least one Michael acceptor group. In non-limiting examples, a Michael acceptor group is selected from a vinyl ketone, a vinyl sulfone, a quinone, an enamine, a ketimine, an aldimine, an oxazolidine, and an acrylate. Other examples of Michael acceptor compounds are disclosed in Mather et al., Prog. Polym. Sci. 2006, 31, 487-53, and include acrylate esters, acrylonitrile, acrylamides, maleimides, alkyl methacrylates, and cyanoacrylates. Other Michael acceptor compounds include vinyl ketones, α,β-unsaturated aldehydes, vinyl phosphonates, acrylonitrile, vinyl pyridines, azo compounds, β-keto acetylenes and acetylene esters. In other examples, a Michael acceptor group is derived from a vinyl ketone and has the structure of the formula -S(O)₂-C(R)₂=CH₂, where each R is independently selected from hydrogen, fluorine, and C₁₋₃ alkyl. In examples, the Michael acceptor compound or Michael acceptor group may include acrylates and acrylics.

In examples, a Michael acceptor compound comprises a vinyl sulfone including a mixture of different types of vinyl sulfones and/or having different functionalities of Michael acceptor groups. In examples in which the Michael acceptor compound comprises a mixture of vinyl sulfones having different functionalities, the average functionality of the mixture of vinyl sulfones can be 2 to 6, such as 2 to 3. As used herein, the term "average functionality" means the sum of the functionality per component divided by the number of components weighted by their mole ratio.

Michael acceptor groups are well known in the art. In examples, a Michael acceptor group comprises an activated alkene, such as an alkenyl group proximate to an electron-withdrawing group such as an enone, nitro, halo, nitrile, carbonyl, or nitro group. In certain examples, a Michael acceptor group is selected from a vinyl ketone, a vinyl sulfone, a quinone, an enamine, a ketimine, an aldimine, and an oxazolidine. In examples, each of the Michael acceptor groups may be the same and in other examples, at least some of the Michael acceptor groups may be different.

As discussed above, the curing agent may comprise an isocyanate. The isocyanate of the present invention can be monomeric or polymeric containing one or more isocyanate functional groups (-N=C=O).

Suitable monomeric isocyanate-containing compounds include p-tolyl isocyanate, hexyl isocyanate, phenyl isocyanate, isocyanate ethyl arylate, methacryloyloxyethyl isocyanate, 3-(triethyoxysilyl)propyl isocyanate.

Suitable isocyanate-containing compounds that may be used in the compositions described herein may comprise a polyisocyanate. For example, the polyisocyanate may comprise C₂-C₂₀ linear, branched, cyclic, aliphatic and/or aromatic polyisocyanates.

Aliphatic polyisocyanates may include (i) alkylene isocyanates, such as: trimethylene diisocyanate; tetramethylene diisocyanate, such as 1,4-tetramethylene diisocyanate; pentamethylene diisocyanate, such as 1,5-pentamethylene diisocyanate and 2-methyl-1,5-pentamethylene diisocyanate; hexamethylene diisocyanate ("HDI"), commercially available as Demodur XP 2617 (Covestro), such as 1,6-hexamethylene diisocyanate and 2,2,4- and 2,4,4-trimethylhexamethylene diisocyanate, or mixtures thereof; heptamethylene diisocyanate, such as 1,7-heptamethylene diisocyanate; propylene diisocyanate, such as 1,2-propylene diisocyanate; butylene diisocyanate, such as 1,2-butylene diisocyanate, 2,3-butylene diisocyanate, 1,3-butylene diisocyanate, and 1,4-butylene diisocyanate; ethylene diisocyanate; decamethylene diisocyanate, such as 1,10-decamethylene diisocyanate; ethylidene diisocyanate; and butylidene diisocyanate. Aliphatic polyisocyanates may also include (ii) cycloalkylene isocyanates, such as: cyclopentane diisocyanate, such as 1,3-cyclopentane diisocyanate; cyclohexane diisocyanate, such as 1,4-cyclohexane diisocyanate, 1,2-cyclohexane diisocyanate, isophorone diisocyanate ("IPDI"), methylene bis(4-cyclohexylisocyanate) ("HMDI"); and mixed aralkyl diisocyanates such as tetramethylxylyl diisocyanates, such as meta-tetramethylxylylene diisocyanate (commercially available as TMXDI^{®} from Allnex SA). Dimers, trimers, oligomers, and polymers of the above-mentioned polyisocyanates also may be used as the cyclotrimer of 1,6 hexamethylene diisocyanate (also known as the isocyanate trimer of HDI, commercially available as Desmodur N3300 (Covestro)).

Aromatic polyisocyanates may include (i) arylene isocyanates, such as: phenylene diisocyanate, such as m-phenylene diisocyanate, p-phenylene diisocyanate, and chlorophenylene 2,4-diisocyanate; naphthalene diisocyanate, such as 1,5-naphthalene diisocyanate and 1,4-naphthalene diisocyanate. Aromatic polyisocyanates may also include (ii) alkarylene isocyanates, such as: methylene-interrupted aromatic diisocyanates, such as 4,4'-diphenylene methane diisocyanate ("MDI"), and alkylated analogs such as 3,3'-dimethyl-4,4'-diphenylmethane diisocyanate, and polymeric methylenediphenyl diisocyanate; toluene diisocyanate ("TDI"), such as 2,4-tolylene or 2,6-tolylene diisocyanate, or mixtures thereof, bitoluene diisocyanate; and 4,4-toluidine diisocyanate; xylene diisocyanate; dianisidine diisocyanate; xylylene diisocyanate; and other alkylated benzene diisocyanates.

Polyisocyanates may also include: triisocyanates, such as triphenyl methane-4,4',4"-triisocyanate, 1,3,5-triisocyanato benzene, and 2,4,6-triisocyanato toluene; tetraisocyanates, such as 4,4'-diphenyldimethyl methane-2,2',5,5'-tetraisocyanate; and polymerized polyisocyanates, such as tolylene diisocyanate dimers and trimers and the like.

The isocyanate compound may have at least one functional group that is different from the isocyanate functional group(s).

The curing agent may comprise an oxidizer. Suitable oxidizers that may be used in the compositions of the present invention may comprise inorganic or organic oxidizers. For example, the oxidant may comprise a reactive metal oxide or peroxide. As used herein, a "reactive" metal oxide or peroxide is a metal oxide or peroxide that can promote an oxidation pathway in another species in the composition. Suitable examples of reactive metal oxides or peroxides include tellurium oxide, ferrous or ferric oxide, antimony(III) oxide, cobalt oxide, calcium oxide, barium oxide, selenium dioxide, iron dioxide, lead oxide, lead dioxide, lead peroxide, manganese dioxide, sodium chromate, sodium dichromate, sodium perborate, sodium perborate monohydrate, sodium perchlorate, sodium percarbonate, sodium metaborate, potassium chromate, potassium dichromate, potassium permanganate, potassium decarbonate, calcium dioxide, calcium peroxide, barium peroxide, magnesium peroxide, hydrogen peroxide, strontium peroxide, lithium peroxide, zinc peroxide, zinc chromate, barium oxide, alkaline dichromate, or combinations thereof. The oxidizer may comprise an organic oxidizing agent such as benzoyl peroxide, dicumyl peroxide, cumene hydroperoxide, t-butyl hydroperoxide, t-butyl perbenzoate sodium peracetate, and urea peroxide, nitrobenzene, dinitrobenzene and p-quinone dioxime, or combinations thereof.

Suitable vinyls include those described in US Patent No. 8,901,256, at col. 5, 11. 15-col. 6, ll. 6. For example, suitable divinyl ethers include, for example, divinyl ethers having formula (XI):

CH₂=CH-O-(-R-O)ₘ-CH=CH₂, (XI)

where R in formula (XI) is selected from a C₂₋₆ n-alkylene group, a C₂₋₆ branched alkylene group, a C₆₋₈ cycloalkylene group, a C₆₋₁₀ alkylcycloalkylene group, and -[(-CH₂-)ₚ- O-]_{q}- (-CH2-)ᵣ-, where p is an integer ranging from 2 to 6, q is an integer ranging from 1 to 5, and r is an integer ranging from 2 to 10. In certain embodiments of a divinyl ether of formula (XI), R is a C₂₋₆ n-alkylene group, a C₂₋₆ branched alkylene group, a C₆₋₈ cycloalkylene group, a C₆₋₁₀ alkylcycloalkylene group, and in certain embodiments, -[(-CH₂-)ₚ- O-]_{q}- (-CH2-)ᵣ-. Suitable divinyl ethers include, for example, compounds having at least one oxyalkylene group, such as from 1 to 4 oxyalkylene groups, i.e., compounds in which m in formula (XI) is an integer ranging from 1 to 4. In certain embodiments, m in formula (XI) is an integer ranging from 2 to 4. It is also possible to employ commercially available divinyl ether mixtures that are characterized by a non-integral average value for the number of oxyalkylene units per molecule. Thus, m in formula (XI) can also take on rational number values ranging from 0 to 10.0, such as from 1.0 to 10.0, from 1.0 to 4.0, or from 2.0 to 4.0. Examples of suitable divinyl ethers include, for example, divinyl ether, ethylene glycol divinyl ether (EG-DVE) (R in formula (XI) is ethylene and m is 1), butanediol divinyl ether (BD-DVE) (R in formula (XI) is butylene and m is 1), hexanediol divinyl ether (HD-DVE) (R in formula (XI) is hexylene and m is 1), diethylene glycol divinyl ether (DEG-DVE) (R in formula (XI) is ethylene and m is 2), triethylene glycol divinyl ether (R in formula (XI) is ethylene and m is 3), tetraethylene glycol divinyl ether (R in formula (XI) is ethylene and m is 4), cyclohexanedimethanol divinyl ether, polytetrahydrofuryl divinyl ether; trivinyl ether monomers, such as trimethylolpropane trivinyl ether; tetrafunctional ether monomers, such as pentaerythritol tetravinyl ether, and combinations of two or more of such polyvinyl ether monomers. A polyvinyl ether may have one or more pendant groups selected from alkyl groups, hydroxyl groups, alkoxy groups, and amine groups. In certain embodiments, divinyl ethers in which R in formula (XI) is C₂₋₆ branched alkylene may be prepared by reacting a polyhydroxy compound with acetylene. Examples of divinyl ethers of this type include compounds in which R in formula (XI) is an alkyl-substituted methylene group such as -CH(CH)- (for example "PLURIOL^{®}" blends such as PLURIOL^{®}E-200 divinyl ether (BASF Corp., Parsippany, N.J.), for which R in formula (XI) is ethylene and m is 3.8) or an alkyl-substituted ethylene (for example CH₂CH(CH₃) such as "DPE polymeric blends including DPE-2 and DPE-3 (International Specialty Products, Wayne, N.J.)).

Other useful divinylethers include compounds in which R in formula (XI) is polytetrahydrofuryl (poly-THF) or polyoxyalkylene, such as those having an average of about 3 monomer units.

The curing agent may be present in the composition in an amount of at least 0.5% by volume based on total volume of the composition, such as at least 4% by volume, such as at least 8% by volume, and may be present in an amount of no more than 88.5% by volume based on total volume of the composition, such as no more than 60% by volume, such as no more than 30% by volume. The curing agent may be present in the composition in an amount of 0.5% by volume to 88.5% by volume based on total volume of the composition, such as 4% by volume to 60% by volume, such as 8% by volume to 30% by volume.

### Imine-Containing Moisture-Curable Resin Systems

Suitable examples of imines useful in the present invention include ketimines, aldimines, or combinations thereof.

Ketimines are typically prepared by the reaction of ketones with amines. Examples of ketones may include: acetone, methyl ethyl ketone, methyl isopropyl ketone, methyl isobutyl ketone, diethyl ketone, benzyl methylketone, diisopropyl ketone, cyclopentanone, and cyclohexanone. Examples of amines may include: ethylene diamine, ethylene triamine, propylene diamine, tetramethylene diamine, 1,6-hexamethylene diamine, bis(6-aminohexyl) ether, tricyclodecane diamine, N, N'-dimethyldiethyltriamine, cyclohexyl-1,2,4-triamine, cyclohexyl-1,2,4,5-tetraamine, 3,4,5-triaminopyran, 3,4-diamino furan and cycloaliphatic diamines such as those having the following structures:

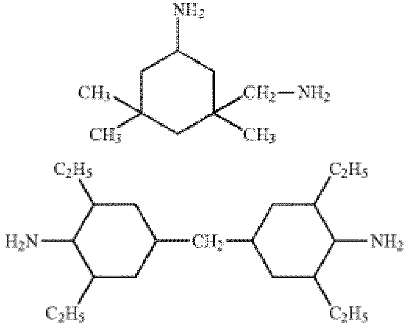

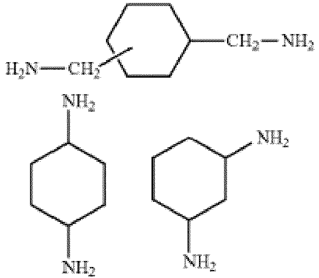

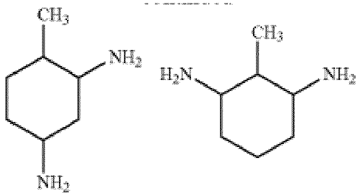

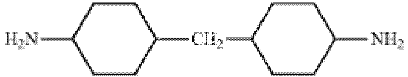

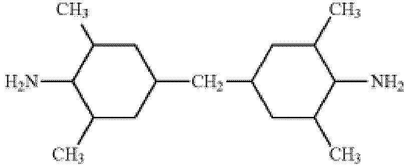

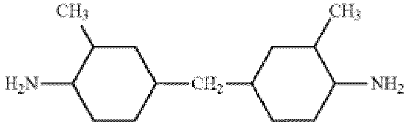

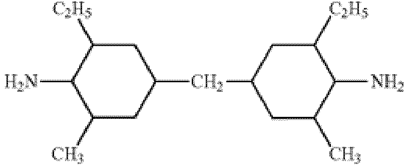

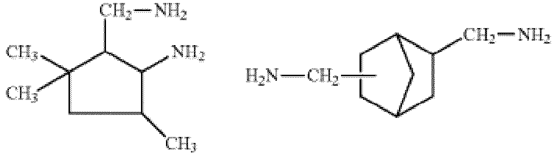

Aldimines are typically prepared by the reaction of aldehydes with amines. Examples of aldehydes may include acetaldehyde, formaldehyde, propionaldehyde, isobutyraldehyde, n-butyraldehyde, heptaldehyde and cyclohexyl aldehydes. Examples of amines may include: ethylene diamine, ethylene triamine, propylene diamine, tetramethylene diamine, 1,6-hexamethylene diamine, bis(6-aminohexyl) ether, tricyclodecane diamine, N, N'-dimethyldiethyltriamine, cyclohexyl-1,2,4-triamine, cyclohexyl-1,2,4,5-tetraamine, 3,4,5-triaminopyran, 3,4-diamino furan and cycloaliphatic diamines such as those having the following structures:

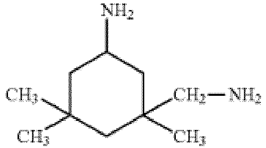

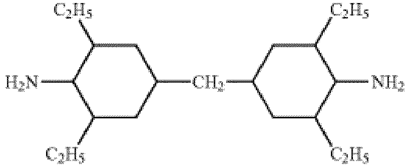

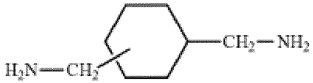

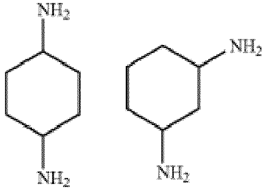

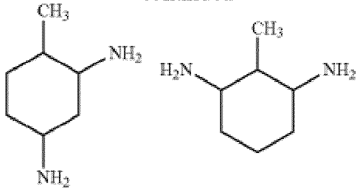

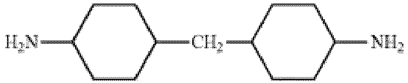

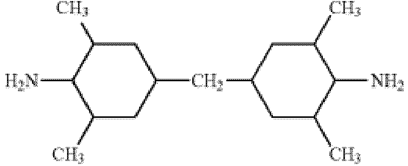

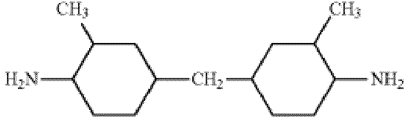

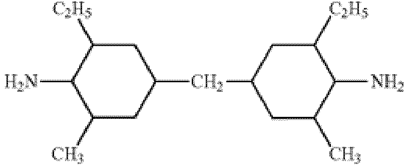

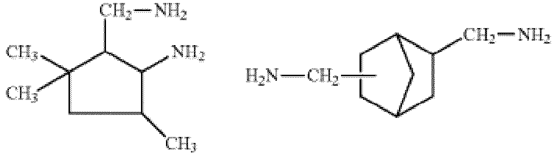

The imine may be present in the composition in an amount of at least 1.5% by volume based on total volume of the composition, such as at least 8% by volume, such as at least 15% by volume, such as at least 30% by volume, and may be present in the composition in an amount of no more than 89.5% by volume based on total volume of the composition, such as no more than 80% by volume, such as no more than 70% by volume, such as no more than 60% by volume. The imine may be present in the composition in an amount of 1.5% by volume to 89.5% by volume based on total volume of the composition, such as 8% by volume to 80% by volume, such as 15% by volume to 70% by volume, such as 30% by volume to 60% by volume.

The curing agent may comprise an acetoacetate, an acrylate, an isocyanate, and/or an epoxy.

Suitable acrylates, isocyanates, and epoxies useful in the compositions are described above.

As discussed above, the curing agent may comprise an acetoacetate functional ingredient. As used herein, the term "acetoacetate-functional ingredient" is understood to mean both substituted and non-substituted acetoacetate-functional ingredients. Suitable acetoacetate-functional ingredients include those selected from the group including acetoacetate-functional diluents, acetoacetate-functional oligomers, acetoacetate-functional polymers, and mixtures thereof.

Suitable acetoacetate-functional ingredients include those having the general chemical formula (XII)

R₂₀[OCOCH₂COCH₂]ₐR₂₁ (XII)

where R₂₀ can be selected from the group including acrylic, polyester, polyether, and urethane polymers or diluents, or any hydroxy-functional polymer that is capable of being functionalized with [OCOCH₂COCH₂] ₐR₂₁, where a can be from 1 to 10, and where R₂₁ can be hydrogen or can be a carbon-containing group having up to about 6 carbon atoms.

Suitable acetoacetate-functional diluents and oligomers include tris acetoacetylated trimethylolpropane (TMP) (available, for example, from King Industries of Norwalk, Connecticut under the product name K-Flex such as K-Flex XM-7301), diaacetoacetylated 2-butyl-2-ethyl-1,3-propanediol (BEPD), diacetoacetylated neopentyl glycol (NPG), or any hydroxy-functional diluent that is easily transacetoacetylated, e.g., transesterfied with tertiary butyl acetoacetate (TBAA) with elimination of tertiary butanol, with tributylammonium acetate.

Suitable acetoacetate-functional polymers include those having an acrylic, polyester, polyether, or urethane chemical backbone. Exemplary acetoacetate-functional acrylic polymers include those available, for example, from Akzo Nobel of the Netherlands under the product name Setalux such as Setalux 7202 XX 50; from Guertin Bros., of Canada under the product name CSA such as CSA 582 (85% acetoacetate-functional acrylic polymer having an equivalent weight of 600); and from Guertin Bros., under the product name GP Acryl, e.g., GPAcryl 513, GPAcryl 550, GPAcryl 597, GPAcryl 613, GPAcryl 766; and from Nuplex of Auckland, New Zealand under the product name ACR such as ACR441XD. Suitable acetoacetate-functional polymers include acetoacetate-functional polyester polymers such as those available, for example, from Guertin Bros., under the product name GPEster, for example GPEster 766.

In addition to those acetoacetate-functional polymers described above, any hydroxyl-functional polymer, be it an acrylic, polyester, urethane, alkyd and the like, that can be converted into an acetoacetate-functional polymer with TBBA are acceptable for use in the compositions of the present invention. Example acetoacetate-functional urethane polymers include thosethat are bonded to acetoacetate, such as urethane diols and urethane triols.

The curing agent may be present in the composition in an amount of at least 0.5% by volume based on total volume of the composition, such as at least 4% by volume, such as at least 8% by volume, and may be present in an amount of no more than 88.5% by volume based on total volume of the composition, such as no more than 60% by volume, such as no more than 30% by volume. The curing agent may be present in the composition in an amount of 0.5% by volume to 88.5% by volume based on total volume of the composition, such as 4% by volume to 60% by volume, such as 8% by volume to 30% by volume.

### Filler Materials

In addition to the moisture curable resin systems described herein, the present invention also comprises a thermally conductive filler package comprising particles of a thermally conductive, electrically insulative filler material (referred to herein as "TC/EI filler material" and described in more detail below). The TC/EI filler material may comprise organic or inorganic material and may comprise particles of a single type of filler material or may comprise particles of two or more types of TCEI filler materials. That is, the thermally conductive filler package may comprise particles of a first TC/EI filler material and may further comprise particles of at least a second (i.e., a second, a third, a fourth, etc.) TC/EI filler material that is different from the first TC/EI filler material. In an example, the particles of the first TC/EI filler material may have an average particle size that is at least one order of magnitude greater than an average particle size of the particles of the second TC/EI filler material, such as at least two orders of magnitude greater, such as at least three orders of magnitude greater, wherein the particle sizes may be measured by methods known to those skilled in the art, for example, using a scanning electron microscope (SEM). For example, powders may be dispersed on segments of carbon tape attached to aluminum stubs and coated with Au/Pd for 20 seconds. Samples then may be analyzed in a Quanta 250 FEG SEM under high vacuum (accelerating voltage 10kV and spot size 3.0), measuring 30 particles from three different areas to provide an average particle size for each sample. One skilled in the art will recognize that there can be variations in this procedure that retain the essential elements of microscopic imaging and averaging of representative size. As used herein with respect to types of filler material, reference to "first," "second", etc. is for convenience only and does not refer to order of addition to the filler package .

Optionally, as discussed in more detail below, the filler package also may comprise particles of thermally conductive, electrically conductive filler material (referred to herein as "TC/EC" filler material) and/or particles of non-thermally conductive, electrically insulative filler material (referred to herein as "NTC/EI" filler material). The filler materials may be organic or inorganic.

The TC/EC filler material may comprise particles of a single type of filler material or may comprise particles of two or more types of TC/EC filler materials. That is, the thermally conductive filler package may comprise particles of a first TC/EC filler material and may further comprise particles of at least a second (i.e., a second, a third, a fourth, etc.) TC/EC filler material that is different from the first TC/EC filler material. In an example, the particles of the first TC/EC filler material may have an average particle size that is at least one order of magnitude greater than an average particle size of the particles of the second TC/EC filler material, such as at least two orders of magnitude greater, such as at least three orders of magnitude greater, wherein the particle sizes may be measured, for example, using a SEM as described above.

Likewise, the NTC/EI filler material may comprise particles of a single type of filler material or may comprise particles of two or more types of NTC/EI filler materials. That is, the thermally conductive filler package may comprise particles of a first NTC/EI filler material and may further comprise particles of at least a second (i.e., a second, a third, a fourth, etc.) NTC/EI filler material that is different from the first NTC/EI filler material. In an example, the particles of the first NTC/EI filler material may have an average particle size that is at least one order of magnitude greater than an average particle size of the particles of the second NTC/EI filler material, such as at least two orders of magnitude greater, such as at least three orders of magnitude greater, wherein the particle sizes may be measured, for example, using a SEM as described above.

Particles of filler used in the thermally conductive filler package may have a reported Mohs hardness of at least 1 (based on the Mohs Hardness Scale), measured according to ASTM D2240, such as at least 2, such as at least 3, and may have a reported Mohs hardness of no more than 10, such as no more than 8, such as no more than 7. Particles of filler used in the thermally conductive filler package may have a reported Mohs hardness of 1 to 10, such as 2 to 8, such as 3 to 7.

Particles of filler material used in the thermally conductive filler package may have a reported average particle size in at least one dimension of at least 0.01 µm, as reported by the manufacturer, such as at least 2 µm, such as at least 10 µm, and may have a reported average particle size in at least one dimension of no more than 500 µm as reported by the manufacturer, such as no more than 400 µm, such as no more than 300 µm, such as no more than 100 µm. The particles of filler material used in the thermally conductive filler package may have a reported average particle size in at least one dimension of 0.01 µm to 500 µm as reported by the manufacturer, such as 0.1 µm to 400 µm, such as 2 µm to 300 µm, such as 10 µm to 100 µm. Suitable methods of measuring average particle size include measurement using an instrument such as the Quanta 250 FEG SEM or an equivalent instrument.

Particles of filler material used in the thermally conductive filler package may comprise a plurality of particles each having, for example, a platy, spherical, or acicular shape, and agglomerates thereof. As used herein, "platy" refers to a two-dimensional material having a substantially flat surface and that has a thickness in one direction that is less than 25% of the largest dimension.

Particles of filler material used in the thermally conductive filler package may be thermally conductive. The particles of thermally conductive filler material may have a thermal conductivity of at least 5 W/m·K at 25°C (measured according to ASTM D7984), such as at least 18 W/m·K, such as at least 55 W/m·K, and may have a thermal conductivity of no more than 3,000 W/m·K at 25°C, such as no more than 1,400 W/m·K, such as no more than 450 W/m·K. The particles of a thermally conductive filler material may have a thermal conductivity of 5 W/m·K to 3,000 W/m·K at 25°C (measured according to ASTM D7984), such as 18 W/m·K to 1,400 W/m·K, such as 55 W/m·K to 450 W/m·K.

Particles of filler material used in the thermally conductive filler package may be non-thermally conductive. The particles of non-thermally conductive filler material may have a thermal conductivity of less than 5 W/m·K at 25°C (measured according to ASTM D7984), such no more than 3 W/m·K, such as no more than 1 W/mK, such as no more than 0.1 W/mK, such as no more than 0.05 W/mK, such as 0.02 W/m·K at 25°C to 5 W/m·K at 25°C. Thermal conductivity may be measured as described above.

Particles of filler material used in the thermally conductive filler package may be electrically insulative. The particles of electrically insulative filler material may have a volume resistivity of at least 1 Ω·m (measured according to ASTM D257), such as at least 10 Ω·m, such as at least 100 Ω·m.

Particles of filler material used in the thermally conductive filler package may be electrically conductive. The particles of electrically conductive filler material may have a volume resistivity of less than 1 Ω·m (measured according to ASTM D257), such as less than 0.1 Ω·m.

The filler package is present in the composition in an amount of at least 10% by volume based on total volume of the composition, such as at least 30% by volume, and is present in the composition in an amount of no more than 98% by volume based on total volume of the composition, such as no more than 75% by volume. The thermally conductive filler package is present in the composition in an amount of 10% by volume to 98% by volume based on total volume of the composition, such as 30% by volume to 75% by volume.

As noted above, the thermally conductive filler package comprises particles of TC/EI filler material.

Suitable TC/EI filler materials include boron nitride (for example, commercially available as CarboTherm from Saint-Gobain, as CoolFlow and PolarTherm from Momentive, and as hexagonal boron nitride powder available from Panadyne), silicon nitride, or aluminum nitride (for example, commercially available as aluminum nitride powder available from Micron Metals Inc., and as Toyalnite from Toyal), metal oxides such as aluminum oxide (for example, commercially available as Microgrit from Micro Abrasives, as Nabalox from Nabaltec, as Aeroxide from Evonik, and as Alodur from Imerys), magnesium oxide, beryllium oxide, silicon dioxide, titanium oxide, zinc oxide, nickel oxide, copper oxide, or tin oxide, metal hydroxides such as aluminum trihydrate, aluminum hydroxide or magnesium hydroxide, arsenides such as boron arsenide, carbides such as silicon carbide, minerals such as agate and emery, ceramics such as ceramic microspheres (for example, commercially available from Zeeospheres Ceramics or 3M), silicon carbide, and diamond. These fillers can also be surface modified, such as PYROKISUMA 5301K available from Kyowa Chemical Industry Co., Ltd. These thermally conductive fillers may be used alone or in a combination of two or more.

The TC/EI filler particles may be present in an amount of at least 50% by volume based on total volume of the filler package, such as at least 60% by volume, such as at least 70% by volume, such as at least 80% by volume, such as at least 90% by volume, and may be present in an amount of no more than 100% by volume based on total volume of the filler package, such as no more than 90% by volume, such as no more than 80% by volume. The TC/EI filler particles may be present in an amount of 50% by volume to 100% by volume based on total volume of the filler package, such as 60% by volume to 100% by volume, such as 70% by volume to 100% by volume, such as 80% by volume to 100% by volume, such as 90% by volume to 100% by volume, such as 50% by volume to 90% by volume, such as 60% by volume to 90% by volume, such as 70% by volume to 90% by volume, such as 80% by volume to 90% by volume, such as such as 50% by volume to 80% by volume, such as 60% by volume to 80% by volume, such as 70% by volume to 80% by volume, such as 50% by volume to 70% by volume, such as 50% by volume to 60% by volume, such as 60% by volume to 70% by volume.

The filler package may comprise thermally stable filler materials. In an example, at least a portion of the TC/EI filler particles may be thermally stable. For example, at least 0.1% by volume of the TC/EI filler particles may be thermally stable based on total volume of the TC/EI fillers present in the thermally conductive filler package, such as at least 1% by volume, such as at least 10% by volume such as at least 15% by volume, such as at least 20% by volume, such as at least 25% by volume, such as at least 30% by volume, such as at least 35% by volume, such as at least 40% by volume, such as at least 45% by volume, such as at least 50% by volume, such as at least 55% by volume, such as at least 60% by volume, such as at least 65% by volume, such as at least 70% by volume, such as least 75% by volume, such as at least 80% by volume, such as at least 85% by volume, such as at least 90% by volume, such as at least 91% by volume, such as at least 92% by volume, such as at least 93% by volume, such as at least 94% by volume, such as at least 95% by volume, such as at least 96% by volume, such as at least 97% by volume, such as at least 98% by volume, such as at least 99% by volume, such as 100 % by volume. For example, 0.1% by volume to 100% by volume of the TC/EI filler particles may be thermally stable based on total volume of the TC/EI fillers present in the thermally conductive filler package, such as 1% by volume to 90% by volume, such as 10% by volume to 80% by volume, such as 20% by volume to 70% by volume, such as 30% by volume to 60% by volume, such as 90% by volume to 100% by volume, such as 93% by volume to 98% by volume.

In an example, the composition may comprise at least a portion of TC/EI filler particles that are thermally unstable. For example, at least 0.1% by volume of the TC/EI filler particles may be thermally unstable based on total volume of the TC/EI fillers present in the thermally conductive filler package, such as at least 1% by volume, such as at least 10% by volume such as at least 15% by volume, such as at least 20% by volume, such as at least 25% by volume, such as at least 30% by volume, such as at least 35% by volume, such as at least 40% by volume, such as at least 45% by volume, such as at least 50% by volume, such as at least 55% by volume, such as at least 60% by volume, such as at least 65% by volume, such as at least 70% by volume, such as least 75% by volume, such as at least 80% by volume, such as at least 85% by volume, such as at least 90% by volume, such as at least 91% by volume, such as at least 92% by volume, such as at least 93% by volume, such as at least 94% by volume, such as at least 95% by volume, such as at least 96% by volume, such as at least 97% by volume, such as at least 98% by volume, such as at least 99% by volume, such as 100% by volume. For example, 0.1% by volume to 100% by volume of the TC/EI filler particles may be thermally stable based on total volume of the TC/EI fillers present in the thermally conductive filler package, such as 1% by volume to 90% by volume, such as 10% by volume to 80% by volume, such as 20% by volume to 70% by volume, such as 30% by volume to 60% by volume, such as 90% by volume to 100% by volume, such as 93% by volume to 98% by volume. In other examples, no more than 10% by volume of the TC/EI filler particles may be thermally unstable based on total volume of the TC/EI fillers present in the thermally conductive filler package, such as no more than 9% by volume, such as no more than 8% by volume, such as no more than 7% by volume, such as no more than 6% by volume, such as no more than 5% by volume, such as no more than 4% by volume, such as no more than 3% by volume, such as no more than 2% by volume, such as no more than 1% by volume. For example, up to 10% by volume of the TC/EI filler particles may be thermally unstable based on total volume of the TC/EI fillers present in the thermally conductive filler package, such as 2% by volume to 7% by volume.

Suitable thermally stable TC/EI fillers include boron nitride, silicon nitride, or aluminum nitride, arsenides such as boron arsenide, metal oxides such as aluminum oxide, magnesium oxide, beryllium oxide, silicon dioxide, titanium oxide, zinc oxide, nickel oxide, copper oxide, or tin oxide, carbides such as silicon carbide, minerals such as agate and emery, ceramics such as ceramic microspheres, and diamond. The silica (SiO₂) may comprise fumed silica which comprises silica that has been treated with a flame to form a three-dimensional structure. The fumed silica may be untreated or surface treated with a siloxane, such as, for example, polydimethylsiloxane. Exemplary non-limiting commercially available fumed silica includes products solder under the trade name AEROSIL^{®}, such as AEROSIL^{®} R 104, AEROSIL^{®} R 106, AEROSIL^{®} R 202, AEROSIL^{®} R 208, AEROSIL^{®} R 972 commercially available from Evonik Industries and products sold under the trade name HDK^{®} such as HDK^{®} H17 and HDK^{®} H18 commercially available from Wacker Chemie AG. These fillers can also be surface modified, such as PYROKISUMA 5301K available from Kyowa Chemical Industry Co., Ltd. These thermally stable, TC/EI fillers may be used alone or in a combination of two or more.

Suitable thermally unstable TC/EI filler materials include metal hydroxides such as aluminum trihydrate, aluminum hydroxide or magnesium hydroxide. These fillers can also be surface modified, such as Hymod^{®}M9400 SF available from J.M. Huber Corporation. These thermally unstable, TC/EI fillers may be used alone or in a combination of two or more.

As noted above, the thermally conductive filler package may comprise particles of TC/EC filler material.

Suitable TC/EC filler materials include metals such as silver, zinc, copper, gold, or metal coated hollow particles, carbon compounds such as, graphite (such as Timrex commercially available from Imerys or ThermoCarb commercially available from Asbury Carbons), carbon black (for example, commercially available as Vulcan from Cabot Corporation), carbon fibers (for example, commercially available as milled carbon fiber from Zoltek), graphene and graphenic carbon particles (for example, xGnP graphene nanoplatelets commercially available from XG Sciences, and/or for example, the graphene particles described below), carbonyl iron, copper (such as spheroidal powder commercially available from Sigma Aldrich), zinc (such as Ultrapure commercially available from Purity Zinc Metals and Zinc Dust XL and XLP available from US Zinc), and the like. Examples of "graphenic carbon particles" include carbon particles having structures comprising one or more layers of one-atom-thick planar sheets of sp2-bonded carbon atoms that are densely packed in a honeycomb crystal lattice. The average number of stacked layers may be less than 100, for example, less than 50. The average number of stacked layers may be 30 or less, such as 20 or less, such as 10 or less, such as 5 or less. The graphenic carbon particles may be substantially flat; however, at least a portion of the planar sheets may be substantially curved, curled, creased, or buckled. The particles typically do not have a spheroidal or equiaxed morphology. Suitable graphenic carbon particles are described in U.S. Publication No. 2012/0129980, at paragraphs [0059]-[0065]. Other suitable graphenic carbon particles are described in U.S. Pat. No. 9,562,175, at 6:6 to 9:52. As used herein, the term "substantially flat" means planar; "curved" or "curled" materials deviate from planarity by having a non-zero curvature; and "creased" or "buckled" indicates that at least a portion of the area is thicker than one sheet, such that the plane is doubled or folded upon itself.

The TC/EC filler particles, if present at all, may be present in an amount of no more than 50% by volume based on total volume of the filler package, such as no more than 40% by volume, such as no more than 30% by volume, such as no more than 20% by volume, such as no more than 10% by volume, and may be present in an amount of at least 0.1% by volume based on total volume of the filler package, such as at least 0.5% by volume, such as at least 1% by volume, such as at last 5% by volume, such as at least 10% by volume. The TC/EC filler particles may be present in an amount of 0.1% by volume to 50% by volume based on total volume of the filler package, such as 0.1% by volume to 40% by volume, such as 0.1% by volume to 30% by volume, such as 0.1% by volume to 20% by volume, such as 0.1% by volume to 10% by volume, such as 0.5% by volume to 50% by volume, such as 0.5% by volume to 40% by volume, such as 0.5% by volume to 30% by volume, such as 0.5% by volume to 20% by volume, such as 0.5% by volume to 10% by volume, such as 1% by volume to 50% by volume, such as 1% by volume to 40% by volume, such as 1% by volume to 30% by volume, such as 1% by volume to 20% by volume, such as 1% by volume to 10% by volume, such as 5% by volume to 50% by volume, such as 5% by volume to 40% by volume, such as 5% by volume to 30% by volume, such as 5% by volume to 20% by volume, such as 5% by volume to 10% by volume, such as 10% by volume to 50% by volume, such as 10% by volume to 40% by volume, such as 10% by volume to 30% by volume, such as 10% by volume to 20% by volume.

As noted above, the thermally conductive filler package may comprise particles of NTC/EI filler material.

Suitable NTC/EI filler materials include but are not limited to mica, wollastonite, calcium carbonate, glass microspheres, clay, or combinations thereof.

As used herein, the term "mica" generally refers to sheet silicate (phyllosilicate) minerals. The mica may comprise muscovite mica. Muscovite mica comprises a phyllosilicate mineral of aluminum and potassium with the formula KAl₂(AlSi₃O₁₀)(F,OH)₂ or (KF)₂(Al₂O₃)₃(SiO₂)₆(H₂O). Exemplary non-limiting commercially available muscovite mica include products sold under the trade name DakotaPURE^{™}, such as DakotaPURE^{™} 700, DakotaPURE^{™} 1500, DakotaPURE^{™} 2400, DakotaPURE^{™} 3000, DakotaPURE^{™} 3500 and DakotaPURE^{™} 4000, available from Pacer Minerals.

Wollastonite comprises a calcium inosilicate mineral (CaSiO₃) that may contain small amounts of iron, aluminum, magnesium, manganese, titanium and/or potassium. The wollastonite may have a B.E.T. surface area of 1.5 to 2.1 m²/g, such as 1.8 m²/g and a median particle size of 6 microns to 10 microns, such as 8 microns. Non-limiting examples of commercially available wollastonite include NYAD 400 available from NYCO Minerals, Inc.

The calcium carbonate (CaCO₃) may comprise a precipitated calcium carbonate or a ground calcium carbonate. The calcium carbonate may or may not be surface treated, such as treated with stearic acid. Non-limiting examples of commercially available precipitated calcium carbonate include Ultra-Pflex^{®}, Albafil^{®}, and Albacar HO^{®} available from Specialty Minerals and Winnofil^{®} SPT available from Solvay Chemical. Non-limiting examples of commercially available ground calcium carbonate include Duramite^{™} available from IMERYS and Marblewhite^{®} available from Specialty Minerals.

Useful clay minerals include a non-ionic platy filler such as talc, pyrophyllite, chlorite, vermiculite, or combinations thereof.

The glass microspheres may be hollow borosilicate glass. Non-limiting examples of commercially available glass microspheres include 3M Glass bubbles type VS, K series, and S series available from 3M.

The NTC/EI filler particles, if present at all, may be present in an amount of no more than 10% by volume based on total volume of the filler package, such as no more than 5% by volume, such as no more than 1% by volume, and may be present in an amount of at least 0.1% by volume based on total volume of the filler package, such as at least 0.5% by volume. The NTC/EI filler particles may be present in an amount of 0.1% by volume to 10% by volume based on total volume of the filler package, such as 0.5% by volume to 5% by volume, such as 0.5% by volume to 1% by volume.

### Reactive Diluents

Optionally, the composition may comprise a reactive diluent. The reactive diluent may be a monomer or a polymer, and may be mono-functional, bi-functional, or multifunctional. The reactive diluent, in some instances, may be an adhesion promoter or a surface active agent. Suitable examples of reactive diluent include 1,4-butandiol diglycidyl ether (available as Heloxy modifier BD from Hexion), 1,6-hexanediol diglycidyl ether, mono-functional aliphatic diluents (Epotec RD 108, RD 109, RD 188 available from Aditya Birla), and mono-functional aromatic reactive diluents (Epotec RD 104, RD 105, and RD 136 available from Aditya Birla). Other suitable examples of the reactive diluent include saturated epoxidized oils, unsaturated oils such as glycerides of polyunsaturated fatty acids such as nut oils or seed oils, including as examples cashew nut oil, sunflower oil, safflower oil, soybean oil, linseed oil, castor oil, orange oil, rapeseed oil, tall oil, vegetable processing oil, vulcanized vegetable oil, high oleic acid sunflower oil, tung oil, and combinations thereof. The reactive diluent of the present invention also may be homopolymers of 1,2-butadiene or 1,4-butadiene or combinations thereof, copolymers of butadiene and acrylic or olefin monomers, or combinations thereof.

The reactive diluent may have a boiling point of greater than 100°C at 1 atm, such as greater than 130°C, such as greater than 150°C, for example, and the reactive diluent may have a boiling point of less than 425°C at 1 atm, such as less than 390°C, such as less than 360°C, for example.

The reactive diluent can lower the viscosity of the mixture. According to the present invention, the reactive diluent may have a viscosity of from 1 mPa·s to 4,000 mPa·s at 298K and 1 atm according to ASTM D789, such as for example, from 1 mPa·s to 3,000 mPa·s, 1 mPa·s to 2,000 mPa·s, 1 mPa·s to 1,000 mPa·s, 1 mPa·s to 100 mPa·s, or 2 mPa·s to 30 mPa·s.

### Accelerators

Any accelerator capable of accelerating a reaction of the hydrolysable component with water and/or the curing agent compound may be used in the present composition. Suitable accelerators that may be used in accordance with the present invention thus include for example thiazoles, thiurams, sulfenamides, guanidines, dithiocarbamates, xanthates, thioureas, aldehydeamines, and combinations of any of the foregoing. Examples of suitable thiazoles include bis(2-benzothiazole) disulfide (MBTS), 2-mercaptobenzothiazole (MBT), and the zinc salt of mercaptobenzothiazole (ZMBT). Examples of suitable thiurams include tetramethyl thiuram monosulfide, tetramethyl thiuram disulfide (TMTD), tetraethyl thiuram disulfide, tetrabutyl thiuram disulfide, dipentamethylene thiuram hexasulfide, dicyclohexamethylene thiuram disulfide, diisopropyl thiuram disulfide, bis(morpholinothiocarbonyl) sulfide, tetramethyl thiuram monosulfide (TMTM), dipentamethylene thiuram tetrasulfide (DPTT), and compounds having the structure (R)₂N-C(=S)-Sₓ-C(=S)-N(R)₂ where each R can be C₁₋₆ alkyl and x is an integer from 1 to 4, and combinations of any of the foregoing. Examples of suitable sulfonamides include N-cyclohexyl-2-benzothiazolsulfenamide, tertbutyl-2-benzothiazolsulfenamide (TBBS), dicyclohexyl-2-benzothiazolsulfenamide (DCBS), and combinations of any of the foregoing. Examples of suitable guanidines include diphenyl guanidine (DPG), N,N'-diorthotolyl guanidine (DOTG), compounds having the structure R-NH-C(=NH)-NH-R where each R is selected from C₁₋₆ alkyl, phenyl and toluoyl, and combinations of any of the foregoing. Examples of suitable dithiocarbamates include zinc dialkyl dithiocarbamates such as dimethyl- dithiocarbamate (ZDMC), diethyl-dithiocarbamate (ZDEC) and dibutyl-dithiocarbamate (ZDBC), other metal or ammonium salts of dithiocarbamoic acid, compounds having the structure Zn(-S-C(=S)-N(R)₂) where each R is selected from C₁₋₆ alkyl, phenyl and toluoyl, and combinations of any of the foregoing. Examples of suitable xanthates include zinc salts of xanthic acid. Examples of suitable thioureas include ethylene thiourea (ETU), dipentamethylene thiourea (DPTU), dibutyl thiourea (DBTU), and compounds having the structure R-NH-C(=S)-NH-R where each R is selected from C₁₋₆ alkyl, phenyl and toluoyl, and combinations of any of the foregoing. Examples of suitable aldehydeamines include condensation products of aldehydes and amines, such as aniline, ammoniac or their derivates and also butyraldehyde, crotonylaldehyde or formaldehyde such as butyraldehydeaniline and tricrotonylidenetetramine, and combinations of any of the foregoing. Examples of other suitable cure accelerators include triazines and sulfides or metallic and amine salts of dialkyldithiophosphoric acids and dithiophosphates such as triazines and sulfides or metallic and amine salts of dialkyldithiophosphoric acids, and combinations of any of the foregoing. Examples of non-sulfur-containing polysulfide cure accelerators include tetramethyl guanidine (TMG), di-o-tolyl guanidine (DOTG), sodium hydroxide (NaOH), water, and amines. Examples of amines include quaternary amines, tertiary amines, cyclic tertiary amines, or secondary amines.

The accelerator may be a metal-based compound such as tin-based compounds such as dibutyltin dilaurate, dibutyltin dioctanoate, dibutyltin bis(2-ethylhexanoate), dibutyltin diacetate, and dibutyltin bis(acetylacetonate); zinc-based compounds such as zinc bis(2-ethylhexanoate); bismuth-based compounds such as bismuth neodecanoate and bismuth Tris(2-ethylhexanoate); zirconium-based compounds such as zirconium(IV) acetylacetonate; and titanium-based compounds such as tetraisopropyl orthotitanate and titanium(IV) oxyacetylacetonate.

The accelerator may be an amine-based catalyst such as trimethylamine; tributylamine; N,N-bis(N,N-dimethyl-2-aminoethyl)methylamine; N,N-dimethylcyclohexylamine; N-methylmorpholine; N-ethylmorpholine; piperidine; piperazine; pyrrolidine; homopiperazine; 1,2-dimethyl-1,4,5,6-tetrahydropyrimidine; 1,4,5,6-tetrahydropyrimidine; 1,8-diazabicyclo[5.4.0]undec-7-ene; 1,5,7-triazabicyclo[4.4.0]dec-5-ene; 7-methyl-1,5,7-triazabicyclo[4.4.0]dec-5-ene; 1,5-diazabicyclo[4.3.0]non-5-ene; 6-(dibutylamino)-1,8-diazabicyclo(5,4,0)undec-7-ene; 1,4-diazabicyclo[2.2.2]octane; 7-azabicyclo[2.2.1]heptane; N, N-dimethylphenylamine; 4,5-dihydro-1H-imidazole; and guanidine-based catalysts such as guanidine, dimethylguanidine, trimethylguanidine, tetramethylguanidine, pentamethylguanidine, phenylguanidine, diphenylguanidine, butylbiguanide, 1-o-tolylbiguanide, 1-phenylbiguanide, 1-methyl-3-nitroguanidine, 1,8-bis(tetramethylguanidino)-naphthalene, and N,N,N',N'-tetramethyl-N"-[4-morpholinyl(phenylimino)methyl]guanidine.

The accelerator may be an inorganic acid such as, for example, sulfonic acid, p-toluene sulfonic acid, n-butylphosphoric acid, hydrochloric acid, nitric acid, or the like. The accelerator may be also be an organic acid, such as, for example, formic acid, citric acid, acetic acid, and triflic acid, or the like.

Other suitable accelerators include free radical catalysts. Suitable free radical catalysts include, for example, azo compounds, for example azobisnitriles such as azo(bis)isobutyronitrile (AIBN); organic peroxides such as benzoyl peroxide and t-butyl peroxide; and inorganic peroxides such as hydrogen peroxide. The reaction may also be affected by irradiation with ultraviolet light either with or without a cationic photo-initiating moiety. Ionic catalysis methods, using either inorganic or organic bases, e.g., triethylamine, also yield useful materials.

Other suitable accelerators include organometallic catalysts. Suitable organometallic catalysts are useful for the purpose of further accelerating the curing rate of the composition into a protective film coating over a broad temperature range. In certain use applications calling for ambient temperature cure of the composition, the organometallic catalyst is also useful for providing accelerated cure rates at such ambient temperature cure conditions. Suitable catalysts include those having the general formula 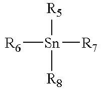 where R₅ and R₆ are each selected from the group consisting of alkyl, aryl, and alkoxy groups having up to eleven carbon atoms, and where R₇ and R₈ are each selected from the same groups as R₅ and R₆, or from the group consisting of inorganic atoms such as halogens, sulphur or oxygen. Example catalysts include organotin materials such as dibutyl tin dilaurate, dibutyl tin diacetate, and organotitanates.

The accelerator may be present in the composition in an amount of at least 0.01% by volume based on the total volume of the composition, such as at least 0.02% by volume, such as at least 0.03% by volume, and may be present in an amount of no more than 30% by volume based on the total volume of the composition, such as no more than 20% by volume, such as no more than 10% by volume. The accelerator may be present in the composition in an amount of 0.01% to 30% by volume based on the total volume of the composition, such as 0.02% to 20% by volume, such as 0.03% to 10% by volume.

### Dispersants

The composition optionally may further comprise a dispersant. As used herein, the term "dispersant" refers to a substance that may be added to the composition in order to improve the separation of the thermally conductive filler particles by wetting the particles and breaking apart agglomerates.

The dispersant, if present at all, may be present in the composition in an amount of at least 0.05% by volume based on total volume of the composition, such as at least 0.2% by volume, such as at least 1% by volume, and may be present in an amount of no more than 20 % by volume based on total volume of the composition, such as no more than 10% by volume. The dispersant, if present at all, may be present in the composition in an amount of 0.05% by volume to 20% by volume based on total volume of the composition, such as 0.2% by volume to 10% by volume, such as 1% by volume to 10% by volume.

Suitable dispersants for use in the composition include fatty acid, phosphoric acid esters, polyurethanes, polyamines, polyacrylates, polyalkoxylates, sulfonates, polyethers, and polyesters, or any combination thereof. Non-limiting examples of commercially available dispersants include ANTI-TERRA-U100, DISPERBYK-102, DISPERBYK-103, DISPERBYK-111, DISPERBYK-171, DISPERBYK-2151, DISPERBYK-2059, DISPERBYK-2000, DISPERBYK-2117, and DISPERBYK-2118 available from BYK Company; and SOLSPERSE 24000SC, SOLSPERSE 16000 and SOLSPERSE 8000 hyperdispersants available from The Lubrizol Corporation.

### Additives

The composition may optionally comprise at least one additive. As used herein, an "additive" refers to a rheology modifier, a tackifier, a thermoplastic polymer, a surface active agent (other than the reactive diluent described above), a flame retardant, a corrosion inhibitor, a UV stabilizer, a colorant, a tint, a solvent, a plasticizer, an adhesion promoter (other than the reactive diluent described above), an antioxidant, and/or a moisture scavenger.

Examples of suitable corrosion inhibitors include, for example, zinc phosphate-based corrosion inhibitors, for example, micronized Halox^{®} SZP-391, Halox^{®} 430 calcium phosphate, Halox^{®} ZP zinc phosphate, Halox^{®} SW-111 strontium phosphosilicate Halox^{®} 720 mixed metal phosphor-carbonate, and Halox^{®} 550 and 650 proprietary organic corrosion inhibitors commercially available from Halox. Other suitable corrosion inhibitors include Heucophos^{®} ZPA zinc aluminum phosphate and Heucophos^{®} ZMP zinc molybdenum phosphate, commercially available from Heucotech Ltd.

A corrosion inhibitor can comprise a lithium silicate such as lithium orthosilicate (Li₄SiO₄) and lithium metasilicate (Li₂SiO₃), MgO, an azole, or a combination of any of the foregoing. The corrosion inhibiting component may further comprise at least one of magnesium oxide (MgO) and an azole.

A corrosion inhibitor can comprise a monomeric amino acid, a dimeric amino acid, an oligomeric amino acid, or a combination of any of the foregoing. Examples of suitable amino acids include histidine, arginine, lysine, cysteine, cystine, tryptophan, methionine, phenylalanine, tyrosine, and combinations of any of the foregoing.

A corrosion inhibitor can comprise a nitrogen-containing heterocyclic compound. Examples of such compounds include azoles, oxazoles, thiazoles, thiazolines, imidazoles, diazoles, pyridines, indolizines, and triazines, tetrazoles, tolyltriazole, and combinations of any of the foregoing.

Examples of suitable triazoles include 1,2,3-triazole, 1,2,4-triazole, benzotriazole, derivatives thereof, and combinations of any of the foregoing. Derivatives of 1,2,3-triazole include 1-methyl-1,2,3-triazole, 1-phenyl-1,2,3-triazole, 4-methyl-2-phenyl-1,2,3-triazole, 1-benzyl-1,2,3-triazole, 4-hydroxy-1,2,3-triazole, 1-amino-1,2,3-triazole, 1-benzamido-4-methyl-1,2,3-triazole, 1-amino-4,5-diphenyl-1,2,3-triazole, 1,2,3-triazole aldehyde, 2-methyl-1,2,3-triazole-4-carboxylic acid, and 4-cyano-1,2,3-triazole, or combinations thereof. Derivatives of 1,2,4-triazole include 1-methyl-1,2,4-triazole, 1,3-diphenyl-1,2,4-triazole, 5-amino-3-methyl-1,2,4-triazole, 3-mercapto-1,2,4-triazole, 1,2,4-triazole-3-carboxylic acid, 1-phenyl-1,2,4-triazole-5-one, 1-phenylurazole, and combinations of any of the foregoing. Examples of diazoles include 2,5-dimercapto-1,3,4-thiadiazole.

A corrosion inhibitor can include an azole or combination of azoles. Azoles are 5-membered N-heterocyclic compounds that contain in the heterocyclic ring two double bonds, one to three carbon atoms and optionally a sulfur or oxygen atom. Examples of suitable azoles include benzotriazole, 5-methyl benzotriazole, tolyltriazole, 2,5-dimercapto-1,3,4-thiazole, 2-mercaptobenzothiazole, 2-mercaptobenzimidazole, 1-phenyl-5-mercaptotetrazole, 2-amino-5-mercapto-1,3,4-thiadiazole, 2-mercapto-1-methylimidazole, 2-amino-5-ethyl-1,3,4-thiadiazole, 2-amino-5-ethylthio-1,3,4-thiadiazole, 5-phenyltetrazole, 7H-imidazo(4,5-d)pyrimidine, and 2-amino thiazole. Salts of any of the foregoing, such as sodium and/or zinc salts, can also be used as effective corrosion inhibitors. Other suitable azoles include 2-hydroxybenzothiazole, benzothiazole, 1-phenyl-4-methylimidazole, and 1-(p-tolyl)-4-methlyimidazole.

The rheology modifier may be present in the composition in an amount of at least 0.01% by volume based on total volume of the composition, such as at least 0.2% by volume, such as at least 0.3% by volume, and in some instances may be present in the composition in an amount of no more than 5% by volume based on total volume of the composition, such as no more than 3% by volume, such as no more than 1% by volume. The rheology modifier may be present in the composition in an amount of 0.01% by volume to 5% by volume based on total volume of the composition, such as 0.2% by volume to 3% by volume, such as 0.3% by volume to 1% by volume.

Useful rheology modifiers that may be used include polyamide, amide waxes, polyether phosphate, oxidized polyolefin, Castor wax and organoclay. Commercially available thixotropes useful in the present invention include Disparlon 6500 available from King Industries, Garamite 1958 available from BYK Company, Bentone SD2 and Thxatrol@ST available from Elementis, and Crayvallac SLX available from Palmer Holland.

Useful colorants or tints may include phthalocyanine blue.

Compositions provided by the present disclosure can comprise a flame retardant or combination of flame retardants. Certain TC materials described above such as aluminum hydroxide and magnesium hydroxide, for example, also may be flame retardants. As used herein, "flame retardant" refers to a material that slows down or stops the spread of fire or reduces its intensity. Flame retardants may be available as a powder that may be mixed with a composition, a foam, or a gel. In examples, when the compositions of the present invention include a flame retardant, such compositions may form a coating on a substrate surface and such coating may function as a flame retardant.

As set forth in more detail below, a flame retardant can include a mineral, an organic compound, an organohalogen compound, an organophosphorous compound, or a combination thereof.

Suitable examples of minerals include huntite, hydromagnesite, various hydrates, red phosphorous, boron compounds such as borates, carbonates such as calcium carbonate and magnesium carbonate, and combinations thereof.

Suitable examples of organohalogen compounds include organochlorines such as chlorendic acid derivatives and chlorinated paraffins; organobromines such as decabromodiphenyl ether (decaBDE), decabromodiphenyl ethane (a replacement for decaBDE), polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane (HBCD). Such halogenated flame retardants may be used in conjunction with a synergist to enhance their efficiency. Other suitable examples include antimony trioxide, antimony pentaoxide, and sodium antimonate.

Suitable examples of organophosphorous compounds include triphenyl phosphate (TPP), resorcinol bis(diphenylphosphate) (RDP), bisphenol A diphenyl phosphate (BADP), and tricresyl phosphate (TCP); phosphonates such as dimethyl methylphosphonate (DMMP); and phosphinates such as aluminium diethyl phosphinate. In one important class of flame retardants, compounds contain both phosphorus and a halogen. Such compounds include tris(2,3-dibromopropyl) phosphate (brominated tris) and chlorinated organophosphates such as tris(1,3-dichloro-2-propyl)phosphate (chlorinated tris or TDCPP) and tetrakis(2-chlorethyl)dichloroisopentyldiphosphate (V6).

Suitable examples of organic compounds include carboxylic acid, dicarboxylic acid, melamine, and organonitrogen compounds.

Other suitable flame retardants include ammonium polyphosphate and barium sulfate.

The composition optionally may comprise at least one plasticizer. Examples of plasticizers include diisononylphthalate (Jayflex^{™} DINP available from Exxon Mobil), diisodecylphthalate (Jayflex^{™} DIDP available from Exxon Mobil), and alkyl benzyl phthalate (Santicizer 278 available from Valtris); benzoate-based plasticizers such as dipropylene glycol dibenzoate (K-Flex^{®} available from Emerald Performance Materials); and other plasticizers including terephthalate-based dioctyl terephthalate (DEHT available from Eastman Chemical Company), alkylsulfonic acid ester of phenol (Mesamoll available from Borchers), and 1,2-cyclohexane dicarboxylic acid diisononyl ester (Hexamoll DINCH available from BASF). Other plasticizers may include isophthalic hydrogenated terphenyls, quarterphenyls and higher or polyphenyls, phthalate esters, chlorinated paraffins, modified polyphenyl, tung oil, naphthalene sulfonates, trimellitates, adipates, sebacates, maleates, sulfonamide, organophosphates, polybutene, and combinations of any of the foregoing. These plasticizers can be polymers such as polyacrylates.

The plasticizer, if present at all, may be present in the composition in an amount of at least 0.5% by volume based on the total volume of the composition, such as at least 2% by volume, such as at least 3% by volume, and may be present in an amount of no more than 30% by volume based on total volume of the composition, such as no more than 20% by volume, such as no more than 16% by volume. The plasticizer, if present at all, may be present in the composition in an amount of 0.5% to 30% by volume based on total volume of the composition, such as 2% to 20% by volume, such as 3% to 16% by volume.

Suitable moisture scavengers include vinyltrimethoxysilane (Silquest A-171 from Momentive), vinyltriethoxysilane (Silquest A-151NT from Momentive), gamma-methacryloxypropyltrimethoxysilane (Silquest A-174NT available from Evonik), molecular sieves, calcium oxide (POLYCAL OS325 available from Mississippi Lime), or combinations thereof.

The composition also may comprise a solvent. Suitable solvents include toluene, methyl ethyl ketone, benzene, n-hexane, xylene, and combinations thereof.

The solvent, if present at all, may be present in the composition in an amount of at least 1% by volume based on the total volume of the composition, such as at least 2% by volume, such as at least 5% by volume, and may be present in an amount of no more than 60% by volume, such as no more than 40% by volume, such as no more than 20% by volume. The solvent, if present at all, may be present in the composition in an amount of 1% to 60% by volume based on total volume of the composition, such as 2% to 40% by volume, such as 5% to 20% by volume.

The composition also may comprise a solvent. Suitable solvents include toluene, acetone, ethyl acetate, xylene, and combinations thereof.

The solvent may be present in the composition in an amount of at least 1% by volume based on the total volume of the composition, such as at least 2% by volume, such as at least 5% by volume, and may be present in an amount of no more than 60% by volume, such as no more than 40% by volume, such as no more than 20% by volume. The solvent may be present in the composition in an amount of 1% to 60% by volume based on total volume of the composition, such as 2% to 40% by volume, such as 5% to 20% by volume.

The composition according to the present invention optionally may further comprise an adhesion promoter, antioxidant, water scavenger, and the like, in amounts known to those skilled in the art.

### Methods and Systems

The present invention may also be a method for preparing a composition comprising, or in some cases consisting of, or in some cases consisting essentially of, a hydrolysable component, a thermally conductive filler package, and optionally a curing agent, an accelerator, and/or a dispersant, and any of the optional further components, if used, described above, the method comprising, or in some cases consisting of, or in some cases consisting essentially of, mixing such ingredients at a temperature of less than 50°C, such as from 0°C to 50°C, such as from 15°C to 35°C, such as at ambient temperature.

The present invention also is directed to a method for treating a substrate comprising, or consisting essentially of, or consisting of, contacting at least a portion of a surface of the substrate with one of the compositions of the present invention described hereinabove. The composition may be cured to form a coating, layer or film on the substrate surface under ambient conditions or by exposure to moisture or water, and optionally additionally by heating the substrate at slightly thermal temperatures up to a temperature of 250°C or less, such as less than 180°C, such as less than 130° C, such as less than 90°C. The coating, layer or film, may be, for example, a sealant, potting compound, a gap filler, an adhesive, a putty, or a molding compound. In examples, the formed coating, layer or film may, in an at least partially cured state, have a thermal conductivity of at least 0.5 W/m·K (measured according to ASTM D7984), maintain a temperature of the substrate that is at least 100°C lower following exposure of the coating on the surface of the substrate to 1000°C for at a time of at least 90 seconds than a surface temperature of a bare substrate exposed to 1000°C for the time (as described in more detail below), provide a substrate with thermal and fire protection (as described in more detail below), not smoke upon exposure of the substrate to 1000°C for 500 sec, and/or exhibit no visible cracking or delamination (as described in more detail below).

The composition described above may be applied alone or as part of a system that can be deposited in a number of different ways onto a number of different substrates. The system may comprise a number of the same or different films, coatings, or layers. A film, coating, or layer is typically formed when a composition that is deposited onto at least a portion of the substrate surface is at least partially dried or cured by methods known to those of ordinary skill in the art (e.g., under ambient conditions or by exposure to thermal heating).

The composition can be applied to the surface of a substrate in any number of different ways, non-limiting examples of which include brushes, rollers, films, pellets, trowels, spatulas, dips, spray guns, applicator guns, and pneumatic guns to form a coating on at least a portion of the substrate surface. The composition may be applied to cleaned or uncleaned (i.e., including oily or oiled) substrate surfaces.

After application to the substrate(s), the composition may be cured by exposure to moisture or water, and optionally may be further cured by baking and/or curing at elevated temperature, such as at a temperature of 180°C or below, such as 130°C or below, such as 110°C or below, such as 100°C or below, such as 90°C or below, such as 80°C or below, such as 70°C or below, but greater than ambient, such as greater than 40°C, such as greater than 50°C, and for any desired time period (e.g., from 5 minutes to 1 hour) sufficient to at least partially cure the composition on the substrate(s). Alternatively, the composition of the present invention may cure at ambient or slightly above ambient conditions.

The present invention is also directed to a method for forming a bond between two substrates for a wide variety of potential applications in which the bond between the substrates provides particular mechanical properties related to lap shear strength. The method may comprise, or consist essentially of, or consist of, applying the composition described above to a first substrate; contacting a second substrate to the composition such that the composition is located between the first substrate and the second substrate; and curing the composition under ambient conditions or by exposure to moisture or water, and optionally additionally by heating to a temperature of less than 180°C, such as less than 130°C, such as less than 90°C. For example, the composition may be applied to either one or both of the substrate materials being bonded to form an adhesive bond therebetween and the substrates may be aligned and pressure and/or spacers may be added to control bond thickness. The composition may be applied to cleaned or uncleaned (i.e., including oily or oiled) substrate surfaces.

As stated above, the composition of the present disclosure also may form a sealant on a substrate or a substrate surface. The sealant composition may be applied to substrate surfaces, including, by way of non-limiting example, a vehicle body or components of an automobile frame or an airplane. The sealant formed by the composition of the present invention provides sufficient sound damping, tensile strength and tensile elongation. The sealant composition may be applied to cleaned or uncleaned (i.e., including oily or oiled) substrate surfaces. It may also be applied to a substrate that has been pretreated, coated with an electrodepositable coating, coated with additional layers such as a primer, basecoat, or topcoat. The coating composition may dry or cure at ambient conditions once applied to a substrate or substrates coated with coating compositions may optionally subsequently be baked in an oven to cure the coating composition.

The composition may be injected or otherwise placed in a die caster or a mold and at least partially dried or cured under ambient conditions or by exposure to moisture or water, and optionally additionally by heating to a temperature of less than 180°C, such as less than 130°C, such as less than 90°C to form a part or a member and optionally may be machined to a particular configuration.

### Substrates

The substrates that may be coated by the compositions of the present invention are not limited. Suitable substrates useful in the present invention include, but are not limited to, materials such as metals or metal alloys, polymeric materials such as hard plastics including filled and unfilled thermoplastic materials or thermoset materials, or composite materials. For example, suitable substrates include rigid metal substrates such as ferrous metals, aluminum, aluminum alloys, magnesium titanium, copper, and other metal and alloy substrates. The ferrous metal substrates used in the practice of the present invention may include iron, steel, and alloys thereof. Non-limiting examples of useful steel materials include cold rolled steel, galvanized (zinc coated) steel, electrogalvanized steel, stainless steel, pickled steel, zinc-iron alloy such as GALVANNEAL, and combinations thereof. Combinations or composites of ferrous and nonferrous metals can also be used. Aluminum alloys of the 1XXX, 2XXX, 3XXX, 4XXX, 5XXX, 6XXX, 7XXX, or 8XXX series as well as clad aluminum alloys and cast aluminum alloys of the A356, 1XX.X, 2XX.X, 3XX.X, 4XX.X, 5XX.X, 6XX.X, 7XX.X, or 8XX.X series also may be used as the substrate. Magnesium alloys of the AZ31B, AZ91C, AM60B, or EV31A series also may be used as the substrate. The substrate used in the present invention may also comprise titanium and/or titanium alloys of grades 1-36 including H grade variants. Other suitable nonferrous metals include copper and magnesium, as well as alloys of these materials. In examples, the substrate may be a multi-metal article. As used herein, the term "multi-metal article" refers to (1) an article that has at least one surface comprised of a first metal and at least one surface comprised of a second metal that is different from the first metal, (2) a first article that has at least one surface comprised of a first metal and a second article that has at least one surface comprised of a second metal that is different from the first metal, or (3) both (1) and (2). Suitable metal substrates for use in the present invention include those that are used in the assembly of vehicular bodies (e.g., without limitation, door, body panel, trunk deck lid, roof panel, hood, roof and/or stringers, rivets, landing gear components, and/or skins used on an aircraft), a vehicular frame, vehicular parts, motorcycles, wheels, and industrial structures and components. As used herein, "vehicle" or variations thereof includes, but is not limited to, civilian, commercial and military aircraft, and/or land vehicles such as cars, motorcycles, and/or trucks. The metal substrate also may be in the form of, for example, a sheet of metal or a fabricated part. It will also be understood that the substrate may be pretreated with a pretreatment solution including a zinc phosphate pretreatment solution such as, for example, those described in U.S. Patent Nos. 4,793,867 and 5,588,989, or a zirconium containing pretreatment solution such as, for example, those described in U.S. Patent Nos. 7,749,368 and 8,673,091. It will be understood the substrate may also be anodized, primed, organic-coated or chromate-coated. Other substrates may comprise epoxy, urethane, graphite, Kevlar^{®}, acrylics, polycarbonates, a composite material such as a plastic or a fiberglass composite. The substrate may be a fiberglass and/or carbon fiber composite. The compositions of the present invention are particularly suitable for use in various industrial or transportation applications including automotive, light and heavy commercial vehicles, marine, or aerospace.

### Extrusion and the Like

Alternatively, the composition may be casted, extruded, molded, or machined to form a part or a member in an at least partially dried or cured state.

The compositions disclosed herein surprisingly may be used in any suitable additive manufacturing technology, such as extrusion, jetting, and binder jetting.

The present disclosure is directed to the production of structural articles, such as by way of non-limiting example, sound damping pads, using three-dimensional printing. A three-dimensional article may be produced by forming successive portions or layers of an article by depositing the composition of the present invention onto a substrate and thereafter depositing additional portions or layers of the composition over the underlying deposited portion or layer and/or adjacent the previously deposited portion or layer. Layers can be successively deposited adjacent a previously deposited layer to build a printed article. First and second components of the composition can be mixed and then deposited or the first and second components of the composition can be deposited separately. When deposited separately, the first and second components can be deposited simultaneously, sequentially, or both simultaneously and sequentially.

By "portions of an article" is meant subunits of an article, such as layers of an article. The layers may be on successive horizontal parallel planes. The portions may be parallel planes of the deposited material or beads of the deposited material produced as discreet droplets or as a continuous stream of material. The first and second components may each be provided neat or may also include an organic solvent and/or other additives as described below. First and second components provided by the present disclosure may be substantially free of solvent. By substantially free is meant that the first and second components comprise less than 5% by volume, less than 4% by volume, less than 2% by volume, or less than 1% by volume of solvent, where % by volume is based on the total volume of the first component or the second component, as the case may be. Similarly, the composition provided by the present disclosure may be substantially free of solvent, such as having less than 5% by volume, less than 4% by volume, less than 2% by volume, or less than 1% by volume of solvent, where % by volume is based on the total volume of the composition.

The first and second components of a 2K composition of the present invention may be mixed together and subsequently deposited as a mixture of components that react to form portions of an article. For example, two components may be mixed together and deposited as a mixture of components that react to form a thermoset by delivery of at least two separate streams of the components into a mixer such as a static mixer and/or a dynamic mixer to produce a single stream that is then deposited. The components may be at least partially reacted by the time a composition comprising the reaction mixture is deposited. The deposited reaction mixture may react at least in part after deposition and may also react with previously deposited portions and/or subsequently deposited portions of the article such as underlying layers or overlying layers of the article.

Two or more components can be deposited using any suitable equipment. The selection of suitable deposition equipment depends on a number of factors including the deposition volume, the viscosity of the composition and the complexity of the part being fabricated. Each of the two or more components can be introduced into an independent pump and injected into a mixer to combine and mix the two components. A nozzle can be coupled to the mixer and the mixed composition can be pushed under pressure or extruded through the nozzle.

A pump can be, for example, a positive displacement pump, a syringe pump, a piston pump, or a progressive cavity pump. The two pumps delivering the two components can be placed in parallel or placed in series. A suitable pump can be capable of pushing a liquid or viscous liquid through a nozzle orifice. This process can also be referred to as extrusion. A component can be introduced into the mixer using two pumps in series.

For example, the first and second components can be deposited by dispensing materials through a disposable nozzle attached to a progressive cavity two-component dosing system such as a ViscoTec eco-DUO 450 precision dosing system, where the first and second components are mixed in-line. A two-component dosing system can comprise, for example, two progressive cavity pumps that separately dose reactants into a disposable static mixer dispenser or into a dynamic mixer. Other suitable pumps include positive displacement pumps, syringe pumps, piston pumps, and progressive cavity pumps. Upon dispensing, the materials of the first and second components form an extrudate which can be deposited onto a surface to provide an initial layer of material and successive layers on a base. The deposition system can be positioned orthogonal to the base, but also may be set at any suitable angle to form the extrudate such that the extrudate and deposition system form an obtuse angle with the extrudate being parallel to the base. The extrudate refers to the combined components, i.e., a composition, that have been mixed, for example, in a static mixer or in a dynamic mixer. The extrudate can be shaped upon passing through a nozzle.

The base, the deposition system, or both the base and the deposition system may be moved to build up a three-dimensional article. The motion can be made in a predetermined manner, which may be accomplished using any suitable CAD/CAM method and apparatus such as robotics and/or computerize machine tool interfaces.

An extrudate may be dispensed continuously or intermittently to form an initial layer and successive layers. For intermittent deposition, a dosing system may interface with a relay switch to shut off the pumps, such as the progressive cavity pumps and stop the flow of reactive materials. Any suitable switch such as an electromechanical switch that can be conveniently controlled by any suitable CAD/CAM methodology can be used.

A deposition system can include an in-line static and/or dynamic mixer as well as separate pressurized pumping compartments to hold the at least two components and feed the materials into the static and/or dynamic mixer. A mixer such as an active mixer can comprise a variable speed central impeller having high shear blades within a conical nozzle. A range of conical nozzles may be used which have an exit orifice dimension, for example, from 0.2 mm to 50 mm, from 0.5 mm to 40 mm, from 1 mm to 30 mm, or from 5 mm to 20 mm.

A range of static and/or dynamic mixing nozzles may be used which have, for example, an exit orifice dimension from 0.6 mm to 2.5 mm, and a length from 30 mm to 150 mm. For example, an exit orifice diameter can be from 0.2 mm to 4.0 mm, from 0.4 mm to 3.0 mm, from 0.6 mm to 2.5 mm, from 0.8 mm to 2 mm, or from 1.0 mm to 1.6 mm. A static mixer and/or dynamic can have a length, for example, from 10 mm to 200 mm, from 20 mm to 175 mm, from 30 mm to 150 mm, or from 50 mm to 100 mm. A mixing nozzle can include a static and/or dynamic mixing section and a dispensing section coupled to the static and/or dynamic mixing section. The static and/or dynamic mixing section can be configured to combine and mix the first and second components. The dispensing section can be, for example, a straight tube having any of the above orifice diameters. The length of the dispensing section can be configured to provide a region in which the components can begin to react and build viscosity before being deposited on the article. The length of the dispensing section can be selected, for example, based on the speed of deposition, the rate of reaction of the first and second components, and the desired viscosity.

First and second components can have a residence time in the static and/or dynamic mixing nozzle, for example, from 0.25 seconds to 5 seconds, from 0.3 seconds to 4 seconds, from 0.5 seconds to 3 seconds, or from 1 seconds to 3 seconds. Other residence times can be used as appropriate based on the curing chemistries and curing rates.

In general, a suitable residence time is less than the gel time of the composition. A suitable gel time can be less than 7 days, such as less than 3 days, such as less than 2 days. A gel time of the composition can be, for example, from 10 min to 7 days, such as 12 hr to 3 days, such as 24 hr to 2 days. Gel time is considered as the time following mixing when the composition is no longer stirrable by hand.

Compositions provided by the present disclosure can have a volume flow rate, for example, from 0.1 mL/min to 20,000 mL/min, such as from 1 mL/min to 12,000 mL/min, from 5 mL/min to 8,000 mL/min, or from 10 mL/min to 6,000 mL min. The volume flow rate can depend, for example, on the viscosity of the composition, the extrusion pressure, the nozzle diameter, and the reaction rate of the first and second components.

A composition can be used at a print speed, for example, from 1 mm/sec to 400 mm/sec, such as from 5 mm/sec to 300 mm/sec, from 10 mm/sec to 200 mm/sec, or from 15 mm/sec to 150 mm/sec. The printed speed can depend, for example, on the viscosity of the composition, the extrusion pressure, the nozzle diameter, and the reaction rate of the components. The print speed refers to the speed at which a nozzle used to extrude a composition moves with respect to a surface onto which the composition is being deposited.

A static and/or dynamic mixing nozzle can be heated or cooled to control, for example, the rate of reaction between the first and second components and/or the viscosity of the first and second components. An orifice of a deposition nozzle can have any suitable shape and dimensions. A system can comprise multiple deposition nozzles. The nozzles can have a fixed orifice dimension and shape, or the nozzle orifice can be controllably adjusted. The mixer and/or the nozzle may be cooled to control an exotherm generated by the reaction of the first and second components.

Methods provided by the present disclosure include printing the composition on a fabricated part. Methods provided by the present disclosure include directly printing parts.

Using the methods provided by the present disclosure parts can be fabricated. The entire part can be formed from one of the compositions disclosed herein, one or more portions of a part can be formed from one of the compositions disclosed herein, one or more different portions of a part can be formed using the compositions disclosed herein, and/or one or more surfaces of a part can be formed from a composition provided by the present disclosure. In addition, internal regions of a part can be formed from a composition provided by the present disclosure.

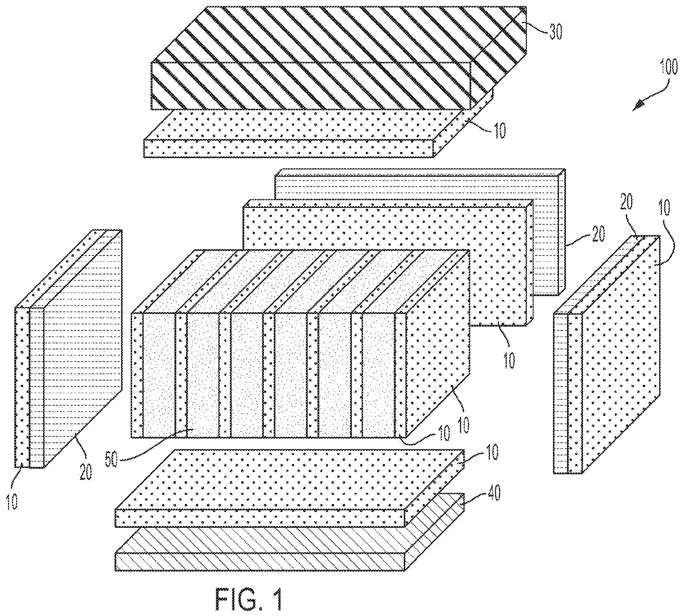

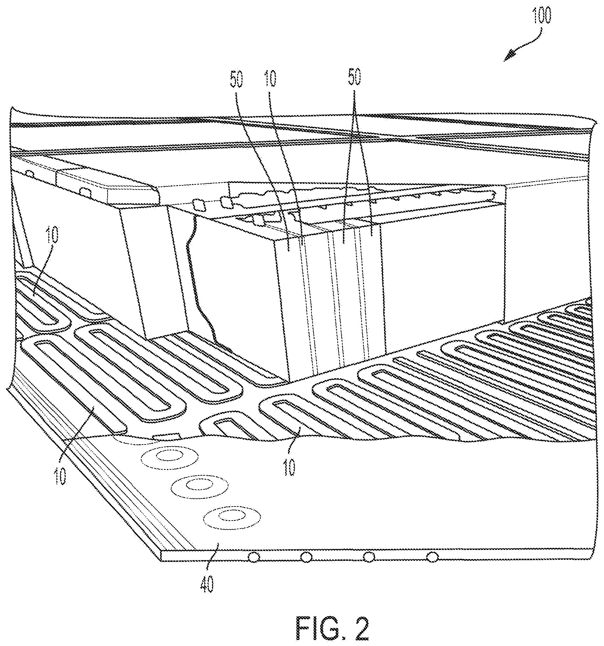

FIGS. 1 and 2 are schematic perspective views illustrating a thermally conductive member utilized as a gap filler in a battery pack **100.** As illustrated in FIG. 1, the thermally conductive matter **10** (formed from the compositions described herein in an at least partially cured state) is positioned between two battery cells/battery modules **50** which are interconnected in series or in parallel by interconnects (not shown). In other examples (FIG. 1), the thermally conductive matter may be positioned between cooling fin **30** and/or a battery cell / battery module **50,** between battery modules **50,** between a between a battery cell/battery module **50** and a surface of a wall of a battery box **20** or may be applied as a coating on at least a portion of the substrate of a wall of a battery box **20.** As shown in FIG. 2, the thermally conductive matter **10** may be positioned between a cooling plate **40** and a battery cell/battery module **50.** The battery pack **100** may further comprise a thermal management system (not shown) comprising air or fluid circuits, which may be liquid based (for example glycol solutions) or direct refrigerant based.

### Coatings and Formed Parts and Uses Thereof

According to the present invention, coatings, layers, films, and formed parts, are provided which, in an at least partially dried or cured state, surprisingly may demonstrate at least one of the following:
(a) a thermal conductivity of at least 0.5 W/m·K (measured according to ASTM D7984), such as at least 1 W/ m·K, such as at least 2 W/ m·K;
(b) a volume resistivity of at least 10⁹ Ω•m (measured according to ASTM D257), such as at least at least 10¹⁰ Ω•m;
(c) a shore A hardness of at least 5 measured according to ASTM D2240 with a Type A durometer (Model 2000, Rex Gauge Company, Inc.) at room temperature, such as at least 10, such as at least 20, such as at least 30, such as at least 40, such as 5 to 95;
(d) a lap shear strength of at least 0.5 MPa (measured according to ASTM D1002-10 using an Instron 5567 machine in tensile mode with a pull rate of 1 mm per minute), such as at least 0.7 MPa, such as at least 1.0 MPa, such as at least 50 MPa, such as at least 100 MPa, such as no more than 150 MPa;
(e) an elongation of 1% to 900%, as determined according to ASTM D412 on an Instron 5567 machine in tensile mode with a pull rate at 50 mm/min, such as at least 1%, such as at least 10%, such as at least 100%, such as at least 200%, such as at least 400%, such as at least 600%, such as at least 750%;
(f) maintain a temperature of the substrate that is at least 100°C lower following exposure of the coating on the surface of the substrate to 1000°C for at a time of at least 90 seconds than a surface temperature of a bare substrate exposed to 1000°C for the time;
(g) provide a substrate with thermal and fire protection;
(h) not smoke upon exposure of the substrate to 1000°C for 500 sec; and/or
(i) exhibit no visible cracking or delamination through the coating that exposes the substrate upon exposure of the substrate to 1000°C for 500 sec.

Such coatings and/or formed parts are formed from the compositions of the present invention.

In examples, coatings and the like and parts formed from the compositions of the present invention surprisingly may, in an at least partially cured state, have a thermal conductivity of at least 0.5 W/m·K (measured according to ASTM D7984), maintain a temperature of the substrate that is at least 100°C lower following exposure of the coating on the surface of the substrate to 1000°C for at a time of at least 90 seconds than a surface temperature of a bare substrate exposed to 1000°C for the time, provide a substrate with thermal and fire protection, not smoke upon exposure of the substrate to 1000°C for 500 sec, and/or exhibit no visible cracking or delamination that exposes the substrate beneath the coating.

In examples, the compositions of the present invention surprisingly may be used for making a coating that, in at least partially cured state, have a thermal conductivity of at least 0.5 W/m·K (measured according to ASTM D7984), maintain a temperature of the substrate that is at least 100°C lower following exposure of the coating on the surface of the substrate to 1000°C for at a time of at least 90 seconds than a surface temperature of a bare substrate exposed to 1000°C for the time, provide a substrate with thermal and fire protection, not smoke upon exposure of the substrate to 1000°C for 500 sec, and/or exhibit no visible cracking or delamination that exposes the substrate beneath the coating.

Coatings formed from compositions of the present invention may be used to provide a substrate with thermal and fire protection.

The coating compositions of the present invention may be used to make a coating having, in an at least partially cured state, a thermal conductivity of at least 0.5 W/m·K (measured according to ASTM D7984) and maintaining a temperature of the substrate that is at least 100°C lower following exposure of the coating on the surface of the substrate to 1000°C for at a time of at least 90 seconds than a surface temperature of a bare substrate exposed to 1000°C for the time.

The coating compositions of the present invention also may be used to make a coating that, in an at least partially cured state, provides a substrate with thermal and fire protection.

The coating compositions of the present invention also may be used to make a coating that, in an at least partially cured state, may not smoke upon exposure of the substrate to 1000°C for 500 sec.

The coating compositions of the present invention also may be used to make a coating that, in an at least partially cured state, exhibits no visible cracking or delamination.

Also disclosed are coatings that, in at least partially cured state, have a thermal conductivity of at least 0.5 W/m·K (measured according to ASTM D7984), maintain a temperature of the substrate that is at least 100°C lower following exposure of the coating on the surface of the substrate to 1000°C for at a time of at least 90 seconds than a surface temperature of a bare substrate exposed to 1000°C for the time, provide a substrate with thermal and fire protection, not smoke upon exposure of the substrate to 1000°C for 500 sec, and/or exhibit no visible cracking or delamination.

Coatings formed from compositions of the present invention may be used to provide a substrate with thermal and fire protection.

As used herein, a "temperature of the substrate following exposure of the coating on the surface of the substrate to" elevated temperatures such as 1000°C for at a time" may be measured by applying a coating composition to a substrate surface and allowing such composition to cure (for example, for 2 days in an environmental chamber (50 % RH, 25°C) followed by 1 day at 140°F). When the composition is at least partially cured, a thermocouple may be attached at a center point of the substrate to which the coating composition was applied to monitor the temperature through the coating. In order to determine the temperature at the back of the coated substrate, the center of the coated substrate may be positioned at a distance of 4 cm from a propane torch (diameter 3.5cm, propane) with the coating in the direction of the torch. The temperature of the flame may be monitored through a second thermocouple placed close to the base of the flame.

As used herein, "thermal protection" of a substrate refers to a coating that has a thermal conductivity of at least 0.5 W/m·K (measured according to ASTM D7984).

As used herein, "fire protection" of a substrate refers to a coating that prevents a substrate from reaching its critical temperature, and "critical temperature" means approximately the temperature where the substrate has lost approximately 50% of its yield strength from that at room temperature.

As used herein, "cracking and delamination" refers to an interruption of a coating such that at least a portion of the substrate surface is exposed.

Illustrating the invention are the following examples, which, however, are not to be considered as limiting the invention to their details. Unless otherwise indicated, all parts and percentages in the following examples, as well as throughout the specification, are by volume.

### EXAMPLES

**Table 1. Abbreviation Description of Matrix Materials**

| **Abbreviation or trade designation of matrix materials** | **Density (g/ml)** | **Description** |
|---|---|---|
| SAT 115 | 0.98-1.02 | Kaneka proprietary silyl terminated polyether |
| S203H | -- | Kaneka proprietary silyl terminated polyether |
| SAX260 | -- | Kaneka proprietary silyl terminated polyether |
| SAT010 | -- | Kaneka proprietary silyl terminated polyether |
| SAT115 | -- | Kaneka proprietary silyl terminated polyether |
| HS-1 | -- | Kaneka proprietary silyl terminated polyether |
| PPG 1000 | 1.03 | ARCOL POLYOL PPG 100, 1,000 g/mol molecular weight polypropylene glycol polyol containing only propylene oxide from Covestro AG |
| BDGE | 1.1 | 1,4-Butanediol diglycidyl ether, Erisys GE-21 from CVC THERMOSET SPECIALTIES |
| KA-86-8600 | -- | PPG proprietary di-ketamine |
| k-Flex 7301 | 1.15 | An acetoacetate functional reactive diluent from King Industries |
| NEOSTANN U-220H | 1.222 | Dibutyltin bis(acetylacetonate), Tin catalyst for silicone sealant from Kaneka |
| Disperbyk 111 | 1.16 | Copolymer with acidic groups from BYK |
| | | |

**Table 2. Abbreviation Description of Fillers Materials**

| Abbreviation or trade designation of fillers | Particle Size* | True Density (g/ml) | Mohs Hardness | Description |
|---|---|---|---|---|
| BN-PTX60 | 55-65 | 2.1 | 2 | Boron nitride fillers available from Momentive |
| Nabalox NO625-10 | 2.5 | 3.89 | 9 | Alumina fillers available from Nabaltec AG |
| Nabalox 105RA | 80 | 3.89 | 9 | Alumina fillers available from Nabaltec AG |
| APRAYL 20X | 8 | 2.42 | 3 | Aluminum trihydrate fillers available from Nabaltec AG |
| Nabalox NO625-31 | 2 | 3.89 | 9 | Alumina fillers available from Nabaltec AG |
| ZnO | <44 | 5.61 | 4 | ZOCHEM grade, zinc oxide particles from Zochem |
| Cu Powder | <75 | 8.96 | 2.5 -3 | Copper powder from Sgima-Aldrich |

| | | | | |
|---|---|---|---|---|
| * Based on manufacturer's specifications | | | | |

### Examples 1 - 8

**Table 3. Thermal Conductivity and Softness of Compositions with Hybrid fillers and Different Pigment Types**

| Ex. No. | Resin | | Catalyst | | Dispersant | | Filler | | | | | | Filler Total (vol%) | Volume Ratio of Filler 1 to Filler 2 | TC (W/m-K) | Shore A Hardnes s |
|---|---|---|---|---|---|---|---|---|---|---|---|---|---|---|---|---|
| | Resin | Weight (g) | Tin catalyst | Weight (g) | Phosphoric acid | Weight (g) | Filler 1 | Weight (g) | Vol (%) | Filler 2 | Weight (g) | Vol (%) | | | | |
| 1 | SAT 115 | 9.5 | NEOSTANN U-220H | 0.2 | Disperbyk 111 | 0.3 | Nabalox 105RA | 20 | 33.9 | -- | -- | -- | 33.9 | -- | 1.32 | 58.6 |
| 2 | SAT 115 | 9.5 | NEOSTANN U-220H | 0.2 | Disperbyk 111 | 0.2 | Nabalox NO625-10 | 40 | 55.7 | -- | -- | -- | 55.7 | -- | 1.37 | 56 |
| 3 | SAT 115 | 9.5 | NEOSTANN U-220H | 0.2 | Disperbyk 111 | 0.2 | Nabalox NO625-10 | 40 | 50.06 | Nabalox 105RA | 1 | 1.25 | 51.31 | 40.05 | 1.39 | 58.2 |
| 4 | SAT 115 | 9.5 | NEOSTANN U-220H | 0.2 | Disperbyk 111 | 0.2 | Nabalox 105RA | 1 | 1.7 | Nabalox NO625-10 | 20 | 33.3 8 | 35.08 | 0.05 | 1.42 | 67.8 |
| 5 | SAT 115 | 9.5 | NEOSTANN U-220H | 0.2 | Disperbyk 111 | 0.2 | APRYAL 20X | 40 | 62.3 | -- | -- | -- | 62.3 | -- | 1.81 | 46.4 |
| 6 | SAT 115 | 9.5 | NEOSTANN U-220H | 0.2 | Disperbyk 111 | 0.2 | PYROKIS UMA 5301 | 45 | 55.7 | -- | -- | -- | 55.7 | -- | 1.79 | 63.2 |
| 7 | SAT 115 | 9.5 | NEOSTANN U-220H | 0.2 | Disperbyk 111 | 0.2 | TFZ-S30P | 30 | 47.92 | -- | -- | -- | 47.92 | -- | 2.33 | 25 |
| 8 | SAT 115 | 9.5 | NEOSTANN U-220H | 0.2 | Disperbyk 111 | 0.2 | -- | -- | -- | -- | -- | -- | -- | -- | 0.16 | 9 |

Examples 1-7 were experimental and Examples 8 were comparative. The compositions of Examples 1-8 were prepared using the ingredients shown in Table 3 according to the following procedure with all non-manual mixing performed using a Speedmixer DAC 600FVZ (commercially available from FlackTeck inc.). For each example, all resins were added together, and then fillers were added gradually in different portions. After addition of each portion, the mixture mixed together for 1 min at 2,350 rpm. The composition was then transferred into an aluminum weighing dish (Fisherbrand, Catalog No. 08-732-101), and allowed to cure for at least 12 h at room temperature. The cured composition was removed from the aluminum weighing dish before thermal conductivity measurements were made.

**Thermal conductivity measurement.** The compositions of Examples 1-8 were tested for thermal conductivity using a Modified Transient Plane Source (MTPS) method (conformed to ASTM D7984) with a TCi thermal conductivity analyzer from C-Therm Technologies Ltd. The sample size was at least 20 mm by 20 mm with a thickness of 5 mm. 500 g of load was added on top of the sample to ensure a full contact of the sample with the flat probe. Data are reported in Table 3.

**Hardness test.** After the samples were cured for at least one week at room temperature, the compositions of Examples 1-8 were tested in accordance with ASTM D2240 standard with a Type A durometer (Model 2000, Rex Gauge Company, Inc.) at room temperature. The sample size was at least 20 mm by 20 mm with a thickness of 6 mm. Data are reported in Table 1.

The data in Table 3 demonstrate the importance of thermally conductive fillers in achieving a cured composition having a high thermal conductivity (TC) (more than 0.5 W/m·K) in comparison with control example 1.

**Table 4. Mechanical property of example 2**

| Ex No. | Lap shear strength (Mpa) | Elongation percentage (%) |
|---|---|---|
| 2 | 0.51 | 35 |

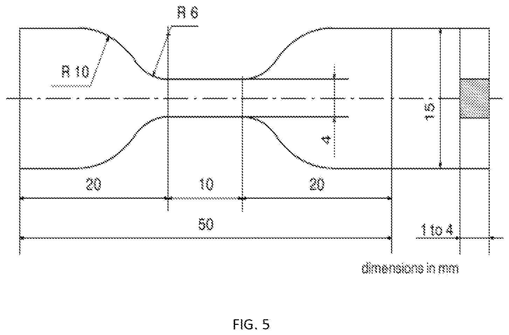

**Elongation percentage measurement.** Dog bones (FIG. 5) were prepared using the mixed materials and cured under ambient condition for 2 days followed by baking at 140 °F (60 °C) for 10 hours before testing. Die cut samples according to schematic below (sample thickness: 3.2 mm) The elongation percentage were determined according to modified ASTM D412 on an Instron 5567 with a pull rate at 50 mm/min.

**Lap shear strength measurement.** Lap joint specimens were prepared on 1.2 mm thick Al6111-T4 aluminum with bonded area (0.5 inch by 0.5 inch) in accordance with ASTM D1002-10. Prior to bonding, the aluminum substrate was cleaned with acetone. Lap joints were cured at room temperature for 2 days and 140 °F (60 °C) for 10 hours before testing.

The data in Table 4 demonstrate the good flexibility and weak bonding strength of Example 2 using silane terminated polymer-based composition.

Additionally, the Compositions of Examples 1 to 8 could be allowed to cure for 1 day under ambient condition.

**Thermal conductivity measurement.** The samples could be tested using a modified transient plane source method (conform to ASTM D7984) with a TCi thermal conductivity analyzer. The sample size could be at least 20 mm x 20 mm with a thickness of 5 mm. The weight on the sample during measurement was 500 g.

### Examples 9- 18

**Table 5. Thermal Conductivity and Shore A Hardness of Composition with Different Silane Terminated Resins (Unit: weight %)**

| **Ex No.** | **9** | **10** | **11** | **12** | **13** | **14** | **15** | **16** | **17** | **18** |
|---|---|---|---|---|---|---|---|---|---|---|
| **Resin** | | | | | | | | | | |
| S203H | 32.99 | -- | -- | -- | -- | 24.41 | -- | -- | -- | -- |
| SAX260 | -- | 32.99 | -- | -- | -- | | 24.41 | -- | -- | -- |
| SAT010 | -- | -- | 32.99 | -- | -- | -- | -- | 24.41 | -- | -- |
| SAT115 | -- | -- | -- | 32.99 | -- | -- | -- | -- | 24.41 | -- |
| HS-1 | -- | -- | -- | -- | 32.99 | -- | -- | -- | -- | 24.41 |
| PPG 1000 | -- | -- | -- | -- | -- | 24.41 | 24.41 | 24.41 | 24.41 | 24.41 |

| **Catalyst** | | | | | | | | | | |
|---|---|---|---|---|---|---|---|---|---|---|
| NEOSTANN U-220H | 0.66 | 0.66 | 0.66 | 0.66 | 0.66 | 0.98 | 0.98 | 0.98 | 0.98 | 0.98 |

| **Filler** | | | | | | | | | | |
|---|---|---|---|---|---|---|---|---|---|---|
| APYRAL 20X | 40.90 | 40.90 | 40.90 | 40.90 | 40.90 | -- | -- | -- | -- | -- |
| Nabalox NO625-31 | 25.45 | 25.45 | 25.45 | 25.45 | 25.45 | 50.20 | 50.20 | 50.20 | 50.20 | 50.20 |

| **Properties** | | | | | | | | | | |
|---|---|---|---|---|---|---|---|---|---|---|
| TC (W/m•K) | 0.96 | 0.75 | 2.1 | 2.1 | 2 | 1 | 1.17 | 1.3 | 1.1 | 1.3 |
| Shore A Hardness | 45.6 | 65.8 | 85.8 | 77.6 | 91.4 | 25 | 26 | 63.6 | 33.8 | 63 |

The compositions of Examples 9-18 were prepared using the ingredients shown in Table 3 according to the following procedure with all non-manual mixing performed using a Speedmixer DAC 600FVZ (commercially available from FlackTeck inc.). For each example, all resins were added together, and then fillers were added gradually in different portions. After addition of each portion, the mixture was mixed for 1 min at 2,350 rpm. The composition was then transferred into an aluminum weighing dish (Fisherbrand, Catalog No. 08-732-101), and allowed to cure for at least two weeks at room temperature. The cured composition was removed from the aluminum weighing dish before thermal conductivity measurements were made.

Thermal conductivity and hardness of the compositions of experimental Examples 9-18 was measured as described for Examples 1-8. Data are reported in Table 5 and illustrate the thermal conductivity of a cured composition prepared from different silane terminated polymer resins with shore A hardness from 25 to 91.4.

### Examples 19 - 24

**Table 6. Thermal conductivity, softness and electrical properties of composition with different type of pigments (Unit: volume %)**

| **Ex No.** | **19** | **20** | **21** | **22** | **23** | **24** |
|---|---|---|---|---|---|---|
| **Resin** | | | | | | |
| SAT 115 | 66.28 | 59.33 | 73.26 | 73.10 | 73.21 | 73.12 |

| **Catalyst** | | | | | | |
|---|---|---|---|---|---|---|
| NEOSTANN U-220H | 1.40 | 1.23 | 1.54 | 1.54 | 1.54 | 1.54 |

| **Dispersant** | | | | | | |
|---|---|---|---|---|---|---|
| Disperbyk 111 | 2.09 | 1.84 | 2.31 | 2.31 | 2.31 | 2.31 |

| **Filler** | | | | | | |
|---|---|---|---|---|---|---|
| Nabalox NO625-31 | -- | 37.60 | -- | -- | -- | -- |
| ZnO | 30.24 | -- | -- | -- | -- | -- |
| Cu powder | -- | -- | 4.52 | 3.26 | 2.14 | -- |
| BN - PTX 60 | -- | -- | 18.36 | 19.79 | 20.80 | 23.03 |
| Vol % of BN in Filler Mixture | -- | | 80.24 | 85.84 | 90.67 | 100 |

| **Properties** | | | | | | |
|---|---|---|---|---|---|---|
| TC (W/m•K) | 0.53 | 0.90 | 1.27 | 1.48 | 1.73 | 1.36 |
| Shore A Hardness | 47 | 30.6 | 50 | 50 | 58 | 58 |
| Volume Resistivity (X10¹⁰ Ω•m) | 2.33 | 5.36 | 0.81 | 1.43 | 1.20 | 2.41 |

The compositions of Examples 19-24 were prepared using the ingredients shown in Table 4 according to the following procedure with all non-manual mixing performed using a Speedmixer DAC 600FVZ (commercially available from FlackTeck inc.). For each example, every component was added together and mixed for 1 min at 2,350 rpm. The composition was then transferred into an aluminum weighing dish (Fisherbrand, Catalog No. 08-732-101), and allowed to cure for 2 days in an environmental chamber (50 % RH, 25 °C) followed by 1 day at 140°FF (60°C). The cured composition was removed from the aluminum weighing dish before thermal conductivity measurements were made.

For electrical properties measurement, the composition was drawn down with a 1 mm thick drawdown bar over a PTFE film secured to a steel 4"×12" panel to support the curing film from bending and warping. The film was allowed to cure for 2 days in an environmental chamber (50 % RH, 25°C) followed by 1 day at 140°F (60°C) before sample films were removed from the PTFE backer for testing.

**Volume resistivity measurement.** The test was performed according to ASTM D257 standard on a Keysight B2987A Electrometer/High Resistance Meter connected to a 16008B Resistivity Cell. The sample was slid on top of the circular measurement electrode (effective area (EAR): 28.27 cm² in surface area) and under the square metal plate that comprises the inside of the 16008B Resistivity Cell. The sample size was at least 70 mm by 70 mm which was sufficient to cover the effective area of test electrode. The thickness of the sample (STH) was measured by a caliper (Mitutoyo, Quickmike Series 293-IP-54 ABSOLUTE Digimatic Micrometer). Desired weight (1 kg) was applied onto the sample during the resistance measurement to ensure a full contact between the electrode and the sample. The applied voltage was 500 volts and volume resistance (Rv) at room temperature was recorded once the instrument stops taking resistance measurements. The volume resistivity (ρv) was obtained by ρv= Rv × EAR/STH.

The data in Table 6 demonstrated that the cured compositions of Examples 19-24 were highly thermally conductive (TC above 0.5 W/m·K), and also were electrically isolative. Example 19 demonstrated the feasibility of using semiconductor particles ZnO to achieve high thermal conductivity and good electrically isolative property. Example 21-24 demonstrated that the volume percentage of thermally conductive and electrically isolative particles can be as low as 80 vol% based on total volume of the thermally conductive filler package and still maintain good electrically isolative property (volume resistivity > 10⁹ Ω•m).

### Examples 25

**Table 7. Thermal conductivity and softness of composition using silyl protected mercaptan - epoxy curing reaction (Unit: weight %)**

| Ex. No. | 25 |
|---|---|
| **A Part** | |
| S-silyl protected PETMP | 10.67 |

| **Filler** | |
|---|---|
| Nabalox NO 625-31 | 42.67 |

| **B Part** | |
|---|---|
| BDGE | 6.67 |

| **Filler** | |
|---|---|
| Nabalox NO 625-31 | 38.67 |
| Water containing silica | 1.33 |

| **Properties** | |
|---|---|
| TC (W/m•K) | 1.76 |
| Shore A Hardness | 88.2 |

Synthesis of silyl protected TMPMP resins. 19.93 g of Trimethylolpropane tris(3-mercaptopropionate) (TMPMP, commercially available from Bruno Rock Thiochemicals), 60.0 mL of ethyl acetate, and 15.68 g of triethylamine were added to a 250-milliter, 3-necked, round bottom flask, fitted with a thermocouple and addition funnel. The reaction mixture was stirred for approximately 30 minutes, 22.61 g of triethylchlorosilane (commercially available from Gelest) was added to an addition funnel and slowly added to the reaction mixture drop-wise at room temperature over 30 minutes, making sure the temperature never went above 30°C. After complete addition of triethylchlorosilane, the reaction was allowed to stir for 2-16 hours at room temperature. After this, the reaction mixture was diluted with ethyl acetate, filtered over a coarse, fritted funnel, and stored in a moisture-proof container to provide a silyl-blocked TMPMP resins.

Water containing silica was prepared by adding distilled water to a dry filler until the mixture had a slurry-like consistency. The slurry was dried at 25°C until the wetted filler reverted back to a powder-like consistency. The slurry was dried for provide the wetted filler. The wetted silica was ground using a mortar and pestle to remove agglomerates. The wetted silica was stored in a glass container prior to use.

Experimental Example 25 was prepared according to the following procedure with all non-manual mixing performed using a Speedmixer DAC 600FVZ (commercially available from FlackTeck inc.). A part and B part was prepared separately by mixing the resins with the fillers. Equivalent mass of A part and B part were then mixed together for 1 min at 2,350 rpm. The composition was then transferred into an aluminum (Al) weighing dish (Fisherbrand, Catalog No. 08-732-101), and allowed to cure for at least 24 h at room temperature. Then, the Al dish was removed from the cured samples before tests.

Thermal conductivity and shore A hardness of the composition of Example 25 was measured as for Examples 1-8, described above. Data are reported in Table 7 and illustrate the thermal conductivity of a cured composition prepared from a silyl protected mercaptan - epoxy based chemistry.

### Examples 26

**Table 8. Thermal conductivity and softness of composition using ketimine-acetoacetate (ACAC) reaction (Unit: weight %)**

| Ex. No. | 26 |
|---|---|
| **Ketamine Part** | |
| KA-86-8600 | 8.33 |

| **ACAC part** | |
|---|---|
| K-Flex 7301 | 7.5 |

| **Dispersant** | |
|---|---|
| Disperbyk 111 | 0.83 |

| **Filler** | |
|---|---|
| Nabalox NO625-10 | 83.3 |

| **Properties** | |
|---|---|
| TC (W/m•K) | 2.06 |
| Shore D Hardness | 42 |

Experimental Example 26 was prepared according to the following procedure with all non-manual mixing performed using a Speedmixer DAC 600FVZ (commercially available from FlackTeck inc.). Ketamine part was mixed with dispersant, ACAC part and fillers for 1 min at 2,350 rpm. The composition was then transferred into an aluminum (Al) weighing dish (Fisherbrand, Catalog No. 08-732-101), and allowed to cure for at least 24 h at room temperature. Then the Al dish was removed from the cured samples before tests.

Thermal conductivity and shore A hardness of the composition of Example 26 was measured as for Examples 1-8, described above. Data are reported in Table 8 and illustrate the thermal conductivity of a cured composition prepared from a ketimine-acetoacetate based composition.

### Examples 27 and 28

**Fire protection test.** For each example, part A and part B (shown in Tables 8 and 9) were prepared separately using a Speedmixer DAC 600FVZ (commercially available from FlackTeck inc.). Equivalent mass amount of part A and part B were mixed using a Speedmixer DAC 600FVZ until the mixture appeared homogenous. The mixtures of Example 27 and 28 were trowel-applied to steel panel structures at a thickness of 7.8 mm (Example 27) and 7.9 mm (Example 28). The steel panel structure had a dimension of depth 3/16", length 7" and width 3".

After application, the coated structures were allowed to cure for 2 days in an environmental chamber (50 % RH, 25°C) followed by 1 day at 140°F (60°C), and final film thickness of coatings were measured and recorded before subjecting to fire tests.

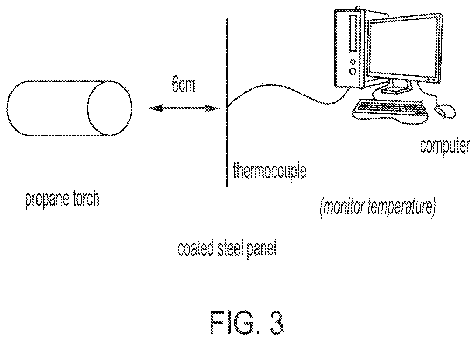

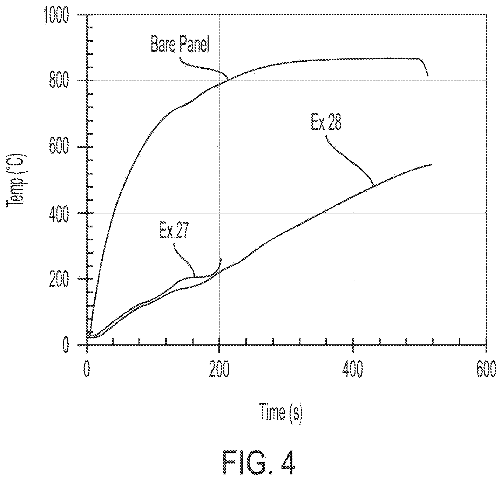

On the back of the coated panel, a thermocouple was attached at the center point to monitor the temperature through the sample. The center of the coated panel was then positioned at a distance of 4 cm from a propane torch (diameter 3.5cm, propane) with the coating in the direction of the torch. The temperature of the flame was monitored through a second thermocouple placed close to the base of the flame and found to remain stable between 900°C to 1000°C. See FIG. 3. The temperature at the back of the coated substrate and for comparison of an uncoated identical steel panel was measured for a prolonged period of time. Data are reported in FIG. 4.

**Table 9. Compositions and thermoconductivity of Ex. 27.**

| **Unit: g** | **Ex 27** |
|---|---|
| **Part A** | |
| SAT 115 | 95 |
| NEOSTANN U-220H | 2 |
| Disperbyk 111 | 3 |
| Nabalox NO625-31 | 300 |
| Vol % of Fillers | 43.50 |
| Thermal Conductivity (W/m•K) | 1.50 |

**Table 10. Compositions and thermoconductivity of Ex. 28.**

| **Unit: g** | **Ex 28** |
|---|---|
| **Part A** | |
| KA-86-8600 | 100 |
| Nabalox NO625-31 | 300 |
| APYRAL 20X | -- |

| **Part B** | |
|---|---|
| K-Flex 7301 | 100 |
| Nabalox NO625-31 | 300 |
| Vol % of Fillers | 43.50 |
| Thermal Conductivity (W/m•K) | 1.30 |

## Claims

1. A moisture-curable composition comprising:
a hydrolysable component; and
a thermally conductive filler package comprising thermally conductive, electrically insulative filler particles, the thermally conductive, electrically insulative filler particles having a thermal conductivity of at least 5 W/m·K (measured according to ASTM D7984) and a volume resistivity of at least 1 Ω·m (measured according to ASTM D257),
wherein the hydrolysable component comprises a silane-containing polymer, a silyl-containing polymer, an imine, or combinations thereof,
wherein the silane-containing polymer comprises a polythioether, a polyester, a polyether, a polyisocyanate, a poly(meth)acrylate, a polyolefin, a polyurea, a polyurethane, or combinations thereof, and
wherein the thermally conductive filler package is present in an amount of 10 % by volume percent to 98% by volume based on total volume of the composition,
wherein the hydrolysable component is substantially free of a silicone-containing species having the formula 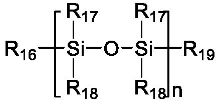
wherein **R₁₆, R₁₇** and **R₁₈** are independently selected from the group consisting of hydrogen and alkyl, aryl, cycloalkyl, alkoxy, aryloxy, hydroxyalkyl, alkoxyalkyl and hydroxyalkoxyalkyl groups containing up to six carbon atoms, and where **R₁₉** is selected from the group consisting of hydrogen and alkyl and aryl groups having up to six carbon atoms, and "n" is greater than 1, *i*.*e*., wherein said silicone-containing species is not purposefully added to the hydrolysable component and is only present as an impurity in a trace amount of less than 5% by weight based on a total weight of the hydrolysable component.

2. The moisture-curable composition of Claim 1, wherein the silane-containing polymer comprises an alkoxy group, an acyloxy group, a halogen group, an amino group, or combinations thereof; and/or
wherein the silane-containing polymer is present in an amount of 2% by volume to 90% by volume based on total volume of the composition; and/or
wherein the silyl-containing polymer comprises an alkyl group, a phenyl group, or combinations thereof; and/or
wherein the silyl-containing polymer comprises sulfur; and/or
wherein the silyl-containing polymer comprises a polythioether, a polysulfide, a thiol ester, a thiol polyacrylate, or combinations thereof; and/or
wherein the silyl-containing polymer comprises at least two groups, per molecule, having the formula: 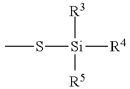
wherein R³, R⁴, and R⁵ are each independently selected from a C₁₋₆ n-alkyl group, a C₁₋₆ branched alkyl group, a substituted C₁₋₆ n-alkyl group, and a phenyl group; and/or
wherein the silyl-containing polymer has an average functionality of 2 to 6; and/or
wherein the silyl-containing polymer is present in an amount of 1.5% by volume to 89.5% by volume based on total volume of the composition; and/or
wherein the imine comprises a ketimine, an aldimine, or combinations thereof, wherein the ketimine is present as an acetoacetate containing the ketimine; and/or
wherein the imine is present in an amount of 1.5% by volume to 89.5% by volume based on total volume of the composition.

3. The moisture-curable composition of any of the preceding Claims, further comprising an accelerator, a dispersant, a reactive diluent, and/or an additive; and/or a curing agent, wherein preferably
(i) the curing agent comprises a silanol, a polyol, a polythiol, or combinations thereof, and/or
the curing agent is present in an amount of no more than 88% by volume based on total weight of the composition; or
(ii) the curing agent comprises an acrylate, an isocyanate, an epoxy, an oxidizer, a Michael acceptor, or combinations thereof; and/or
the curing agent is present in an amount of 0.5% by weight to 88.5% by weight based on total weight of the composition; or
(iii) the curing agent comprises an acetoacetate, an acrylate, an isocyanate, an epoxy, or combinations thereof; and/or the curing agent is present in an amount of 0.5% by weight to 88.5% by weight based on total weight of the composition.

4. The moisture-curable composition of any of the preceding Claims,
wherein the thermally conductive, electrically insulative filler particles are present in an amount of at least 50% by volume based on total volume of the filler package; and/or wherein the filler package further comprises (a) thermally conductive, electrically conductive filler particles having a thermal conductivity of at least 5 W/m·K (measured according to ASTM D7984) and a volume resistivity of less than 1 Ω·m (measured according to ASTM D257), the thermally conductive, electrically conductive filler particles being present in an amount of no more than 10% by volume based on total volume of the filler package and/or (b) non-thermally conductive, electrically insulative filler particles having a thermal conductivity of less than 5 W/mK (measured according to ASTM D7984) and a volume resistivity of at least 1 Ω·m (measured according to ASTM D257), the thermally conductive, electrically conductive filler particles being present in an amount of no more than 1% by volume based on total volume of the filler package; and/or
wherein the thermally conductive, electrically insulative filler particles comprise thermally stable filler particles and/or thermally unstable filler particles, i.e. a pigment, filler, or inorganic powder that, when tested using the thermal gravimetric analysis (TGA) test under air (according to ASTM E1131) has no more than 5% weight loss of the total weight of the pigment, filler, or powder occurring before 600 °C or more than 5 weight percent, respectively, wherein preferably the thermally stable filler particles are present in an amount of at least 90% by volume based on total volume of the thermally conductive, electrically insulative filler particles; and/or
wherein the thermally unstable filler particles present in an amount of no more than 10% by volume based on a total volume of the thermally conductive, electrically insulative filler particles; or
wherein the thermally unstable filler particles are present in an amount of at least 90% by volume based on total volume of the thermally conductive, electrically insulative filler particles.

5. A method of treating a substrate comprising:
contacting at least a portion of a surface of the substrate with the moisture-curable composition of any of Claims 1 to 4; and
optionally exposing the substrate to at least a slightly thermal temperature up to 250°C;
wherein the composition, in an at least partially cured state, forms a coating,
the method optionally further comprising contacting a surface of a second substrate to the composition such that the composition is between the first and the second substrate.

6. A coating formed on a surface of a substrate from the composition of any of Claims 1 to 4, wherein the coating, in an at least partially cured state, has:
(a) a thermal conductivity of at least 0.5 W/m·K (measured according to ASTM D7984);
(b) a volume resistivity of at least 10⁹ Ω•m (measured according to ASTM D257);
(c) a shore A hardness of at least 5 measured according to ASTM D2240 with a Type A durometer (Model 2000, Rex Gauge Company, Inc.) at room temperature;
(d) a lap shear strength of at least 0.5 MPa (measured according to ASTM D1002-10 using an Instron 5567 machine in tensile mode with a pull rate of 1 mm per minute); and/or
(e) an elongation of 1% to 900%, as determined according to ASTM D412 on an Instron 5567 machine in tensile mode with a pull rate at 50 mm/min.

7. The coating of claim 6, wherein the coating, in an at least partially cured state has a thermal conductivity of at least 0.5 W/m·K (measured according to ASTM D7984) and maintains a temperature of the substrate that is at least 100°C lower following exposure of the coating on the surface of the substrate to 1000°C for at a time of at least 90 seconds than a surface temperature of a bare substrate exposed to 1000°C for the time; and/or wherein the coating does not smoke upon exposure of the substrate to 1000°C for 500 seconds.

8. A substrate treated according to the method of Claim 5, and/or having the coating according to any of Claims 6 to 7 on a surface of the substrate.

9. The substrate of Claim 8, further comprising a film, a layer, or a second coating positioned between the substrate surface and the coating; and/or wherein the substrate comprises a vehicle, a part, an article, an appliance, a battery cell, a personal electronic device, a circuit board, a multi-metal article, or combinations thereof, wherein the vehicle preferably comprises an automobile or an aircraft and/or the part comprises a thermally conductive part.

10. A battery assembly comprising:
a battery cell; and
a coating, in an at least partially cured state, formed on a surface of the battery cell from the composition of any of Claims 1 to 4.

11. The battery assembly of Claim 10, wherein the coating, in an at least partially cured state, has:
(a) a thermal conductivity of at least 0.5 W/m·K (measured according to ASTM D7984);
(b) a volume resistivity of at least 10⁹ Ω•m (measured according to ASTM D257);
(c) a shore A hardness of at least 5 measured according to ASTM D2240 with a Type A durometer (Model 2000, Rex Gauge Company, Inc.) at room temperature;
(d) a lap shear strength of at least 0.5 MPa (measured according to ASTM D1002-10 using an Instron 5567 machine in tensile mode with a pull rate of 1 mm per minute); and/or
(e) an elongation of 1% to 900%, as determined according to ASTM D412 on an Instron 5567 machine in tensile mode with a pull rate at 50 mm/min;
and/or
wherein the coating, in an at least partially cured state has a thermal conductivity of at least 0.5 W/m·K (measured according to ASTM D7984) and maintains a temperature of the substrate that is at least 100°C lower following exposure of the coating on the surface of the substrate to 1000°C for at a time of at least 90 seconds than a surface temperature of a bare substrate exposed to 1000°C for the time; and/or
wherein the coating does not smoke upon exposure of the substrate to 1000°C for 500 seconds; and/or
wherein the battery assembly further comprises at least one second battery cell, a cooling fin, a cooling plate, and/or a battery box, wherein the coating preferably is positioned between the battery cell and the at least one second battery cell and/or the cooling plate.

12. A method of forming an article comprising extruding the composition of any of Claims 1 to 4, wherein the extruding comprises three-dimensional printing.

13. The article formed by the method of Claim 12.

14. A use of the composition of any of Claims 1 to 4 either for making a coating having, in an at least partially cured state, a thermal conductivity of at least 0.5 W/m·K (measured according to ASTM D7984) and maintains a temperature of the substrate that is at least 100°C lower following exposure of the coating on the surface of the substrate to 1000°C for at a time of at least 90 seconds than a surface temperature of a bare substrate exposed to 1000°C for the time; or to provide a substrate with thermal and fire protection.

15. The use of Claim 14, wherein the coating does not smoke upon exposure of the substrate to 1000°C for 500 sec.

## Patentansprüche

1. Eine durch Feuchtigkeit härtbare Zusammensetzung umfassend:
einen hydrolysierbaren Bestandteil; und
ein thermisch leitfähiges Füllstoffpaket umfassend thermisch leitfähige, elektrisch isolierende Füllstoffpartikel, wobei die thermisch leitfähigen, elektrisch isolierenden Füllstoffpartikel eine Wärmeleitfähigkeit von mindestens 5 W/m·K (gemessen gemäß ASTM D7984) und einen Durchgangswiderstand von mindestens 1 Ω·m (gemessen gemäß ASTM D257) aufweisen,
wobei der hydrolysierbare Bestandteil ein silanhaltiges Polymer, ein silylhaltiges Polymer, ein Imin oder Kombinationen derselben umfasst, wobei das silanhaltige Polymer einen Polythioether, einen Polyester, einen Polyether, ein Polyisocyanat, ein Poly(meth)acrylat, ein Polyolefin, einen Polyharnstoff, ein Polyurethan oder Kombinationen derselben umfasst, und
wobei das thermisch leitfähige Füllstoffpaket in einer Menge von 10 Vol.-% bis 98 Vol.-%, bezogen auf das Gesamtvolumen der Zusammensetzung, vorhanden ist,
wobei der hydrolysierbare Bestandteil im Wesentlichen frei von einer siliconhaltigen Spezies mit der Formel 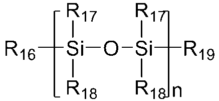 ist,
wobei **R₁₆**, **R₁₇** und **R₁₈** jeweils unabhängig aus der Gruppe bestehend aus Wasserstoff und Alkyl, Aryl, Cycloalkyl, Alkoxy, Aryloxy, Hydroxyalkyl, Alkoxyalkyl und Hydroxyalkoxyalkylgruppen enthaltend bis zu 6 Kohlenstoffatomen ausgewählt sind, und wobei **R₁₉** aus der Gruppe bestehend aus Wasserstoff und Alkyl- und Arylgruppen mit bis zu 6 Kohlenstoffatomen ausgewählt ist und "n" größer als 1 ist, das heißt, wobei die siliconhaltige Spezies nicht absichtlich zu dem hydrolysierbaren Bestandteil hinzugefügt wird und nur als Verunreinigung in Spuren von weniger als 5 Gew.-%, bezogen auf ein Gesamtgewicht des hydrolysierbaren Bestandteils, vorhanden ist.

2. Die durch Feuchtigkeit härtbare Zusammensetzung gemäß Anspruch 1, wobei das silanhaltige Polymer eine Alkoxygruppe, eine Acyloxygruppe, eine Halogengruppe, eine Aminogruppe oder Kombinationen derselben umfasst; und/oder
wobei das silanhaltige Polymer in einer Menge von 2 Vol.-% bis 90 Vol.-%, bezogen auf das Gesamtvolumen der Zusammensetzung, vorhanden ist; und/oder
wobei das silylhaltige Polymer eine Alkylgruppe, eine Phenylgruppe oder Kombinationen derselben umfasst; und/oder
wobei das silylhaltige Polymer Schwefel umfasst; und/oder
wobei das silylhaltige Polymer einen Polythioether, ein Polysulfid, einen Thiolester, ein Thiolypolyacrylat oder Kombinationen derselben umfasst; und/oder
wobei das silylhaltige Polymer mindestens zwei Gruppen mit der Formel: 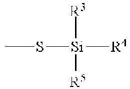 pro Molekül umfasst,
wobei **R³**, **R⁴** und **R⁵** jeweils unabhängig aus einer C₁-C₆-n-Alkylgruppe, einer C₁-C₆-verzweigten Alkylgruppe, einer substituierten C₁-C₆-n-Alkylgruppe und einer Phenylgruppe ausgewählt sind; und/oder
wobei das silylhaltige Polymer eine durchschnittliche Funktionalität von 2 bis 6 aufweist; und/oder
wobei das silylhaltige Polymer in einer Menge von 1,5 Vol.-% bis 89,5 Vol.-%, bezogen auf das Gesamtvolumen der Zusammensetzung, vorhanden ist; und/oder
wobei das Imin ein Ketimin, ein Aldimin oder Kombinationen derselben umfasst, wobei das Ketimin als ein Acetoacetat enthaltendes Ketimin vorhanden ist; und/oder
wobei das Imin in einer Menge von 1,5 Vol.-% bis 89,5 Vol.-%, bezogen auf das Gesamtvolumen der Zusammensetzung, vorhanden ist.

3. Die durch Feuchtigkeit härtbare Zusammensetzung gemäß irgendeinem der vorhergehenden Ansprüche, des Weiteren umfassend einen Beschleuniger, ein Dispergiermittel, einen Reaktivverdünner und/oder ein Additiv; und/oder ein Härtungsmittel, wobei vorzugsweise
(i) das Härtungsmittel ein Silanol, ein Polyol, ein Polythiol oder Kombinationen derselben umfasst; und/oder
das Härtungsmittel in einer Menge von nicht mehr als 88 Vol.-%, bezogen auf das Gesamtvolumen der Zusammensetzung, vorhanden ist; oder
(ii) das Härtungsmittel ein Acrylat, ein Isocyanat, ein Epoxid, ein Oxidationsmittel, einen Michael-Acceptor oder Kombinationen derselben umfasst; und/oder
das Härtungsmittel in einer Menge von 0,5 Gew.-% bis 88,5 Gew.-%, bezogen auf das Gesamtgewicht der Zusammensetzung, vorhanden ist; oder
(iii) das Härtungsmittel ein Acetoacetat, ein Acrylat, ein Isocyanat, ein Epoxid oder Kombinationen derselben umfasst; und/oder das Härtungsmittel in einer Menge von 0,5 Gew.-% bis 88,5 Gew.-%, bezogen auf das Gesamtgewicht der Zusammensetzung, vorhanden ist.

4. Die durch Feuchtigkeit härtbare Zusammensetzung gemäß irgendeinem der vorhergehenden Ansprüche, wobei die thermisch leitfähigen, elektrisch isolierenden Füllstoffpartikel in einer Menge von mindestens 50 Vol.-%, bezogen auf das Gesamtvolumen des Füllstoffpakets, vorhanden sind; und/oder
wobei das Füllstoffpaket des Weiteren (a) thermisch leitfähige, elektrisch leitfähige Füllstoffpartikel mit einer Wärmeleitfähigkeit von mindestens 5 W/m·K (gemessen gemäß ASTM D7984) und einem Durchgangswiderstand von weniger als 1 Ω·m (gemessen gemäß ASTM D257), wobei die thermisch leitfähigen, elektrisch leitfähigen Füllstoffpartikel in einer Menge von nicht mehr als 10 Vol.-%, bezogen auf das Gesamtvolumen des Füllstoffpakets, vorhanden sind und/oder (b) nicht thermisch leitfähige, elektrisch isolierende Füllstoffpartikel mit einer Wärmeleitfähigkeit von weniger als 5 W/m·K (gemessen gemäß ASTM D7984) und einem Durchgangswiderstand von mindestens 1 Ω·m (gemessen gemäß ASTM D257), wobei die thermisch leitfähigen, elektrisch leitfähigen Füllstoffpartikel in einer Menge von nicht mehr als 1 Vol.-%, bezogen auf das Gesamtvolumen des Füllstoffpakets, vorhanden sind, umfasst; und/oder
wobei die thermisch leitfähigen, elektrisch isolierenden Füllstoffpartikel thermisch stabile Füllstoffpartikel und/oder thermisch instabile Füllstoffpartikel umfassen, d. h., ein Pigment, einen Füllstoff oder ein anorganisches Pulver, das/der, wenn unter Verwendung des thermogravimetrischen Analyse(TGA)-Tests in Luft (gemäß ASTM E1131) getestet, nicht mehr als 5% Gewichtsverlust des Gesamtgewichts des Pigments, Füllstoff oder Pulvers aufweist, der unterhalb von 600 °C auftritt, bzw. mehr als 5 Gew.-%, wobei vorzugsweise die thermisch stabilen Füllstoffpartikel in einer Menge von mindestens 90 Vol.-%, bezogen auf das Gesamtvolumen der thermisch leitfähigen, elektrisch isolierenden Füllstoffpartikel, vorhanden sind; und/oder
wobei die thermisch instabilen Füllstoffpartikel in einer Menge von nicht mehr als 10 Vol.-%, bezogen auf ein Gesamtvolumen der thermisch leitfähigen, elektrisch isolierenden Füllstoffpartikel, vorhanden sind; oder wobei die thermisch instabilen Füllstoffpartikel in einer Menge von mindestens 90 Vol.-%, bezogen auf das Gesamtvolumen der thermisch leitfähigen, elektrisch isolierenden Füllstoffpartikel vorhanden sind.

5. Ein Verfahren zum Behandeln eines Substrats umfassend:
In-Kontakt-Bringen mindestens eines Teils einer Oberfläche des Substrats mit der durch Feuchtigkeit härtbaren Zusammensetzung gemäß irgendeinem der Ansprüche 1 bis 4; und
wahlweise Aussetzen des Substrats gegenüber einer leicht erhöhten Temperatur von bis zu 250 °C;
wobei die Zusammensetzung, in einem zumindest teilweise gehärteten Zustand, eine Beschichtung bildet,
wobei das Verfahren des Weiteren wahlweise ein In-Kontakt-Bringen einer Oberfläche eines zweiten Substrats mit der Zusammensetzung umfasst, so dass sich die Zusammensetzung zwischen dem ersten und dem zweiten Substrat befindet.

6. Eine Beschichtung gebildet auf einer Oberfläche eines Substrats aus der Zusammensetzung gemäß irgendeinem der Ansprüche 1 bis 4, wobei die Beschichtung, in einem zumindest teilweise gehärteten Zustand:
(a) eine Wärmeleitfähigkeit von mindestens 0,5 W/m·K (gemessen gemäß ASTM D7984);
(b) einen Durchgangswiderstand von mindestens10⁹ Ω·m (gemessen gemäß ASTM D257);
(c) eine Shore-A-Härte von mindestens 5, gemessen gemäß ASTM D2240 mit einem Typ-A-Durometer (Modell 2000, Rex Gauge Company, Inc.) bei Raumtemperatur;
(d) eine Zugscherfestigkeit von mindestens 0,5 MPa (gemessen gemäß ASTM D1002-10 unter Verwendung eines Instron 5567-Geräts im Zugmodus mit einer Zuggeschwindigkeit von 1 mm pro Minute); und/oder
(e) eine Ausdehnung von 1% bis 900%, wie gemäß ASTM D412 auf einem Instron 5567-Gerät im Zugmodus mit einer Zuggeschwindigkeit von 50 mm/min bestimmt,
aufweist.

7. Die Beschichtung gemäß Anspruch 6, wobei die Beschichtung, in einem zumindest teilweise gehärteten Zustand, eine Wärmeleitfähigkeit von mindestens 0,5 W/m·K (gemessen gemäß ASTM D7984) aufweist und nach Aussetzen der Beschichtung auf der Oberfläche des Substrats gegenüber 1.000 °C für eine Zeit von mindestens 90 Sekunden eine Temperatur des Substrats aufweist, die mindestens 100 °C geringer als eine Oberflächentemperatur des unbeschichteten Substrats, das 1.000 °C für diese Zeit ausgesetzt wird, ist; und/oder
wobei die Beschichtung bei Aussetzen des Substrats gegenüber 1.000 °C für 500 Sekunden keine Rauchentwicklung zeigt.

8. Ein Substrat behandelt gemäß dem Verfahren des Anspruchs 5 und/oder aufweisend die Beschichtung gemäß irgendeinem der Ansprüche 6 bis 7 auf einer Oberfläche des Substrats.

9. Das Substrat gemäß Anspruch 8, des Weiteren umfassend einen Film, eine Schicht oder eine zweite Beschichtung angeordnet zwischen der Substratoberfläche und der Beschichtung; und/oder
wobei das Substrat ein Fahrzeug, ein Teil, einen Gegenstand, ein Gerät, eine Batteriezelle, ein persönliches elektronisches Gerät, eine Platine, einen Mehrmetallgegenstand oder Kombinationen derselben umfasst,
wobei das Fahrzeug vorzugsweise ein Automobil oder ein Luftfahrzeug umfasst und/oder das Teil vorwiegend ein thermisch leitfähiges Teil umfasst.

10. Eine Batterieanordnung umfassend:
eine Batteriezelle; und
eine Beschichtung in einem zumindest teilweise gehärteten Zustand,
gebildet auf einer Oberfläche der Batteriezelle aus der Zusammensetzung gemäß irgendeinem der Ansprüche 1 bis 4.

11. Die Batterieanordnung gemäß Anspruch 10, wobei die Beschichtung, in einem zumindest teilweise gehärtetem Zustand:
(a) eine Wärmeleitfähigkeit von mindestens 0,5 W/m·K (gemessen gemäß ASTM D7984);
(b) einen Durchgangswiderstand von mindestens10⁹ Ω·m (gemessen gemäß ASTM D257);
(c) eine Shore-A-Härte von mindestens 5, gemessen gemäß ASTM D2240 mit einem Typ-A-Durometer (Modell 2000, Rex Gauge Company, Inc.) bei Raumtemperatur;
(d) eine Zugscherfestigkeit von mindestens 0,5 MPa (gemessen gemäß ASTM D1002-10 unter Verwendung eines Instron 5567-Geräts im Zugmodus mit einer Zuggeschwindigkeit von 1 mm pro Minute); und/oder
(e) eine Ausdehnung von 1% bis 900%, wie gemäß ASTM D412 auf einem Instron 5567-Gerät im Zugmodus mit einer Zuggeschwindigkeit von 50 mm/min bestimmt,
aufweist; und/oder
wobei die Beschichtung, in einem zumindest teilweise gehärteten Zustand, eine Wärmeleitfähigkeit von mindestens 0,5 W/m·K (gemessen gemäß ASTM D7984) aufweist und nach Aussetzen der Beschichtung auf der Oberfläche des Substrats gegenüber 1.000 °C für eine Zeit von mindestens 90 Sekunden eine Temperatur des Substrats aufweist, die mindestens 100 °C geringer als eine Oberflächentemperatur des unbeschichteten Substrats, das 1.000 °C für diese Zeit ausgesetzt wird, ist; und/oder
wobei die Beschichtung bei Aussetzen des Substrats gegenüber 1.000 °C für 500 Sekunden keine Rauchentwicklung zeigt; und/oder
wobei die Batterieanordnung des Weiteren mindestens eine zweite Batteriezelle, eine Kühllamelle, eine Kühlplatte und/oder eine Batteriebox umfasst, wobei die Beschichtung vorzugsweise zwischen der Batteriezelle und der mindestens einen zweiten Batteriezelle und/oder der Kühlplatte angeordnet ist.

12. Ein Verfahren zum Bilden eines Gegenstands umfassend Extrudieren der Zusammensetzung gemäß irgendeinem der Ansprüche 1 bis 4, wobei das Extrudieren dreidimensionales Drucken umfasst.

13. Der Gegenstand gebildet durch das Verfahren gemäß Anspruch 12.

14. Eine Verwendung der Zusammensetzung gemäß irgendeinem der Ansprüche 1 bis 4 entweder zur Herstellung einer Beschichtung mit, in einem zumindest teilweise gehärteten Zustand, einer Wärmeleitfähigkeit von mindestens 0,5 W/m·K (gemessen gemäß ASTM D7984), die nach Aussetzen der Beschichtung auf der Oberfläche des Substrats gegenüber 1.000 °C für eine Zeit von mindestens 90 Sekunden eine Temperatur des Substrats aufweist, die mindestens 100 °C geringer als die Oberflächentemperatur eines unbeschichteten Substrats, ausgesetzt gegenüber 1.000 °C für diese Zeit, ist; oder um ein Substrat mit Wärme- und Brandschutz auszustatten.

15. Die Verwendung gemäß Anspruch 14, wobei die Beschichtung bei Aussetzen des Substrats gegenüber 1.000 °C für 500 Sekunden keine Rauchentwicklung zeigt.

## Revendications

1. Composition durcissable à l'humidité, comprenant :
- un composant hydrolysable,
- et un ensemble de charges thermo-conducteur comprenant des particules de charge thermo-conductrices et électro-isolantes, lesquelles particules de charge thermo-conductrices et électro-isolantes présentent une conductivité thermique valant au moins 5 W/m.K (mesurée selon la norme ASTM D7984) et une résistivité volumique valant au moins 1 Ω.m (mesurée selon la norme ASTM D257),
dans laquelle le composant hydrolysable comprend un polymère comportant un silane, un polymère comportant un groupe silyle, une imine, ou une combinaison de tels composés,
étant entendu que le polymère comportant un silane englobe un polythioéther, un polyester, un polyéther, un polyisocyanate, un polyacrylate, un polyméthacrylate, une polyoléfine, une polyurée, un polyuréthane, et des combinaisons de tels polymères,
et dans laquelle l'ensemble de charges thermo-conducteur se trouve présent en une proportion de 10 % à 98 %, en volume rapporté au volume total de la composition,
étant entendu que le composant hydrolysable ne contient pratiquement pas d'espèces contenant de la silicone et présentant la formule 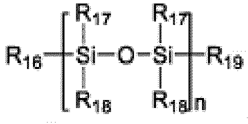
dans laquelle R₁₆, R₁₇ et R₁₈ représentent des entités choisies, indépendamment, dans l'ensemble formé par l'atome d'hydrogène et les groupes alkyle, aryle, cycloalkyle, alcoxy, aryloxy, hydroxy-alkyle, alcoxy-alkyle et hydroxy-alcoxy-alkyle comportant jusqu'à six atomes de carbone, R₁₉ représente une entité choisie dans l'ensemble formé par l'atome d'hydrogène et les groupes alkyle et aryle comportant jusqu'à six atomes de carbone, et l'indice n vaut plus de 1,
c'est-à-dire que lesdites espèces contenant de la silicone ne sont pas ajoutées délibérément au composant hydrolysable et ne s'y trouvent présentes qu'en tant qu'impuretés, en traces représentant moins de 5 %, en poids rapporté au poids total du composant hydrolysable.

2. Composition durcissable à l'humidité, conforme à la revendication 1,
dans laquelle le polymère comportant un silane comporte un groupe alcoxy, un groupe acyloxy, un groupe halogéno, un groupe amino, ou une combinaison de tels groupes,
et/ou dans laquelle le polymère comportant un silane se trouve présent en une proportion de 2 % à 90 %, en volume rapporté au volume total de la composition,
et/ou dans laquelle le polymère comportant un groupe silyle comporte un groupe alkyle, un groupe phényle, ou une combinaison de tels groupes,
et/ou dans laquelle le polymère comportant un groupe silyle comprend du soufre,
et/ou dans laquelle le polymère comportant un groupe silyle comprend un polythioéther, un polysulfure, un thiol-ester, un thiol-polyacrylate, ou une combinaison de tels composés,
et/ou dans laquelle le polymère comportant un groupe silyle comprend, par molécule, au moins deux groupes de formule 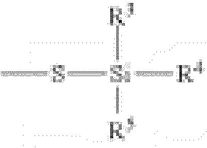
dans laquelle R³, R⁴ et R⁵ représentent des entités choisies, indépendamment, parmi un groupe n-alkyle en C₁₋₆, un groupe alkyle ramifié en C₁₋₆, un groupe n-alkyle en C₁₋₆ à substituant(s), et un groupe phényle,
et/ou dans laquelle le polymère comportant un groupe silyle présente une fonctionnalité moyenne valant de 2 à 6,
et/ou dans laquelle le polymère comportant un groupe silyle se trouve présent en une proportion de 1,5 % à 89,5 %, en volume rapporté au volume total de la composition,
et/ou dans laquelle l'imine comprend une cétimine, une aldimine, ou une combinaison de telles imines, étant entendu que la cétimine est présente sous forme d'un acétoacétate comportant la cétimine,
et/ou dans laquelle l'imine se trouve présente en une proportion de 1,5 % à 89,5 %, en volume rapporté au volume total de la composition.

3. Composition durcissable à l'humidité, conforme à l'une des revendications précédentes, qui comprend en outre un accélérateur, un dispersant, un diluant réactif, et/ou un adjuvant, et/ou un agent durcisseur, étant entendu que, de préférence,
i) l'agent durcisseur comprend un silanol, un polyol, un polythiol, ou une combinaison de tels composés, et/ou cet agent durcisseur se trouve présent en une proportion ne dépassant pas 88 %, en volume rapporté au poids total de la composition,
ii) ou l'agent durcisseur comprend un acrylate, un isocyanate, une époxy, un oxydant, un accepteur de Michael, ou une combinaison de tels composés, et/ou cet agent durcisseur se trouve présent en une proportion de 0,5 % à 88,5 %, en poids rapporté au poids total de la composition,
ii) ou l'agent durcisseur comprend un acétoacétate, un acrylate, un isocyanate, une époxy, ou une combinaison de tels composés, et/ou cet agent durcisseur se trouve présent en une proportion de 0,5 % à 88,5 %, en poids rapporté au poids total de la composition.

4. Composition durcissable à l'humidité, conforme à l'une des revendications précédentes, dans laquelle les particules de charge thermo-conductrices et électro-isolantes se trouvent présentes en une proportion d'au moins 50 %, en volume rapporté au volume total de l'ensemble de charges, et/ou dans laquelle l'ensemble de charges comprend en outre
a) des particules de charge thermo-conductrices et électro-conductrices, qui présentent une conductivité thermique valant au moins 5 W/m.K (mesurée selon la norme ASTM D7984) et une résistivité volumique inférieure à 1 Ω.m (mesurée selon la norme ASTM D257), lesquelles particules de charge thermo-conductrices et électro-conductrices se trouvent présentes en une proportion d'au plus 10 %, en volume rapporté au volume total de l'ensemble de charges,
b) et/ou des particules de charge non thermo-conductrices et électro-isolantes, qui présentent une conductivité thermique valant moins de 5 W/m.K (mesurée selon la norme ASTM D7984) et une résistivité volumique valant au moins 1 Ω.m (mesurée selon la norme ASTM D257), lesquelles particules de charge thermo-conductrices et électro-conductrices se trouvent présentes en une proportion d'au plus 1 %, en volume rapporté au volume total de l'ensemble de charges,
et/ou dans laquelle les particules de charge thermo-conductrices et électro-isolantes comprennent des particules de charge thermostable et des particules de charge thermo-instable, c'est-à-dire un pigment, une charge ou une poudre inorganique qui, lors d'un test d'analyse thermo-gravimétrique (ATG) sous atmosphère d'air (selon la norme ASTM E1131), ne perd pas plus de 5 % ou perd plus de 5 % respectivement, de son poids total de pigment, de charge ou de poudre, étant entendu que, de préférence, les particules de charge thermostable se trouvent présentes en une proportion d'au moins 90 %, en volume rapporté au volume total des particules de charge thermo-conductrices et électro-isolantes, et/ou les particules de charge thermo-instable se trouvent présentes en une proportion d'au plus 10 %, en volume rapporté au volume total des particules de charge thermo-conductrices et électro-isolantes,
ou dans laquelle les particules de charge thermo-instable se trouvent présentes en une proportion d'au moins 90 %, en volume rapporté au volume total des particules de charge thermo-conductrices et électro-isolantes.

5. Procédé de traitement d'un substrat, comportant :
- le fait de mettre au moins une partie d'une surface du substrat en contact avec une composition durcissable à l'humidité, conforme à l'une des revendications 1 à 4,
- et en option, le fait d'exposer le substrat à au moins une chaleur modérée, à une température valant jusqu'à 250 °C,
étant entendu que la composition, dans un état au moins partiellement durci, forme un revêtement,
lequel procédé comporte en outre, en option, le fait d'amener une surface d'un deuxième substrat au contact de la composition, de telle sorte que la composition se trouve placée entre le premier substrat et le deuxième substrat.

6. Revêtement formé, sur une surface d'un substrat, à partir d'une composition conforme à l'une des revendications 1 à 4, lequel revêtement, dans un état au moins partiellement durci, présente :
a) une conductivité thermique valant au moins 0,5 W/m.K (mesurée selon la norme ASTM D7984),
b) une résistivité volumique valant au moins 10⁹ Ω.m (mesurée selon la norme ASTM D257),
c) une dureté Shore A d'au moins 5, mesurée selon la norme ASTM D2240, au moyen d'un duromètre Type A (modèle 2000 de Rex Gauge Company, Inc.) à température ambiante,
d) une résistance au cisaillement en recouvrement d'au moins 0,5 MPa (mesurée selon la norme ASTM D1002-10 au moyen d'une machine Instron 5567 en mode traction, à une vitesse de traction de 1 mm par minute),
e) et/ou un allongement de 1 % à 900 %, déterminé selon la norme ASTM D412 à l'aide d'une machine Instron 5567 en mode traction, à une vitesse de traction de 50 mm/ min.

7. Revêtement conforme à la revendication 6, lequel revêtement, dans un état au moins partiellement durci, présente une conductivité thermique valant au moins 0,5 W/m.K (mesurée selon la norme ASTM D7984) et maintient le substrat, après exposition du revêtement de surface du substrat à 1000 °C durant au moins 90 secondes, à une température qui est inférieure d'au moins 100 °C à la température de surface d'un substrat nu exposé à 1000 °C pendant la même durée, et/ou lequel revêtement n'émet pas de fumées après exposition du substrat à 1000 °C durant 500 secondes.

8. Substrat traité selon un procédé conforme à la revendication 5, et/ou doté, sur une surface du substrat, d'un revêtement conforme à l'une des revendications 6 et 7.

9. Substrat conforme à la revendication 8, comportant en outre un film, une couche ou un deuxième revêtement placé entre la surface du substrat et le revêtement,
et/ou lequel substrat englobe un véhicule, une pièce, un article, un appareil, un élément de batterie, un dispositif électronique personnel, une carte à circuit imprimé, un article multi-métallique, ou des combinaisons de ceux-ci, étant entendu que de préférence, le véhicule englobe une automobile ou un aéronef et/ou que la pièce englobe une pièce thermo-conductrice.

10. Ensemble de batterie, comprenant :
un élément de batterie,
et un revêtement, dans un état au moins partiellement durci, formé sur une surface de l'élément de batterie à partir d'une composition conforme à l'une des revendications 1 à 4.

11. Ensemble de batterie conforme à la revendication 10, dans lequel le revêtement, dans un état au moins partiellement durci, présente :
a) une conductivité thermique valant au moins 0,5 W/m.K (mesurée selon la norme ASTM D7984),
b) une résistivité volumique valant au moins 10⁹ Ω.m (mesurée selon la norme ASTM D257),
c) une dureté Shore A d'au moins 5, mesurée selon la norme ASTM D2240, au moyen d'un duromètre Type A (modèle 2000 de Rex Gauge Company, Inc.) à température ambiante,
d) une résistance au cisaillement en recouvrement d'au moins 0,5 MPa (mesurée selon la norme ASTM D1002-10 au moyen d'une machine Instron 5567 en mode traction, à une vitesse de traction de 1 mm par minute),
e) et/ou un allongement de 1 % à 900 %, déterminé selon la norme ASTM D412 à l'aide d'une machine Instron 5567 en mode traction, à une vitesse de traction de 50 mm/ min ;
et/ou dans lequel le revêtement, dans un état au moins partiellement durci, présente une conductivité thermique valant au moins 0,5 W/m.K (mesurée selon la norme ASTM D7984) et maintient le substrat, après exposition du revêtement de surface du substrat à 1000 °C durant au moins 90 secondes, à une température qui est inférieure d'au moins 100 °C à la température de surface d'un substrat nu exposé à 1000 °C pendant la même durée,
et/ou dans lequel le revêtement n'émet pas de fumées après exposition du substrat à 1000 °C durant 500 secondes,
et/ou lequel ensemble de batterie comporte en outre au moins un deuxième élément de batterie, une ailette de refroidissement, une plaque de refroidissement, et/ou un boîtier de batterie, étant entendu que le revêtement est de préférence placé entre l'élément de batterie et le deuxième élément de batterie au nombre d'au moins un et/ou la plaque de refroidissement.

12. Procédé de formation d'un article, comportant l'extrusion d'une composition conforme à l'une des revendications 1 à 4, laquelle extrusion englobe l'impression en trois dimensions.

13. Article formé selon un procédé conforme à la revendication 12.

14. Utilisation d'une composition conforme à l'une des revendications 1 à 4, soit pour faire un revêtement qui, dans un état au moins partiellement durci, présente une conductivité thermique valant au moins 0,5 W/m.K (mesurée selon la norme ASTM D7984) et maintient le substrat, après exposition du revêtement de surface du substrat à 1000 °C durant au moins 90 secondes, à une température qui est inférieure d'au moins 100 °C à la température de surface d'un substrat nu exposé à 1000 °C pendant la même durée, soit pour fournir à un substrat une protection contre la chaleur et l'incendie.

15. Utilisation conforme à la revendication 14, qui fait que le revêtement n'émet pas de fumées après exposition du substrat à 1000 °C durant 500 secondes.
